# EUROPEAN PATENT APPLICATION

(11) **EP 4 286 212 A1**
(43) Date of publication of application: **06.12.2023**
(21) Application number: 22746180.3
(22) Date of filing: 24.01.2022
(51) Int. Cl.: B60L 55/00, B60L 53/24, B60L 53/16, B60L 53/66, H02M 7/08, H02M 3/00

(54) **CHARGING LOCATION SELECTABLE-TYPE ELECTRIC VEHICLE CHARGING METHOD AND SYSTEM**

(30) Priority: 26.01.2021 KR 20210010613; 20.08.2021 KR 20210110407; 23.09.2021 KR 20210125617
(71) Applicant: Fec Co., Ltd., Gyeongsan-si, Gyeongsangbuk-do 38498 (KR)
(72) Inventor: LEE, Sang Hwa, Seoul 06299 (KR); LEE, Yoon Won, Seoul 06299 (KR); LEE, Kyung Jin, Seongnam-si Gyeonggi-do 13611 (KR)
(74) Representative: Samson & Partner Patentanwälte mbB
(86) International application number: PCT/KR2022/001219
(87) International publication number: WO 2022/164153

(57) **Abstract**

An electric vehicle charging system according to an aspect of the present invention may comprise a transformer, an alternating current/direct current (AC/DC) converting system, a requested power operation unit, and an electric wire network in a parking lot, and may convert AC power to DC power so as to provide charging power to an electric vehicle, with less loss of power compared to that of the AC power, via the electric wire network in the parking lot. In addition, it is possible to install one or more of the transformer, the AC/DC converting system, and the requested power operation unit in a space, which is separated from a charging adapter (5015) of a parking area, and to provide a parking space having a larger number of charging adapters (5015) than the number of DC/DC converters.

## Description

### Technical Field

The present disclosure relates to a charging system for an electric vehicle, which is capable of fixed charging or variable charging by using DC power and, more particularly, to a technology for charging an electric vehicle by converting AC power into DC power and providing a location requested by a charging wisher with a charging speed, etc. that is requested by the charging wisher through a multi-connection switch and a power grid.

### Background Art

Conventionally, when an electric vehicle is charged, AC power is connected up to a charger. The charger supplies the electric vehicle with AC power in the case of slow charging, and supplies the electric vehicle with DC power by converting AC power into DC power in the case of quick charging.

Accordingly, since kiosk must be installed around a parking space in order to charge the electric vehicle, a separate kiosk installation space is required and the electric vehicle can be charged at a location where kiosk has been installed.

If a parking space dedicated to electric vehicles is increased for the charging of many electric vehicles, there are problems in that an installation cost for kiosk is increased and a wide space is required.

Furthermore, the electric vehicle needs to be immediately moved to another place after being charged. Furthermore, a vehicle to be charged, which waits its turn, has to enter a charging location and to be prepared for its charging. In most of problems in charging, a competition and inefficiency occur in such a process.

### DISCLOSURE

### Technical Problem

The present disclosure has been proposed in order to solve the problems of a conventional technology.

Specifically, the present disclosure is to construct a charging system by using a transformer, an AC/DC converting system, a request power manipulation unit, a relay connection power grid, and an intra-parking lot power grid, and to supply charging power to an electric vehicle via a power grid including a multi-connection switch by installing the transformer, the AC/DC converting system, and the request power manipulation unit inside and outside a building and converting AC power into DC power.

Furthermore, an object of the present disclosure is that the request power manipulation unit selects and transmits power approximate to a charging speed, based on a charging speed requested by a charging wisher, or provides the power by changing or combining the power as corresponding power, and provides charging power so that charging is possible at any place of a parking space where an adapter has been installed via a power grid including a multi-connection switch.

One of other important characteristics of the present disclosure is that in the present disclosure, apparatuses including a transformer 1000, an allowed power quantity management apparatus 1100, an AC/DC converting system 2000, and a request power manipulation unit 3000 may be installed in a separate space at a front end thereof separately of a charging adapter 5015 in a parking zone with a power grid including multiple multi-connection switches interposed therebetween.

Furthermore, there is an important characteristic in a charging method by DC by collectively converting AC into DC in all of separate zones different from a space where at least the charging adapter 5015 is present.

Furthermore, since the number of chargeable parking zones in which adapters have been installed is much greater than a small number of simultaneously charging vehicles, a concept is sought in which any D/D can be connected with an adapter in any parking zone is possible without being limited to a specific parking zone. Such an aspect may be significantly limited according to circumstances, but the present disclosure seeks such a concept in principle.

In other words, one core characteristic of the present disclosure is a parking space having the charging adapter 5015 the number of which is greater than the number of simultaneously chargeable electric vehicles. Preferably, almost all of parking spaces are designed to have the charging adapter 5015 or designed to have the charging adapter 5015 in the future. For example, the number of simultaneously chargeable electric vehicles may be 60, but the number of parking spaces including the charging adapter 5015 may be 500. In such a case, an internal combustion engine vehicle or an electric vehicle can be arbitrarily parked at the parking space regardless of the internal combustion engine vehicle or the electric vehicle. The electric vehicle does not need to be moved from the parking space although the electric vehicle has been fully charged.

Technical objects to be achieved by the present disclosure are not limited to the aforementioned objects, and the other objects not described above may be evidently understood from the following description by a person having ordinary knowledge in the art.

### Technical Solution

An electric vehicle charging system according to the present disclosure includes a control unit for managing overall systems; an AC/DC converting system for primarily converting power input from a transformer into DC power; and a DC power delivery system for stabilizing power and determining a charging speed by receiving the DC power and supplying charging power up to an electric vehicle.

The control unit includes a main control apparatus that plays a role to manage and control overall systems and internal communication and transmitting notification to a terminal of a charging wisher or receiving information from the terminal by controlling a customer reception system.

The control unit includes an allowed power quantity management apparatus for consistently monitoring and controlling power used for charging so that the power does not exceed acceptable power in the transformer.

The control unit includes AC/DC converting system management for consistently monitoring and controlling the AC/DC converting system so that acceptable power that is determined when the AC power supplied by the transformer is converted into the DC power is not exceeded.

The control unit includes request power manipulation unit management for generally controlling a current fixed type DC/DC converter or a current variable DC/DC converter in order to provide a charging speed requested by a charging wisher and performing control, such as varying or combining the current fixed type DC/DC converter or the current variable DC/DC converter based on the charging speed.

The control unit includes charging electrical wire connection management for forming a charging path for a charging speed from a request power manipulation unit to a location where the electric vehicle is present.

The control unit includes a customer reception system for the management of member information of a charging wisher, charge information for each external time zone/each season, a degree of diagnosis of a charging target vehicle, communication with a charging wisher, etc.

The control unit includes charging target vehicle charging and management for managing information, such as a battery state, the amount of remaining battery power, and vehicle information of a charging target vehicle, which are received from the charging target vehicle, and information, such as whether a vehicle is a vehicle which may be charged in a corresponding charging system.

The DC power delivery system includes a connection power grid for forming a charging path with the request power manipulation unit for providing a charging speed of a charging wisher.

The request power manipulation unit selectively includes a current fixed type DC/DC converter or a current variable DC/DC converter for providing a charging speed, an open circuit connection switch for providing or blocking requested power, a multi-connection switch for combining requested power, and a requested power provision electrical wire for supplying a charging speed, if necessary.

The connection power grid may include a relay connection power grid that forms a path in order to supply a charging speed supplied by the request power manipulation unit to an intra-parking lot power grid.

The connection power grid may include only an intra-parking lot power grid including multiple multi-connection switches without a relay connection power grid.

The connection power grid includes a multi-connection switch and electrical wires for forming a path between the request power manipulation unit and the intra-parking lot power grid.

The intra-parking lot power grid includes a multi-connection switch, a power grid, and a charging adapter for forming a path up to an electric vehicle within a parking lot.

A charging system for an electric vehicle according to an embodiment of the present disclosure includes an AC/DC converting system for converting AC power into DC power; a request power manipulation unit including a DC/DC converter connected to an output stage of the AC/DC converting system and an open circuit connection switch connected to an output stage of each DC/DC converter; charging adapters installed in at least some of parking spaces of a parking lot; a power grid capable of connecting the DC/DC converter and the charging adapters between the DC/DC converter and the charging adapters; and a multi-connection switch capable of selectively forming a connection path by connecting some electric wires of three or more electric wires, wherein the three or more electric wires of the power grid are connected to the power grid. The DC/DC converter, the power grid, and a charging adapter connected to an electric vehicle, among the charging adapters, are connected to the selectively formed connection path according to an operation of the multi-connection switch.

The number of charging adapters may be greater than the number of DC/DC converters.

The request power manipulation unit may be separately provided in each AC/DC converting system.

The request power manipulation unit is included in a plural number. A plurality of request power manipulation units may mutually deliver power.

The power grid may include a plurality of separated power grids.

The request power manipulation unit may be included in a plural number. Charging areas corresponding to the request power manipulation units, respectively, may be separated from each other.

The request power manipulation unit may be included in a plural number. Some of charging areas corresponding to the plurality of request power manipulation units may be overlapped.

Multiple edges at which contacts to which three or more electric wires are selectively connected may be formed have been formed in the power grid. The multi-connection switch may be disposed at an edge selected among the edges.

A form of the power grid may be a polygon, a polyhedron, or a form in which a complex thereof is connected.

A main control apparatus is further included. The main control apparatus may include one or more functions, among charging electrical wire connection management functions including a permitted electricity quantity management apparatus, AC/DC converting system management, current fixed type or variable type DC/DC converter management, and intra-parking lot power grid management.

The permitted electricity quantity management apparatus may monitor an AC voltage and AC current in a power input line of the AC/DC converting system, and may monitor a DC voltage of a charging adapter that is connected to the electric vehicle.

A charging system for an electric vehicle according to an embodiment of the present disclosure may include a main control apparatus, including a billing system, a member information management system, and charging target vehicle charging and information management functions.

The charging adapters may be detachable from a socket of the power grid.

The number of DC/DC converters may correspond to a maximum number of simultaneously chargeable electric vehicles.

Each of the charging adapters may be disposed between two multi-connection switches.

A plurality of charging adapters may be disposed between two multi-connection switches.

A method of charging location-selective electric vehicle charging method according to an embodiment of the present disclosure includes steps of connecting an electric vehicle to any one charging adapter among charging adapters installed in all of parking spaces; determining, by a charging location-selective charging system for an electric vehicle, a DC/DC converter of corresponding charging power; forming a charging electrical wire of a power grid up to an electrical wire that provides corresponding requested power of a corresponding DC/DC converter and a corresponding charging adapter; connecting a corresponding open circuit connection switch of the corresponding DC/DC converter; charging the corresponding electric vehicle; terminating the charging of the corresponding electric vehicle; and disconnecting the corresponding open circuit connection switch of the corresponding DC/DC converter. A multi-connection switch connected to three or more electric wires of the power grid and capable of selectively forming a connection path by connecting some electric wires of the three or more electric wires is installed in the power grid. Accordingly, the DC/DC converter, the power grid, and a charging adapter connected to the electric vehicle, among the charging adapters, may be connected to the selectively formed connection path according to an operation of the multi-connection switch.

### Advantageous Effects

One of important characteristics of the present disclosure is that the charging system including the transformer 1000, the allowed power quantity management apparatus 1100, the AC/DC converting system 2000, and the request power manipulation unit 3000 in the present disclosure may be installed in a separate space at a front end thereof apart from the charging adapter 5015 in a parking zone.

Furthermore, there is an important characteristic in a charging method by DC by collectively converting AC into DC in all of separate zones different from a space in which at least the charging adapter 5015 is present.

Furthermore, a concept in which any D/D can be connected to an adapter in any parking zone without being dedicated to a specific parking space because the number of chargeable parking zones is much greater than a small number of chargers or D/Ds is sought. Such a concept may be significantly limited according to circumstances, but in principle, the present disclosure seeks such a concept.

In other words, another core characteristic of the present disclosure is that a parking space includes the charging adapter 5015 the number of which is much greater than the number of simultaneously chargeable electric vehicles. Preferably, almost all of parking spaces are designed to have the charging adapter 5015 or designed to have the charging adapter 5015 in the future. For example, the number of simultaneously chargeable electric vehicles may be 60 or the number of parking spaces including the charging adapter 5015 may be 500. In such a case, an internal combustion engine vehicle or an electric vehicle can be arbitrarily parked at the parking space regardless of the internal combustion engine vehicle or the electric vehicle. The electric vehicle does not need to be moved from the parking space although the electric vehicle has been fully charged.

As described above, the charging system for an electric vehicle according to the present disclosure includes the transformer, the control unit managing overall systems, the AC/DC converting system primarily converting unstable AC power received from the transformer into DC power, and the DC power delivery system for providing a charging speed requested by a charging wisher.

Furthermore, there may be an effect in that various charging speeds are provided in a way that the request power manipulation unit varies an output current if the current variable DC/DC converter is selectively used, or a current fixed type DC/DC converter similar to a charging speed provides the charging speed through a combination of an output or the current fixed type DC/DC converter, based on the charging speed requested by a charging wisher.

Furthermore, there is an advantage in that slow charging to quick charging using DC power can be provided depending on a construction of the DC/DC converter because various charging speeds can be provided.

Furthermore, since DC power is used as main use power, there are effects in that efficiency is high because a power loss is small compared to a case in which AC power is used and a cost can be reduced by using a thin electrical wire because a current that flows into the electrical wire is low compared to the same power.

Furthermore, there are effects in that a space necessary for charging can be reduced and a cost can be reduced compared to the installation of kiosk because charging is possible in any space in which an intra-parking lot power grid has been formed without the installation of a separate large kiosk as in a conventional technology.

Furthermore, there is an advantage in that an internal combustion engine vehicle can be charged in all parking spaces in which an intra-parking lot power grid has been installed without moving the internal combustion engine vehicle that has been parked, in addition to charging only around kiosk as in a conventional technology.

### Brief Description of Drawings

FIG. 1 is a diagram illustrating a general block diagram of a system according to an embodiment of the present disclosure.
FIG. 2 is a diagram illustrating a detailed system construction diagram (a) illustrating a detailed construction of a system in which an AC/DC converting system and a request power manipulation unit according to an embodiment of the present disclosure are independently constructed, the AC/DC converting system and the request power manipulation unit are disposed outside the vicinity of a parking lot, the request power manipulation unit and an intra-parking lot power grid are connected by a relay connection power grid.
FIG. 3 is a diagram illustrating a general block diagram of a system according to an embodiment of the present disclosure.
FIG. 4A is a diagram illustrating a detailed system construction diagram (a) illustrating a detailed construction of a system in which the AC/DC converting system and the request power manipulation unit according to an embodiment of the present disclosure are independently constructed and the AC/DC converting system and the request power manipulation unit are present outside the vicinity of a parking lot.
FIG. 4B is a diagram illustrating a detailed system construction diagram (b) illustrating a detailed construction of a system in which the AC/DC converting system and the request power manipulation unit according to an embodiment of the present disclosure are independently constructed, several request power manipulation units are constructed in one AC/DC converting system, each request power manipulation unit can deliver power, and the AC/DC converting system and the request power manipulation unit are present outside the vicinity of a parking lot.
FIG. 4C is a diagram illustrating a detailed system construction diagram (c) illustrating a detailed construction of a system in which the AC/DC converting system and the request power manipulation unit according to an embodiment of the present disclosure are independently constructed, several request power manipulation units are separately constructed in one AC/DC converting system, and the AC/DC converting system and the request power manipulation unit are present outside the vicinity of a parking lot.
FIG. 4D is another embodiment of the present disclosure, and is a diagram illustrating a detailed system construction diagram (d) illustrating a detailed construction of a system in which the AC/DC converting system and the request power manipulation unit according to an embodiment are independently constructed, the AC/DC converting system, the request power manipulation unit, and the relay connection power grid are present outside the vicinity of a parking lot, and the intra-parking lot power grid is constructed without a separate multi-connection switch.
FIG. 5A is a diagram illustrating a multi-connection switch a, that is, an example of an implementation of the multi-connection switch in which the number of switches is greater than the number of paths according to an embodiment of the present disclosure.
FIG. 5B is a diagram illustrating a multi-connection switch b, that is, an example of a multi-connection switch structure in which the number of switches and the number of paths are the same according to another embodiment of the present disclosure.
FIG. 5C is a diagram illustrating a multi-connection switch c, that is, an example of the multi-connection switch structure in which the number of switches and the number of paths are the same according to still another embodiment of the present disclosure.
FIG. 5D illustrates the inside of a multi-connection switch d that is constructed by using a copper bus bar according to still another embodiment of the present disclosure.
FIG. 6A is a diagram illustrating a charging adapter a if one charging adapter is disposed in one parking surface according to an embodiment of the present disclosure.
FIG. 6B is a diagram illustrating a charging adapter b if one charging adapter is disposed in several parking surfaces according to an embodiment of the present disclosure.
FIG. 6C is a diagram illustrating a charging adapter c if several charging adapters are connected between two multi-connection switches according to an embodiment of the present disclosure.
FIG. 7A is one of detailed embodiments of the present disclosure, and is a diagram illustrating an example in which two request power manipulation units and eight chargers have been independently constructed in thirty-two parking spaces.
FIG. 7B is a diagram illustrating an example of a construction in which multi-connection switches disposed in adjacent parking surfaces in the parking space according to the embodiment of FIG. 7A are bound by one line and managed in a multi-connection switch line unit.
FIG. 7C is a diagram illustrating an example of a construction in which adapters or adapter storage boxes disposed in adjacent parking surfaces in the parking space according to the embodiment of FIG. 7A are bound by one line and managed in an adapter or adapter storage box line unit.
FIG. 8A is a diagram illustrating an example in which the request power manipulation units are two in number and independently constructed in a parking space in which an electric vehicle, an internal combustion engine vehicle, etc. can be freely parked as another embodiment of the present disclosure.
FIG. 8B is a diagram illustrating an example of a construction in which multi-connection switches that are disposed in adjacent parking surfaces in a parking space in which an electric vehicle, an internal combustion engine vehicle, etc. can be freely parked in relation to FIG. 8A of the present disclosure are bound by one line and managed in a multi-connection switch line unit.
FIG. 8C is a diagram illustrating an example of a construction in which adapters or adapter storage boxes that are disposed in adjacent parking surfaces in a parking space in which an electric vehicle, an internal combustion engine vehicle, etc. can be freely parked in relation to FIG. 8A of the present disclosure may be bound by one line and managed in an adapter or the adapter storage box line unit.
FIG. 9A is a diagram illustrating a flowchart (a) of an embodiment in a method of compensating for a voltage drop according to an embodiment of the present disclosure.
FIG. 9B is a diagram illustrating a flowchart (b) of another embodiment in a method of compensating for a voltage drop according to another embodiment of the present disclosure.
FIG. 9C is a diagram illustrating a flowchart (c) of another embodiment in a method of compensating for a voltage drop according to still another embodiment of the present disclosure.
FIG. 9D is a diagram illustrating a flowchart (d) of another embodiment in a method of compensating for a voltage drop according to still another embodiment of the present disclosure.
FIG. 10A is a diagram illustrating an AC/DC converting system a if one AC/DC converting system is constructed according to an embodiment of the present disclosure.
FIG. 10B is a diagram illustrating an AC/DC converting system b if several AC/DC converting systems are constructed according to an embodiment of the present disclosure.
FIG. 11A is a diagram illustrating a request power manipulation unit a if one request power manipulation unit is constructed in one AC/DC converting system according to an embodiment of the present disclosure.
FIG. 11B is a diagram illustrating a request power manipulation unit b if several request power manipulation units are constructed in one AC/DC converting system according to an embodiment of the present disclosure.
FIG. 11C is a diagram illustrating a request power manipulation unit c if the request power manipulation unit is constructed in each of several AC/DC converting systems according to an embodiment of the present disclosure.
FIG. 11D is a diagram illustrating a request power manipulation unit b if several request power manipulation units are constructed and the request power manipulation units can mutually deliver marginal power according to an embodiment of the present disclosure.
FIG. 11E is a diagram illustrating a request power manipulation unit f in which an AC/DC converting system according to an embodiment of the present disclosure is included in the request power manipulation unit and constructed as one.
FIG. 12A is a diagram illustrating a construction a of a DC/DC converter, that is, a method of determining the number of current fixed type DC/DC converters based on the number of simultaneously chargeable electric vehicles and determining a charging speed without any change based on production power of the current fixed type DC/DC converters according to an embodiment of the present disclosure.

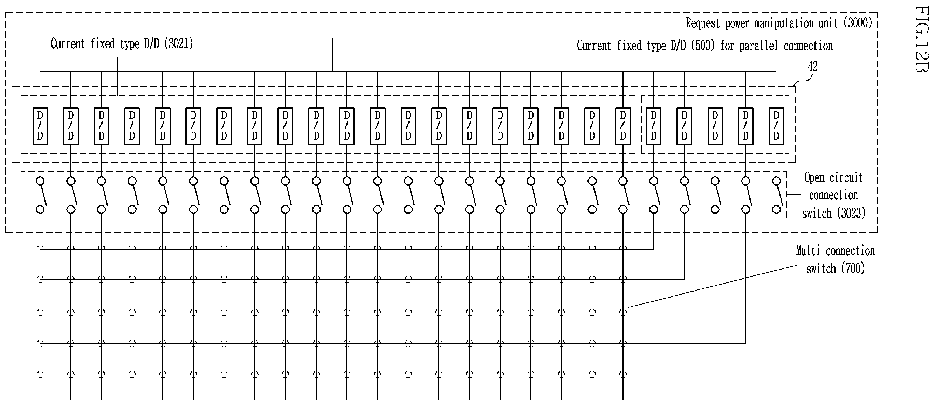

FIG. 12B is a diagram illustrating a construction b of a DC/DC converter, that is, a method of determining the number of current fixed type DC/DC converters based on the number of simultaneously chargeable electric vehicles and determining a charging speed without any change based on production power of the current fixed type DC/DC converters according to an embodiment of the present disclosure, but a method of providing requested power by additionally connecting some current fixed type DC/DC converters in parallel and combining charging speeds of DC/DC converters connected in parallel to the current fixed type DC/DC converters by using a multi-connection switch in response to a request from the charging wisher.
FIG. 12C is a diagram illustrating a construction c of a DC/DC converter, that is, a method of determining the number of current variable DC/DC converters based on the number of simultaneously chargeable electric vehicles and determining a charging speed by varying production power of the current variable DC/DC converter based on power requested by a charging wisher, according to an embodiment of the present disclosure.

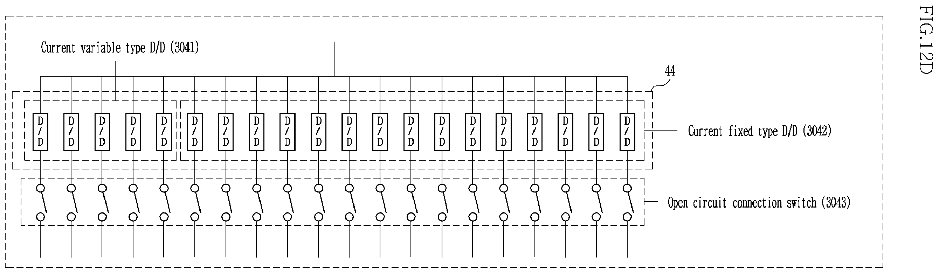

FIG. 12D is a diagram illustrating a construction d of a DC/DC converter, that is, a method determining the number of current fixed type DC/DC converters based on the number of simultaneously chargeable electric vehicles, supplying production power of a current fixed type DC/DC converter when the current fixed type DC/DC converter corresponding to power requested by a charging wisher is present by using an additional current variable DC/DC converter, and setting and supplying a charging speed through a corresponding current variable DC/DC converter when the corresponding current fixed type DC/DC converter is not present, according to an embodiment of the present disclosure.
FIG. 13A is a diagram illustrating a location a of an AC/DC converting system and a request power manipulation unit, illustrating a case in which the AC/DC converting system and the request power manipulation unit are disposed outside the vicinity of a parking lot according to an embodiment of the present disclosure.
FIG. 13B is a diagram illustrating a location b of an AC/DC converting system and a request power manipulation unit, illustrating a case in which the AC/DC converting system is present outside the vicinity of a parking lot and the request power manipulation unit is present within the parking lot according to an embodiment of the present disclosure.
FIG. 13C is a diagram illustrating a location c of an AC/DC converting system and a request power manipulation unit, illustrating a case in which the AC/DC converting system and the request power manipulation unit are present within a parking lot according to an embodiment of the present disclosure.
FIG. 14A is a diagram illustrating an example (a) of charging areas for request power manipulation units, if the number of request power manipulation units is 2 and the charging areas have been separated from each other without being overlapped, according to an embodiment of the present disclosure.
FIG. 14B is a diagram illustrating an example (b) of charging areas for request power manipulation units if the number of request power manipulation units is 2 and some of the charging areas are partially overlapped, according to an embodiment of the present disclosure.
FIG. 14C is a diagram illustrating an example (c) of charging areas for request power manipulation units if the number of request power manipulation units is 3 and the charging areas have been separated from each other without being overlapped, according to an embodiment of the present disclosure.
FIG. 14D is a diagram illustrating an example (d) of charging areas for request power manipulation units if the number of request power manipulation units is 3 and the charging areas have been partially overlapped, according to an embodiment of the present disclosure.
FIG. 14E is a diagram illustrating an example (e) of charging areas for request power manipulation units if the number of request power manipulation units is 4 and the charging areas have been separated from each other without being overlapped, according to an embodiment of the present disclosure.
FIG. 14F is a diagram illustrating an example (f) of charging areas for request power manipulation units if the number of request power manipulation units is 4 and the charging areas have been partially overlapped, according to an embodiment of the present disclosure.
FIG. 15A is a diagram illustrating a construction a of a multi-connection switch in an intra-parking lot power grid if the multi-connection switch has been installed only on a parking surface according to an embodiment of the present disclosure.
FIG. 15B is a diagram illustrating a construction b of a multi-connection switch in an intra-parking lot power grid if the multi-connection switch has been installed in a space, such as a passage, in addition to a parking surface according to an embodiment of the present disclosure.
FIGS. 16A to 16D are diagrams illustrating the number of selectable paths according to a form of a power grid according to an embodiment of the present disclosure.
FIG. 17A is a diagram illustrating a flowchart a if a DC/DC converter group includes current fixed type D/Ds according to an embodiment of the present disclosure.
FIG. 17B is a diagram illustrating a flowchart b if a DC/DC converter group includes current variable type D/Ds according to still another embodiment of the present disclosure.

### Mode for Invention

In this document, a "charging wisher" means a person who wishes charging, and a "charging target vehicle" means a vehicle to be charged.

Furthermore, "current fixed type D/D" means a current fixed type DC/DC converter, "current variable type D/D" means a current variable DC/DC converter, and "D/D" means a DC/DC converter.

Furthermore, a "DC power delivery system" is a name that collectively refers to a request power manipulation unit and a connection power grid. A "connection power grid" is a name that collectively refers to a relay connection power grid and an intra-parking lot power grid.

Furthermore, a "DC power delivery system" is a name that collectively refers to a request power manipulation unit and a connection power grid. A "connection power grid" is a name that collectively refers to a relay connection power grid and an intra-parking lot power grid.

Furthermore, terms including ordinal numbers, such as a "first" and a "second", and terms including letters, such as (a) and (b), may be used to describe various components, but the components are not restricted by the terms. The terms are used to only distinguish one element from the other elements.

Furthermore, in the present disclosure, a "DC/DC converter corresponding to a maximum number of simultaneously chargeable electric vehicles" means that in principle, the number of D/Ds is determined based on the number of simultaneously chargeable electric vehicles. For example, in general, the number of simultaneously chargeable electric vehicles and the number of DC/DCs identically have a ratio of 1 to 1. However, in another embodiment of the present disclosure, the number of D/Ds may be slightly greater or smaller than the number of simultaneously chargeable electric vehicles due to a slight difference in a system.

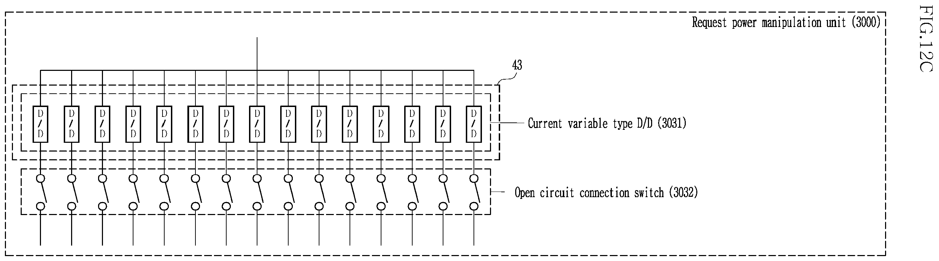

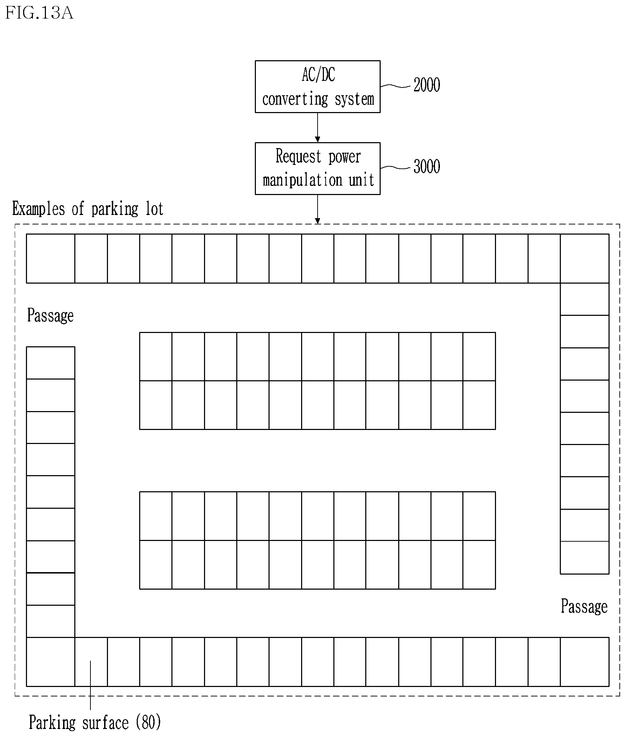

For example, among embodiments of the present disclosure, as in FIG. 12B, the number of D/Ds may be greater than the number of simultaneously chargeable electric vehicles for a parallel connection. If an additional expansion is considered or for the diversity of a charging speed (requested power) that is selected by a charging wisher as in constructions of FIGS. 13A, 12C, and 12D, that is, other embodiments, the number of D/Ds may be greater than the number of simultaneously chargeable electric vehicles.

Furthermore, as a slightly modified form of a system of the present disclosure, power that is received via one connection power grid may be branched at adapters two or three parking spaces, if necessary, at the rear end of the system, and vehicles may be simultaneously charged. In this case, there is a good possibility that a safety problem, such as a case in which open circuit timing of each of many vehicles is different after charging for each vehicle, may occur. However, the present disclosure includes the possibility that the problem will be solved by an apparatus including a diode, etc. However, in the present disclosure, the number of chargeable electric vehicles in this case is considered to be one, not two or three.

In other words, this means that after power is supplied through one formed connection power grid and charging is performed, the number of chargeable electric vehicles is considered to be 1 in the concept in which the power is disconnected by an open circuit connection switch of a corresponding D/D converter.

In such an aspect, in the present disclosure, the "number of DC/DC converters corresponding to a maximum number of simultaneously chargeable electric vehicles" is the same or is slightly small or greater. It is preferred that the number of DC/DC converters corresponding to a maximum number of simultaneously chargeable electric vehicles is not greater than 12% if the number of DC/DC converters corresponding to a maximum number of simultaneously chargeable electric vehicles is slightly great.

Furthermore, from an actual usable aspect, a small number of simultaneously chargeable electric vehicles may be used depending on a construction of a charging speed of a D/D. In a charging system according to the present disclosure, when the amount of electricity used reaches the amount of electricity permitted, the amount of electricity used may not be used because the amount of electricity used cannot exceed the amount of electricity permitted although there is a D/D that has not been used.

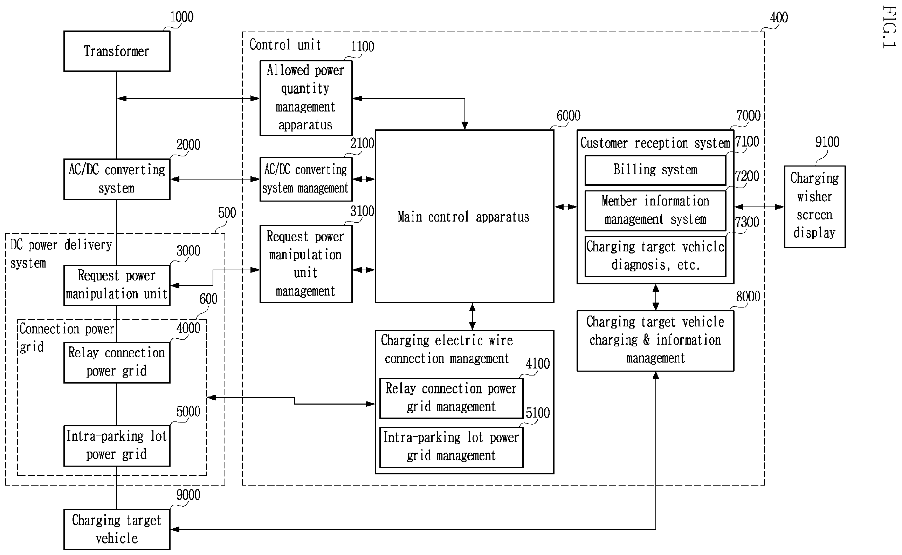

An overall block diagram of a system according to an embodiment of the present disclosure includes a transformer 1000 and an AC/DC converting system 2000, a DC power delivery system 500, a charging target vehicle 9000, a charging wisher screen display 9100, and a control unit 400, as illustrated in FIG. 1.

In an embodiment of the present disclosure, the transformer 1000 is indicated, but the corresponding name may include pieces of equipment that is necessary for a process for power reception, power distribution, and transformation in general, such as power reception and distribution equipment, including power reception for receiving power generated by a power plant and a power distribution for distributing the power as the amount of power that is necessary for a consumer, power transformation equipment for power transformation, a panel board, etc.

The size of an AC voltage that is transformed by the transformer 1000 may be different depending on the size of a DC voltage of power generated by a power plant, which is used by the DC power delivery system 500. The size of an AC voltage that is transformed is determined by considering a transformation, etc.

Furthermore, in an embodiment of the present disclosure, AC power that is generated by a power plant is basically described, but pieces of equipment for converting supplied DC power may be included if the power is supplied to high voltage DC transmission (HVDC) that recently attracts attention.

Furthermore, if proper electricity that is necessary on the outside is present, the electricity may be used without any change. In this case, the transformer may not be included in the system of the present disclosure. In this case, a transformer somewhere on the outside becomes the transformer of the present disclosure.

Power that is supplied from the outside is transformed by the transformer 1000. The power that is transformed as described above is supplied to the AC/DC converting system 2000. The AC/DC converting system 2000 plays a role to primarily convert AC power supplied by the transformer into DC power and supply the DC power.

Power that is input to the transformer via processes, such as a power plant, power transmission, and power distribution, is unstable. If power that is unstable as described above is directly converted and used as a DC voltage, a problem, such as a malfunction or deterioration, may occur because unstable power is supplied.

AC power is primarily converted into DC power through the AC/DC converting system 2000. The converted DC power is stabilized in a request power manipulation unit 3000 through DC/DC conversion, and may be used upon charging of the charging target vehicle 9000.

The DC power delivery system 500 may include the request power manipulation unit 3000 and a connection power grid 600. The connection power grid 600 may include a relay connection power grid 4000 and an intra-parking lot power grid 5000.

The request power manipulation unit 3000 controls the selection of a D/D or a combination of D/Ds, the setting of a charging speed (requested power), etc. in order to provide a charging speed (requested power) of a charging wisher, and plays a role to supply a charging speed (requested power) or release the supply of a charging speed (requested power).

In this case, the charging speed of the charging wisher includes a set speed that has been previously agreed or published although the charging speed has not been requested at that time. Furthermore, the system may autonomously apply a proper time and charging speed depending on a forwarding time of a charging wisher, which may be included in the meaning of the charging speed of the charging wisher in that a charging time and a charging speed have been determined based on the will of the charging wisher.

For example, a charging wisher may access an adapter in a parking zone at 6:00 p.m., and may set a departure time to 8:00 a.m. In this case, if a charging rate 90% has only to be performed until the time and a charging rate that have been previously agreed with the charging wisher, for example, the departure time (or 30 minutes prior to the departure time), the system of the present disclosure may adjust a charging speed and a charging time while properly handling various situations according to artificial intelligence or an algorithm. In the present disclosure, even this case may be considered as one of desired charging speed types of the charging wisher.

Therefore, the request power manipulation unit may directly receive a wish list of a charging wisher and may manipulate the wish list. However, it may be considered that a more preferred shape is that a wish list, such as a charging speed of a charging wisher, is interpreted by a main control apparatus and manipulated in response to a control command that is given in accordance with a general situation.

The relay connection power grid 4000 is disposed between a requested power provision electrical wire 3013 that supplies a charging speed (requested power) set in the request power manipulation unit 3000 and the intra-parking lot power grid 5000, and may be used to form a path so that a charging speed (requested power) is supplied up to the intra-parking lot power grid 5000 along a proper path.

The intra-parking lot power grid 5000 is connected to the relay connection power grid 4000, and may play a role to provide a charging speed (requested power) by forming a charging path up to a location where the charging target vehicle 9000 is present. However, intrinsically, the intra-parking lot power grid 5000 may play a role to treat the relay connection power grid 4000 to be similar in a lump or to be arbitrarily different.

The charging target vehicle 9000 means a vehicle to be charged, and is supplied with a charging speed (requested power) requested by a charging wisher via the request power manipulation unit 3000, the relay connection power grid 4000, and the intra-parking lot power grid 5000.

The control unit 400 may include a main control apparatus 6000, an allowed power quantity management apparatus 1100, AC/DC converting system management 2100, request power manipulation unit management 3100, relay connection power grid management 4100, intra-parking lot power grid management 5100, charging target vehicle charging and information management 8000, and a customer reception system 7000.

The main control apparatus 6000 may play a role to transmit notification to or transmit and receive information to and from a terminal of a charging wisher through the management and control of overall systems for charging, internal or external communication, and control of the customer reception system 7000.

Various methods for wired communication or wireless communication, such as PLC, a CAN, a LAN, a LIN, Bluetooth, Zigbee, and Beacon, may be used as communication methods that are used to perform internal or external communication in the main control apparatus 6000.

The allowed power quantity management apparatus 1100 plays a role to consistently monitor and control power that is used in the charging system according to the present disclosure so that the power does not exceed total power that is acceptable for the transformer 1000. To this end, in general, the allowed power quantity management apparatus 1100 may include equipment, software, or a panel board for monitoring and controlling power.

In this case, the acceptable total power may mean, in principle, the amount of power that is permitted according to a contract with an electricity supply source (KEPCO, etc. in Korea) regardless of whether a transformer is present or not.

The AC/DC converting system management 2100 may play a role to consistently monitor and control power that is supplied by the transformer 1000 so that the supplied power does not exceed power that is determined when the supplied power is primarily converted into DC power. In general, the AC/DC converting system management 2100 may include equipment, software, or a panel board for monitoring and controlling power.

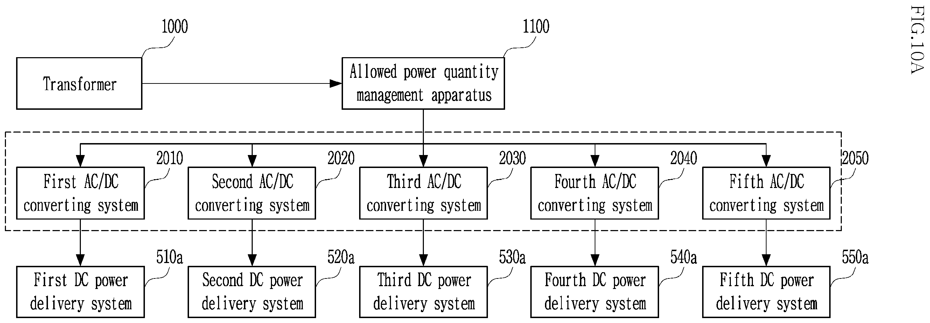

If not one AC/DC converting system, but several AC/DC converting systems are constructed as in FIG. 10A, the AC/DC converting system management 2100 may monitor and control each of AC/DC converting systems 2010, 2020, 2030, 2040, and 2050.

The request power manipulation unit management 3100 may play a role to perform control, such as selecting or combining D/Ds in response to a request from a charging wisher or determining and supplying or blocking a charging speed (requested power), and to identify problems, such as a breakdown and the leakage current.

The relay connection power grid management 4100 may play a role to form a path for supplying a charging speed (requested power) set in the request power manipulation unit 3000 up to the intra-parking lot power grid 5000 in which the charging target vehicle 9000 has been disposed and to release the forming of the path after charging is completed.

The intra-parking lot power grid management 5100 may play a role to form a path for supply a charging speed (requested power) that is supplied by the relay connection power grid 4000 up to a location of the charging target vehicle 9000 and to release the forming of the path after charging is completed.

The charging target vehicle charging and information management 8000 may play a role to determine information, such as battery information, the amount of remaining battery power, and vehicle information that are received from the charging target vehicle 9000, and whether the charging target vehicle 9000 that is connected to a corresponding charging system is a vehicle which may be charged in the corresponding charging system.

The customer reception system 7000 may include a billing system 7100, a member information management system 7200, and charging target vehicle diagnosis, etc. 7300. In an embodiment according to the present disclosure, the customer reception system 7000 is described by being divided into the three types, but this is an example. When a system is constructed, a system may be added, if necessary.

The billing system 7100 plays a role to calculate and pay a bill according to bill information for each time zone/each season and power used for charging. The member information management system 7200 may play a role to store payment information, vehicle information, schedule information, etc. of a charging wisher.

The charging target vehicle diagnosis, etc. 7300 may play a role to store information that is received from the charging target vehicle charging and information management 8000 and to deliver the information to a charging wisher depending on information.

The charging wisher screen display 9100 means that information that is transmitted by the customer reception system 7000 is displayed on a terminal, such as a smartphone or computer of a charging wisher.

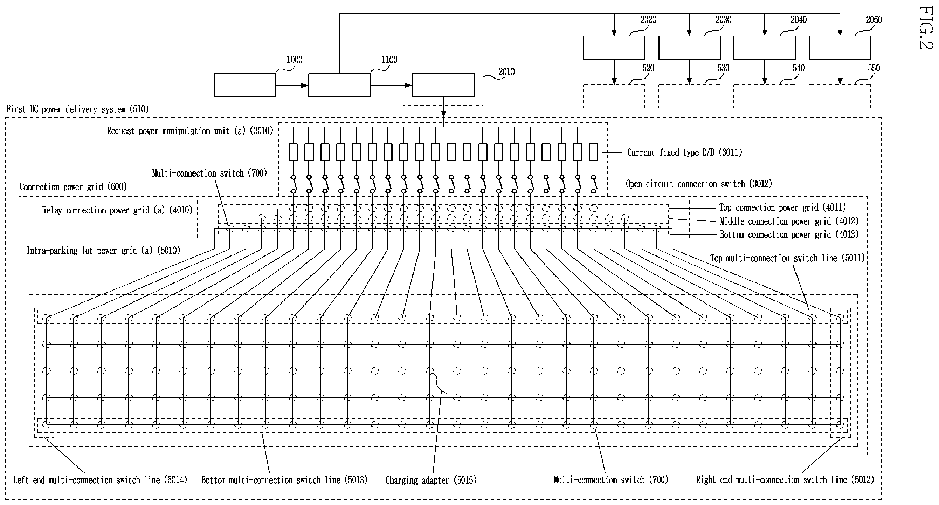

FIG. 2 represents, as an example, a general structure from the transformer 1000 to a charging adapter 5015 at a place where the charging target vehicle 9000 has been disposed according to an embodiment of the present disclosure, and may be constructed to include the transformer 1000, the allowed power quantity management apparatus 1100, the AC/DC converting system 2000, and the DC power delivery system 500.

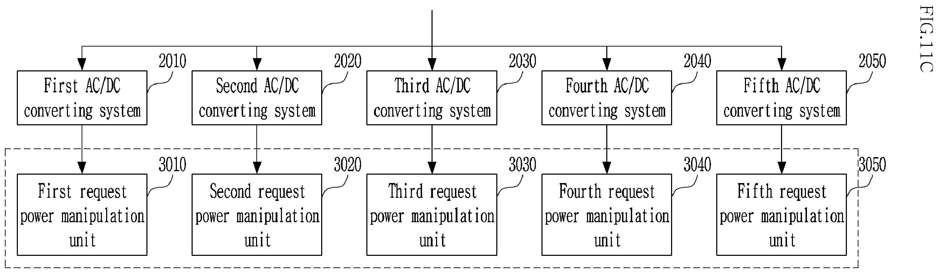

The AC/DC converting system 2000 of FIG. 2 may be a plural number. For example, the AC/DC converting system 2000 may include the first to fifth AC/DC converting systems 2010, 2020, 2030, 2040, and 2050 as in FIG. 10A. The DC power delivery system 500 may be constructed by connecting first to fifth DC power delivery systems 510, 520, 530, 540, and 550 to the first to fifth AC/DC converting systems 2010, 2020, 2030, 2040, and 2050, respectively, as in FIG. 11C.

Five AC/DC converting systems 2000 and five DC power delivery systems 500 have been constructed in FIG 10A and FIG. 11C, but this is merely an example according to an embodiment of the present disclosure, and the number of AC/DC converting systems may be greater or smaller than 5.

FIG. 2 has been described by taking, as an example, the first AC/DC converting system 2010 and the first DC power delivery system 510, among the first to fifth AC/DC converting systems 2010, 2020, 2030, 2040, and 2050 and the first to fifth DC power delivery systems 510, 520, 530, 540, and 550.

DC power that is generated by the first to fifth AC/DC converting systems 2010, 2020, 2030, 2040, and 2050 and DC power of the first to fifth DC power delivery systems 510, 520, 530, 540, and 550 may use DC power having the same size, and may use DC power having different sizes, if necessary.

In particular, in this case, a voltage of a power used may be variously generated and used, if necessary, by those skilled in the art if the sizes of standard voltages of electric vehicles that are sold on the market are variously different. For example, if charging standard voltages of electric vehicles are 800 V and 400 V, all the charging standard voltages may be accommodated by considering the ratio of the number of vehicles of the two vehicles.

Furthermore, detailed structures of the request power manipulation units 3000, relay connection power grids 4000, and intra-parking lot power grids 5000 of the first to fifth DC power delivery systems 510, 520, 530, 540, and 550 may be the same or may be differently constructed, if necessary.

FIG. 2 is an embodiment according to the present disclosure, including a construction in which the request power manipulation unit 3000 is connected to a current fixed type D/D 3021, the relay connection power grid 4000 has a pyramid form (a structure in which the number of power grids is increased), and an electrical wire 900 to which the intra-parking lot power grid 5000 and the relay connection power grid 4000 are connected is connected to a top multi-connection switch line 5011.

In the embodiment, a charging speed (requested power) that is determined by a current fixed type D/D 3011 of a request power manipulation unit (a) 3010 may be selected as a charging speed (requested power) that is requested by a charging wisher. The corresponding charging speed (requested power) may be supplied to the charging adapter 5015 connected to the charging target vehicle 9000 in the state in which there is a good possibility that another path will be formed whenever a path having the number of many cases is formed between a relay connection power grid (a) 4010 and a first intra-parking lot power grid 5010 in principle.

All of the current fixed type D/Ds 3011 of the request power manipulation unit (a) 3010 may supply charging speeds (requested power) having the same size, but may supply charging speeds having different sizes. The charging speed (requested power) of each current fixed type D/D 3011 may be variously determined by considering a situation in a corresponding parking lot upon installation.

In the embodiment, when the current fixed type D/D 3011 of the request power manipulation unit (a) 3010 is selected based on a determination of the main control apparatus in response to the selection of a charging speed (requested power) by a charging wisher, a path is formed between the relay connection power grid (a) 4010 and the first intra-parking lot power grid 5010. When a corresponding task is completed, the charging speed (requested power) may be supplied by making ON an open circuit connection switch 3012 of the request power manipulation unit (a) 3010.

Furthermore, there is an advantage in that a charging speed (requested power) can be provided from slow charging to quick charging using DC power by variously constructs D/Ds in response to the selection of a charging wisher.

If a path is formed when electricity flows, various electrical problems, such as a counter electromotive force, may occur. However, if a charging speed (requested power) is supplied by making ON the open circuit connection switch 3012 after a path is formed as in the embodiment, there is an advantage in that such a problem can be prevented.

Furthermore, although not separately illustrated in the embodiment, as in the present disclosure, a device, such as a DC circuit breaker for blocking a fault current when a breakdown occurs while DC power is used, may be added. Devices capable of preventing an accident which may occur while DC power is used, such as a reverse current relay, an earthly world relay, and a remaining current device, may be additionally used.

Furthermore, in the embodiment, the D/Ds of the request power manipulation unit have been represented, but the D/Ds of the request power manipulation unit may include various design methods or constructions for DC/DC conversion in addition to DC/AC conversion - AC/DC conversion depending on an advantage in design or circumstances.

In the present disclosure, not electricity for charging an electric vehicle, but AC for common households may be used as electricity that makes move a multi-connection switch 700 that is used in the connection power grid 600 in order to set a path.

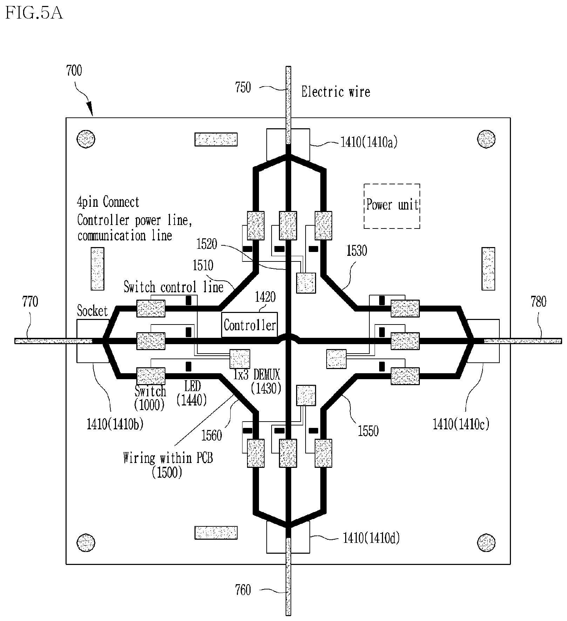

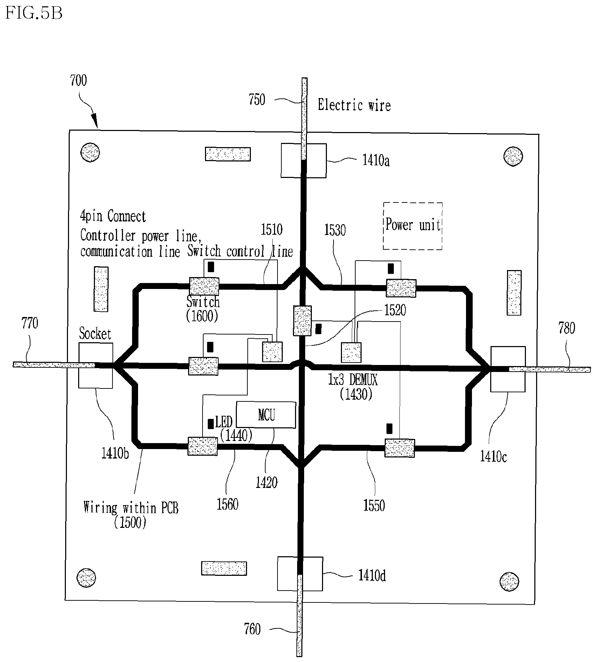

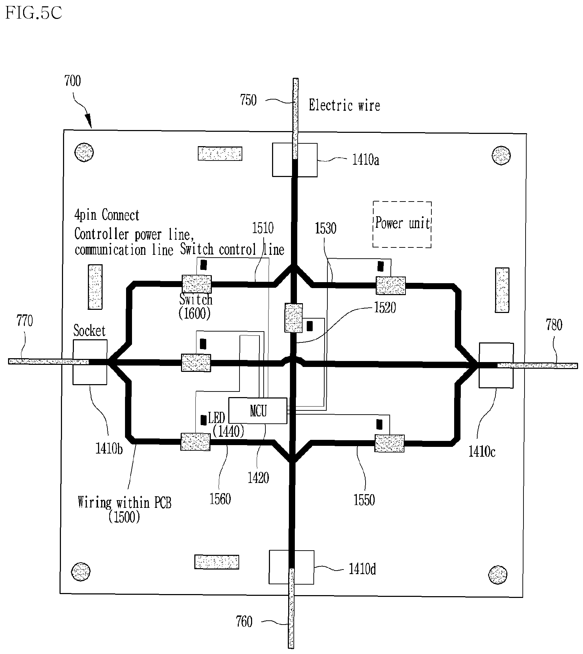

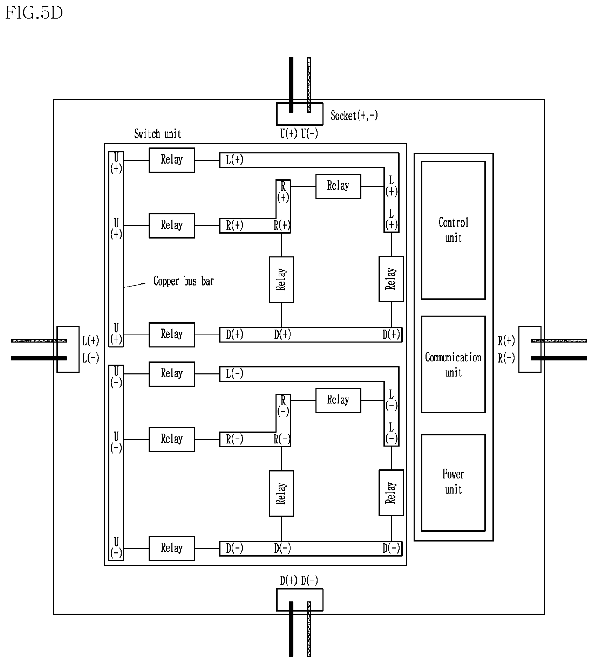

When the multi-connection switch 700 used in the present disclosure is constructed like FIGS. 5A, 5B, 5C, and 5D as one embodiment, electrical wires connected to the multi-connection switch 700 may have a total of six paths. Paths may be formed at the top and the bottom, the top and the left end, the top and the right end, the bottom and the left end, and the bottom and the right end. One path is basically formed, but two paths may be simultaneously formed if the two paths are not overlapped according to circumstances.

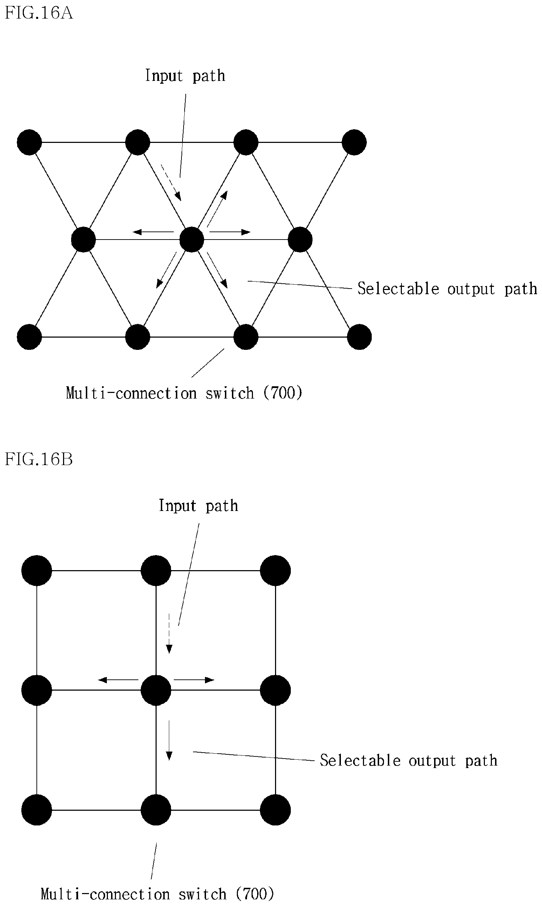

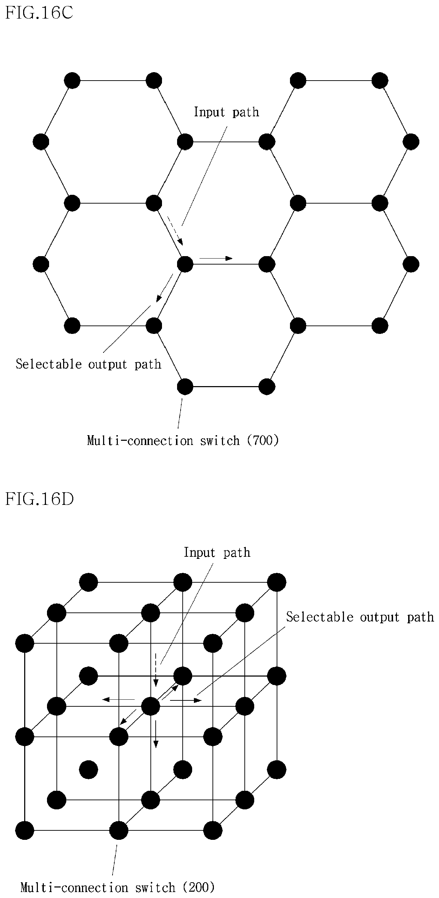

Furthermore, the connection power grids may be connected as a triangle, a hexagon, etc. in which the connection power grids are connected in all directions as in FIGS. 16A to 16D. Alternatively, the connection power grids may also be connected as a three-dimensional connection structure. For example, the connection power grids may have a regular tetrahedron or a regular hexahedron. A shape of the connection power grids may be slightly crushed and used, if necessary. Furthermore, these shapes may be mixed and used.

An important point is whether the number of cases of connection paths of the multi-connection switch 700 can be sufficiently secured so that a new path can be formed without a crosstalk with the paths of the charging target vehicles 9000 whose paths have already been formed and that are being charged, which are various and may be said to be randomly connected in principle, among chargeable adapters in many parking lots the number of which is much large in the request power manipulation unit 3000 having a small number of power supply lines.

Therefore, the multi-connection switch 700 is installed in all or most of edges that are formed by the connection power grid. However, if the number of cases of connection paths can be sufficiently secured, the multi-connection switch 700 may not be installed in all the edges, and the number of connectable cases per switch may be reduced.

How many charging adapters will be installed within a parking space is an important thing. Most preferably, the adapter may be installed in all of parking spaces. The reason for this is that in such a case, there is an advantage in that car owners can park regardless of an internal combustion engine vehicle or an electric vehicle. Furthermore, the reason for this is that if the proportion of electric vehicles is subsequently continuously increased, handling is possible by only supplementing a transformer, an AC/DC converter, and a D/D converter at the top.

Accordingly, for example, in the present disclosure, if a maximum number of simultaneously chargeable electric vehicles are 60, 400 or 500 adapters may be installed in a parking space. However, the numbers may be variously applied as contents that need to be properly determined by those skilled in the art by considering a situation, depending on the proportion of electric vehicles among all vehicles, use shapes of the electric vehicles, etc. Furthermore, a considerable number of adapters in a parking space may be omitted according to circumstances. However, a core of the present disclosure may be that the meaning that the connection power grid is installed is effective in the system partially or entirely because at least the number of adapters is much greater than a maximum number of simultaneously chargeable electric vehicles.

As still another embodiment, the request power manipulation unit 3000 may be directly connected to the intra-parking lot power grid 5000 without the relay connection power grid 4000. For example, if the multi-connection switch 700 within a parking lot has been installed, but there are many places where the charging adapter 5015 is not present if necessary or the number of cases of paths is sufficient, the request power manipulation unit 3000 may be directly connected to the intra-parking lot power grid 5000 through the portion. The reason for this is that even in this case, the number of cases of connection paths for the multi-connection switch 700 can be sufficiently secured.

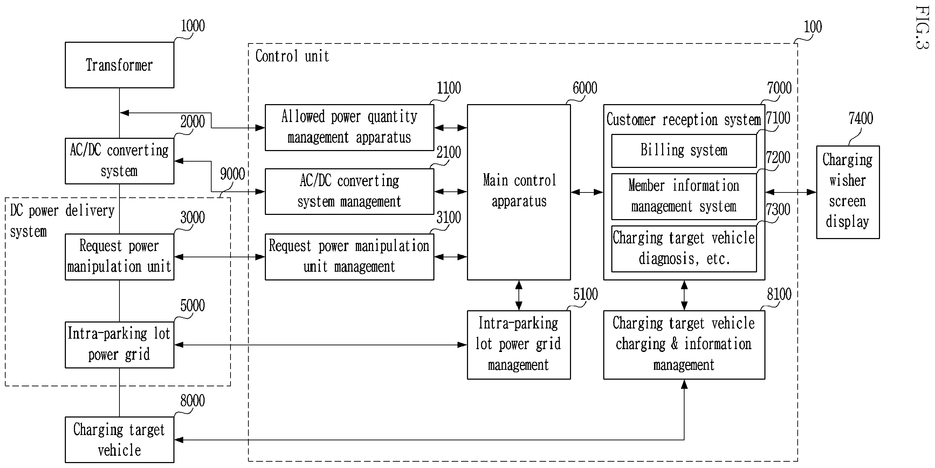

Referring to FIG. 3, a charging system for an electric vehicle according to an embodiment of the present disclosure includes the AC/DC converting system 2000 and a DC power delivery system 500a.

Furthermore, the charging system for an electric vehicle according to an embodiment of the present disclosure may include the charging target vehicle 9000, the charging wisher screen display 9100, and a control unit 400a.

Furthermore, the charging system for an electric vehicle according to an embodiment of the present disclosure may further include the transformer 1000.

Power that is supplied from the outside is transformed by the transformer 1000. The power that is transformed as described above is supplied to the AC/DC converting system 2000. The AC/DC converting system 2000 plays a role to primarily convert AC power supplied by the transformer into DC power and supply the DC power.

AC power is primarily converted into DC power through the AC/DC converting system 2000. The converted DC power is stabilized in a request power manipulation unit 3000 through DC/DC conversion, and may be used upon charging of the charging target vehicle 9000.

The DC power delivery system 500a may include the request power manipulation unit 3000 and the intra-parking lot power grid 5000.

the DC power delivery system 500a may include the request power manipulation unit 3000, including DC/DC converters 3011, 3031, etc. connected to an output stage of the AC/DC converting system 2000 and an open circuit connection switch 3012, etc. connected to an output stage of each DC/DC converter, and the power grid 5000 capable of connecting DC/DC converters and charging adapters between the DC/DC converters and the charging adapters 5015.

The charging adapters 5015 may be installed in at least some of the parking spaces 80 in a parking lot. The number of DC/DC converters may correspond to a maximum number of simultaneously chargeable electric vehicles. The number of charging adapters 5015 may be greater than the number of DC/DC converters.

The request power manipulation unit 3000 controls the selection of a D/D or a combination of D/Ds, the setting of a charging speed (requested power), etc. in order to provide a charging speed (requested power) of a charging wisher, and plays a role to supply a charging speed (requested power) or release the supply of a charging speed (requested power).

In this case, the charging speed of the charging wisher includes a set speed that has been previously agreed or published although the charging speed has not been requested at that time. Furthermore, the system may autonomously apply a proper time and charging speed depending on a forwarding time of a charging wisher, which may be included in the meaning of the charging speed of the charging wisher in that a charging time and a charging speed have been determined based on the will of the charging wisher.

For example, a charging wisher may access the charging adapter 5015 in a parking zone at 6:00 p.m., and may set a departure time to 8:00 a.m. In this case, if a charging rate 90% has only to be performed until the time and a charging rate that have been previously agreed with the charging wisher, for example, the departure time (or 30 minutes prior to the departure time, the system of the present disclosure may adjust a charging speed and a charging time while properly handling various situations according to artificial intelligence or an algorithm. In the present disclosure, even this case may be considered as one of desired charging speed types of the charging wisher.

Therefore, the request power manipulation unit 3000 may directly receive a wish list of a charging wisher and may manipulate the wish list. However, it may be considered that a more preferred shape is that a wish list, such as a charging speed (requested power) of a charging wisher, is interpreted by a main control apparatus 6000 and manipulated in response to a control command that is given in accordance with a general situation.

The intra-parking lot power grid 5000 may play a role to provide a charging speed (requested power) by forming a charging path up to a location where the charging target vehicle 9000 is present. The charging target vehicle 9000 means a vehicle to be charged, and is supplied with a charging speed (requested power) requested by a charging wisher via the request power manipulation unit 3000 and the intra-parking lot power grid 5000.

The control unit 400a may include the main control apparatus 6000, the allowed power quantity management apparatus 1100, the AC/DC converting system management 2100, the request power manipulation unit management 3100, the intra-parking lot power grid management 5100, the charging target vehicle charging and information management 8000, and the customer reception system 7000.

The main control apparatus 6000 may play a role to transmit notification to or transmit and receive information to and from a terminal of a charging wisher through the management and control of overall systems for charging, internal or external communication, and control of the customer reception system 7000.

Various methods for wired communication or wireless communication, such as PLC, a CAN, a LAN, a LIN, Bluetooth, Zigbee, and Beacon, may be used as communication methods that are used to perform internal or external communication in the main control apparatus 6000.

The allowed power quantity management apparatus 1100 plays a role to consistently monitor and control power that is used in the charging system according to the present disclosure so that the power does not exceed total power that is acceptable for the transformer 1000. To this end, in general, the allowed power quantity management apparatus 1100 may include equipment, software, or a panel board for monitoring and controlling power.

The AC/DC converting system management 2100 may play a role to consistently monitor and control power that is supplied by the transformer 1000 so that the supplied power does not exceed power that is determined when the supplied power is primarily converted into DC power. In general, the AC/DC converting system management 2100 may include equipment, software, or a panel board for monitoring and controlling power.

If not one AC/DC converting system, but several AC/DC converting systems are constructed as in FIG. 10A, the AC/DC converting system management 2100 may monitor and control each of the AC/DC converting systems 2010, 2020, 2030, 2040, and 2050.

The request power manipulation unit management 3100 may play a role to perform control, such as selecting or combining D/Ds in response to a request from a charging wisher or determining and supplying or blocking a charging speed (requested power), and to identify problems, such as a breakdown and the leakage current.

The intra-parking lot power grid management 5100 may play a role to form a path for supplying a charging speed (requested power) that is supplied by the request power manipulation unit 3000 up to a location of the charging target vehicle 9000 and to release the forming of the path after charging is completed.

The charging target vehicle charging and information management 8000 may play a role to determine information, such as battery information, the amount of remaining battery power, and vehicle information that are received from the charging target vehicle 9000, and whether the charging target vehicle 9000 that is connected to a corresponding charging system is a vehicle which may be charged in the corresponding charging system.

The customer reception system 7000 may include a billing system 7100, a member information management system 7200, and charging target vehicle diagnosis, etc. 7300. In an embodiment according to the present disclosure, the customer reception system 7000 is described by being divided into the three types, but this is an example. When a system is constructed, a system may be added, if necessary.

The billing system 7100 plays a role to calculate and pay a bill according to bill information for each time zone/each season and power used for charging. The member information management system 7200 may play a role to store payment information, vehicle information, schedule information, etc. of a charging wisher.

The charging target vehicle diagnosis, etc. 7300 may play a role to store information that is received from the charging target vehicle charging and information management 8000 and to deliver the information to a charging wisher depending on information.

The charging wisher screen display 9100 means that information that is transmitted by the customer reception system 7000 is displayed on a terminal, such as a smartphone or computer of a charging wisher.

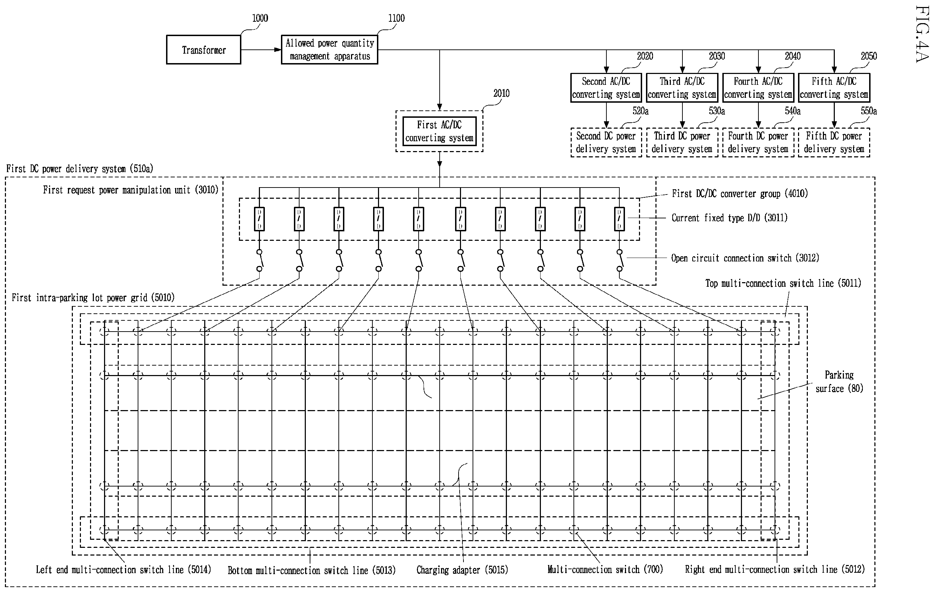

FIG. 4A represents as an example, a general structure from the transformer 1000 to the charging adapter 5015 at the place where the charging target vehicle 9000 is disposed according to an embodiment of the present disclosure.

Referring to FIG. 4A, the charging system for an electric vehicle according to an embodiment of the present disclosure may be constructed to include the transformer 1000, the allowed power quantity management apparatus 1100, the AC/DC converting system 2000, and a DC power delivery system 500a.

If a transformer that has been previously installed can handle power used for charging, power may be supplied by using the corresponding transformer without separate installation instead of the transformer 1000 in FIG. 4A. If a transformer that has been previously installed cannot handle power used for charging, power may be supplied through the installation of an additional transformer 1000.

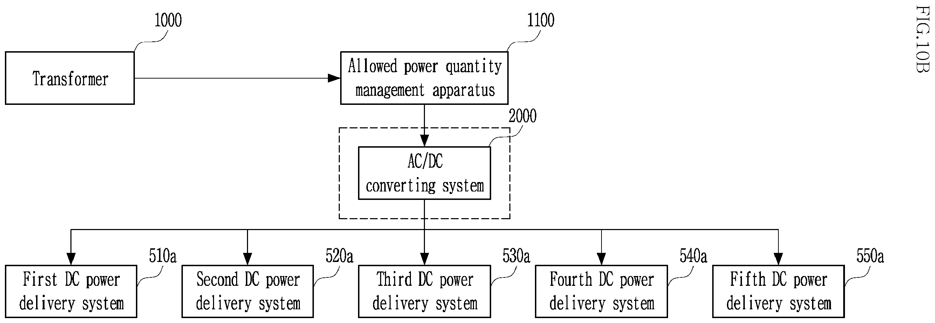

In FIG. 4A, one AC/DC converting system 2000 may be constructed or a plurality of AC/DC converting systems 2000 may be constructed. For example, the AC/DC converting system 2000 may include the first to fifth AC/DC converting systems 2010, 2020, 2030, 2040, and 2050 as in FIG. 10A, and may include one AC/DC converting system as in FIG. 10B. The request power manipulation unit 3000 may be separately provided in each of the first to fifth AC/DC converting systems 2010, 2020, 2030, 2040, and 2050. That is, the first to fifth request power manipulation units 3010, 3020, 3030, 3040, and 3050 may be connected to the first to fifth AC/DC converting systems 2010, 2020, 2030, 2040, and 2050, respectively.

An example in which five AC/DC converting systems 2000 are constructed in FIG. 10A has been taken, but this is merely an example according to an embodiment of the present disclosure and the number of AC/DC converting systems may be greater or smaller than 5.

Furthermore, in the embodiment of FIG. 4A, the DC power delivery system 500a has been connected to the AC/DC converting system 2000 in a one-to-one way. This is merely an example according to an embodiment of the present disclosure, and the DC power delivery system 500a may be connected to the AC/DC converting system 2000 in a one-to-many way.

In FIG. 4A, the first AC/DC converting system 2010 and the first DC power delivery system 510a, among the first to fifth AC/DC converting systems 2010, 2020, 2030, 2040, and 2050 and the first to fifth DC power delivery systems 510a, 520a, 530a, 540a, and 550a, have been described as an example.

Power that may be supplied by the first to fifth AC/DC converting systems 2010, 2020, 2030, 2040, and 2050 may be all the same. The amounts of power which may be supplied by the systems may be different from each other. Furthermore, the sizes of DC power of the request power manipulation units 3000 included in the first to fifth DC power delivery systems 510a, 520a, 530a, 540a, and 550a, respectively, may be all the same. The request power manipulation units 3000 may be constructed by using DC power having different sizes, if necessary.

In particular, in this case, the sizes of charging voltages in power, which are used in electric vehicles that are sold on the market, may be various. Accordingly, the sizes of the charging voltages may be variously constructed when a system is constructed, if necessary. For example, if the sizes of charging voltages for electric vehicles are 800 V and 400 V, a system may be constructed by considering the ratio of the number of electric vehicles in which the two voltages are used.

Furthermore, detailed structures of the request power manipulation unit 3000 of each of the first to fifth DC power delivery systems 510a, 520a, 530a, 540a, and 550a and the intra-parking lot power grid 5000 may be the same as detailed structures of the first request power manipulation unit 3010 and the first intra-parking lot power grid 5010, but may be differently constructed, if necessary.

FIG. 4A exemplifies a charging system for an electric vehicle in which the AC/DC converting system and the request power manipulation unit according to an embodiment of the present disclosure have been separated.

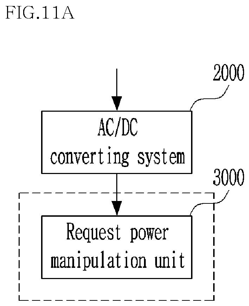

FIG. 4A is a diagram illustrating a case in which several AC/DC converting systems 2000 are constructed as in the AC/DC converting system a of FIG. 10A and one request power manipulation unit 3000 has been constructed in the AC/DC converting system 2000 as in the request power manipulation unit a of FIG. 11A.

Furthermore, FIG. 4A is a diagram illustrating a case in which the request power manipulation unit 3000 is separately present in each of the first to fifth AC/DC converting systems 2010, 2020, 2030, 2040, and 2050 and the first to fifth AC/DC converting systems 2010, 2020, 2030, 2040, and 2050 and the request power manipulation units 3000 are constructed outside the vicinity of a parking lot as in the location a of the AC/DC converting system and the request power manipulation unit in FIG. 13A.

In this case, the outside means another separate space not an area of a corresponding parking lot. The outside may be an installation space where the AC/DC converting system 2000 and the request power manipulation unit 3000 may be separately constructed in the vicinity of the parking lot.

Furthermore, in this case, the separate space may include an area other than the area of the parking lot in which the AC/DC converting system 2000 and the request power manipulation unit 3000 are responsible for charging in the entire area of the parking lot, and may be a space separated from the parking lot. The charging adapter 5015 needs to be connected to the separate space via the D/D open circuit connection switch 3012 and the multi-connection switch 700.

Furthermore, if the AC/DC converting system 2000 and the request power manipulation unit 3000 are constructed outside the vicinity of a parking lot, AC power is supplied up to the vicinity of the parking lot.

Furthermore, the embodiment is an embodiment according to the present disclosure if the multi-connection switch 700 is constructed only on a parking surface 80 and one charging adapter 5015 can charge one electric vehicle.

In the embodiment, a charging speed (requested power) that is determined by the current fixed type D/D 3011 of the first request power manipulation unit 3010 may be selected as a charging speed (requested power) that is requested by a charging wisher. The corresponding charging speed (requested power) may be variously supplied from the intra-parking lot power grid 5010 to the charging adapter 5015 and the charging target vehicle 9000 by the forming of a path depending on a current location of the charging target vehicle 9000. The path for charging may be formed to use at least the multi-connection switch 700 through the shortest distance by avoiding an existing path.

As still another embodiment, multiple AC/DC converters may be directly connected to the request power manipulation unit including the open circuit connection switch that supplies or blocks a DC current to be charged by finely fabricating the multiple AC/DC converters, for example, AC/DC converters that are used without adding a DC/DC converter to a charger that is necessary in the present disclosure.

The most important point in a process of forming a path is to form a path capable of minimizing a voltage drop according to the length of an electrical wire of a formed path and the number of multi-connection switches. A control program may calculate a voltage drop according to the lengths of electrical wires of paths that are formed through simulations when the paths are formed and the number of multi-connection switches, and may select a path having the smallest voltage drop among the paths.

Furthermore, in another case, if only the forming of a path that minimizes the voltage drop is taken care of, the parking surface 80 in which a charging path has not been formed may occur. In order to supplement such a problem, the control program may previously simulate the forming of a path up to each parking surface, and may select a path having the smallest voltage drop so that an additional path can be easily formed.

Accordingly, as an additional option, a recommended parking surface may be displayed by installing an LED light, etc. at the top of the parking surface 80 so that the LED light blinks.

Furthermore, in order to minimize a case in which a charging path has not been formed, it may be important to minimize the forming of a path in which two or more multi-connection switches 700 installed on the parking surface 80 are continuously used. If a path is formed by continuously using the multi-connection switches 700 installed on the parking surface 80, it may be difficult to form an additional path for charging with the corresponding charging adapter 5015 of the multi-connection switches 700 that are used for only a connection. Accordingly, it may be difficult to charge an electric vehicle although the electric vehicle enters the corresponding parking surface 80. Therefore, it is preferred that a charging path is formed by well using the multi-connection switch 700 that has been installed in a passage, etc. by avoiding continuously using the multi-connection switches 700 installed on the parking surface 80.

The three methods of forming a charging path may be independently used. The first and second methods, the first and third methods, and two or more of the three methods may be used depending on the number of multi-connection switches 700 that are installed in a parking lot.

The first request power manipulation unit 3010 includes only a first DC/DC converter group 41 and the open circuit connection switch 3012. The first DC/DC converter group 41 includes only the current fixed type D/D 3011. All of the current fixed type D/Ds 3011 may supply charging speeds (requested power) having the same size, but may supply charging speeds having different sizes. A charging speed (requested power) of each current fixed type D/D 3011 may be variously determined by considering a situation in a corresponding parking lot upon installation.

In the embodiment, the current fixed type D/D 3011 of the first request power manipulation unit 3010 is selected based on a determination of the main control apparatus 6000 in response to the selection of a charging speed (requested power) by a charging wisher. A path for the first intra-parking lot power grid 5010 is first formed. When a corresponding task is completed, the charging speed (requested power) may be supplied by making ON the open circuit connection switch 3012 of the first request power manipulation unit 3010.

There is an advantage in that a charging speed (requested power) can be provided from slow charging to quick charging using DC power in response to the selection of a charging wisher by variously constructing the current fixed type D/D 3011 of the first DC/DC converter group 41. There is an advantage in that a charging system that has been previously constructed can be expanded by additionally installing the AC/DC converting system 2000 and the request power manipulation unit 3000 when the number of electric vehicles is increased.

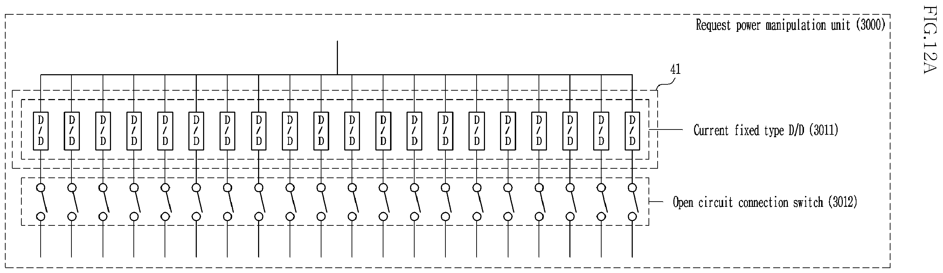

Furthermore, in the embodiment, the construction a of the DC/DC converter in FIG. 12A has been described as an example in FIG. 10A, but this is merely a construction according to an embodiment of the present disclosure. The construction of DC/DC converters may include a second DC/DC converter group 42 including a current fixed type D/D 3011 and a current fixed type D/D 3022 for a parallel connection as in FIG. 12B, a third DC/DC converter group 43 including a current variable type D/D 3031 as in FIG. 12C, and a fourth DC/DC converter group 44 in which the current fixed type D/D 3011 and the current variable type D/D 3031 are mixed as in FIG. 12D.

If a path is formed when electricity flows, various electrical problems, such as a counter electromotive force, may occur. As in the embodiment, if a charging speed (requested power) is supplied by making ON the open circuit connection switch 3012 after a path is formed, there is an advantage in that such a problem can be prevented.

Furthermore, although not illustrated in the embodiment, as in the present disclosure, a device, such as a DC circuit breaker for blocking a fault current when a breakdown occurs, may be added when DC power is used. Devices capable of preventing an accident which may occur when DC power is used, such as a reverse current relay, an earthly world relay, and a remaining current device, may be additionally constructed.

In order to establish a path, common AC or DC power different from power for charging an electric vehicle may be used as power for an operation of the multi-connection switch 700 that is used in the first intra-parking lot power grid 5010.

The structure of the multi-connection switch 700 that is used in the present disclosure is one embodiment. An example of a case in which the multi-connection switch 700 is connected up and down and left and right as in FIG. 5C, that is, four electrical wires are connected to the multi-connection switch 700, has been described. However, as in FIGS. 16A to 16D, electrical wires greater or smaller than the four electrical wires may be connected to the multi-connection switch 700 depending on a form of a power grid.

Furthermore, shapes of the intra-parking lot power grid 5010 are a triangle, a quadrangle, a hexagon, and a hexahedron as in FIGS. 16A to 16D, but are merely examples according to an embodiment of the present disclosure. The shapes may be more variously constructed like a polygon and a regular tetrahedron, if necessary. The shapes may be mixed and used.

An important thing in a charging system according to the present disclosure is that the charging target vehicle 9000 can be charged by variously forming paths in response to a request from a charging wisher by using the charging adapters 5015 that are installed on the parking surface 80 and that are much greater in number than the number of power supply devices in the request power manipulation unit 3000 having the power supply devices smaller than the number of parking surfaces 80, a new path can be formed without a crosstalk with a preset path, and charging can be performed at any place within a parking lot.

Furthermore, the number of multi-connection switches 700 needs to be sufficiently secured so that a new path can be formed by avoiding a crosstalk with the existing path. The multi-connection switch 700 is basically installed in the parking surface 80. If the number of multi-connection switches 700 is insufficient in forming a new path, the multi-connection switch 700 may be additionally installed at a location, such as a passage, other than the parking surface 80.

It is most preferred that the charging adapter 5015 is installed in each of the parking surfaces 80 one by one. In this case, there is an advantage in that in order to charge an electric vehicle, the electric vehicle can be parked at any place without moving the existing internal combustion engine vehicle. Furthermore, there is an advantage in that if the proportion of electric vehicles is subsequently increased, charging can be performed through only the additional installation of the transformer 1000, the AC/DC converting system 2000, and the request power manipulation unit 3000.

For example, if a maximum number of simultaneously chargeable electric vehicles according to the present disclosure are 60, the number of charging adapters 5015 installed in the parking surface 80 may be 400 or 500. However, the numbers may be different depending on the importance, a use form, etc. of electric vehicles compared to all of the parking surfaces 80. The number of charging adapters 5015 may be omitted or increased according to circumstances. A core of the present disclosure is that charging can be performed in all of the parking surfaces 80 or at any place of the parking surface 80 of a specific area according to circumstances because more charging adapters 5015 than a maximum number of simultaneously chargeable electric vehicles are installed.

Furthermore, for example, when a charging wisher connects the charging adapter 5015 to the charging target vehicle 9000 and sets a charging end time, electricity may be controlled to not flow into the charging target vehicle 9000 by releasing the switch of the multi-connection switch 700 to which the charging adapter 5015 is connected, until the start of charging. A charging system according to the present disclosure may control a charging speed, the open circuit connection switch 3012, etc. so that the charging is completed based on the charging end time after the charging is started.

After the charging end time is reached or the charging is completed, although the charging adapter 5015 continues to be connected to the multi-connection switch 700 without being removed, electricity may be set to not flow until a charging wisher releases the connection of the charging adapter 5015 by disconnecting the multi-connection switch 700 to which the charging adapter 5015 has been connected.

Furthermore, a charging rate may be set depending on an operating system and the setting of a charging wisher. In this case, the completion of charging may mean that charging has been completed if the charging up to 80% by quick charging, for example, has been set.

However, in the present disclosure, the completion of charging may mean that charging has been completed when DC quick charging is changed into AC slow charging and charging reaches up to 90% or more, after charging reaches up to 80% by the DC quick charging.

The rapid and AC slow methods are specifically described. For example, when charging reaches up to 80% through quick charging, in a process of releasing a previously formed charging path, the switch of the charging adapter 5015 is first disconnected, the switch of the charger is disconnected, and the multi-connection switch 700 is then disconnected. After DC charging is sufficiently terminated, separate AC power may be supplied to the charging target vehicle 9000 by controlling the switch of the charging adapter 5015 or the adapter storage box.

Furthermore, in the example, the charging adapter 5015 may be disposed in a ceiling or on the surface of a wall of a parking lot, inside/outside the floor of the parking lot, or within a separate housing that is constructed. The charging adapter 5015 may include a module capable of wireless charging using a method, such as magnetic induction, magnetic resonance, or electromagnetic waves, for example, in addition to a wired adapter that is directly connected to the charging target vehicle 9000.

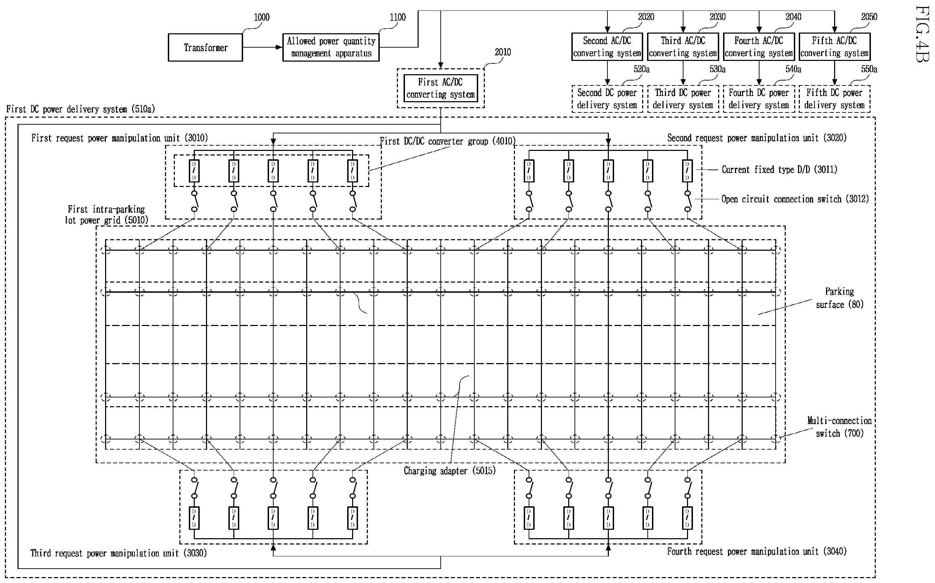

FIG. 4B represents, as an example, a general structure from the transformer 1000 to the charging adapter 5015 at the place where the charging target vehicle 9000 is disposed according to an embodiment of the present disclosure. A charging system for an electric vehicle may be constructed to include the transformer 1000, the allowed power quantity management apparatus 1100, the AC/DC converting system 2000, and the DC power delivery system 500a.

FIG. 4B exemplifies a case in which power grids are interconnected to deliver power.

If a previously installed transformer can handle power used for charging, the corresponding transformer may be used to supply power without separate installation instead of the transformer 1000 in FIG. 4B. If a previously installed transformer cannot handle power used for charging, power may be supplied by installing an additional transformer 1000.

In FIG. 4B, one AC/DC converting system 2000 may be constructed, and the AC/DC converting system 2000 may be constructed in a plural number. For example, the AC/DC converting system 2000 may include the first to fifth AC/DC converting systems 2010, 2020, 2030, 2040, and 2050 as in FIG. 10A, and one AC/DC converting system may be constructed as in FIG. 10B.

In the embodiment, an example in which five AC/DC converting systems 2000 have been constructed has been taken, but this is merely an example according to an embodiment of the present disclosure, and the number of AC/DC converting systems 2000 may be greater or smaller than 5.

Furthermore, in the embodiment of FIG. 4B, the DC power delivery system 500a is connected to the AC/DC converting system 2000 in a one-to-one way, but this is merely an example according to an embodiment of the present disclosure, and the DC power delivery system 500a may also be connected to the AC/DC converting system 2000 in a one-to-many way.

In FIG. 4B, the first AC/DC converting system 2010 and the first DC power delivery system 510a, among the first to fifth AC/DC converting systems 2010, 2020, 2030, 2040, and 2050 and the first to fifth DC power delivery systems 510a, 520a, 530a, 540a, and 550a, have been described as an example.

Power that may be supplied by the first to fifth AC/DC converting systems 2010, 2020, 2030, 2040, and 2050 may be all the same. The amounts of power which may be supplied by the systems may be different from each other. Furthermore, the sizes of DC power of the request power manipulation units 3000 that are included in the first to fifth DC power delivery systems 510a, 520a, 530a, 540a, and 550a, respectively, may be all the same, and the request power manipulation units 3000 may be constructed by using DC power having different sizes, if necessary.

In particular, in this case, the sizes of charging voltages in power, which are used electric vehicles that are sold on the market, may be various. Accordingly, the sizes of the charging voltages may be variously constructed when a system is constructed, if necessary. For example, if the sizes of charging voltages for electric vehicles are 800 V and 400 V, a system may be constructed by considering the ratio of the number of electric vehicles in which the two voltages are used.

Furthermore, detailed structures of the request power manipulation unit 3000 of each of the first to fifth DC power delivery systems 510a, 520a, 530a, 540a, and 550a and the intra-parking lot power grid 5000 may be the same as detailed structures of the first request power manipulation unit 3010 and the first intra-parking lot power grid 5010, but may be differently constructed, if necessary.

A charging system for an electric vehicle according to an embodiment of the present disclosure includes the request power manipulation unit 3000 in a plural number. The plurality of request power manipulation units 3000 may mutually deliver power.

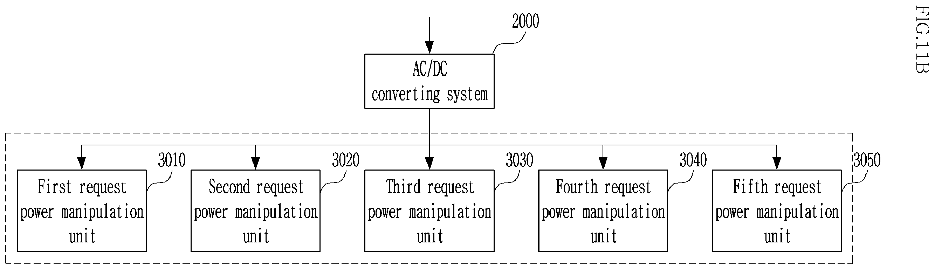

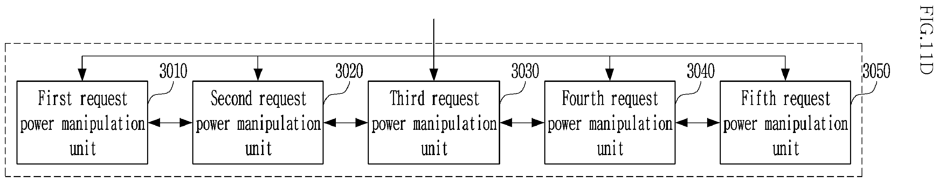

FIG. 4B is a diagram illustrating a case in which several AC/DC converting systems 2000 are constructed as in an AC/DC converting system b in FIG. 10A, several request power manipulation units 3000 are constructed in the AC/DC converting system 2000 as in a request power manipulation unit b in FIG. 11B, and the first to fourth request power manipulation units 3010, 3020, 3030, and 3040 can mutually deliver power as in a request power manipulation unit d in FIG. 11D.

Furthermore, FIG. 4B is a diagram illustrating a case in which the request power manipulation unit 3000 is separately present in each of the first to fifth AC/DC converting systems 2010, 2020, 2030, 2040, and 2050 and the first to fifth AC/DC converting systems 2010, 2020, 2030, 2040, and 2050 and the request power manipulation units 3000 are constructed outside the vicinity of a parking lot, as in location a of the AC/DC converting system and the request power manipulation unit in FIG. 13A.

The first to fourth request power manipulation units 3010, 3020, 3030, and 3040 include the first DC/DC converter group 41 and the open circuit connection switch 3012. The first DC/DC converter group 41 includes only the current fixed type D/D 3011. All of the current fixed type D/Ds 3011 may supply charging speed (requested power) having the same size, but may supply charging speeds having different sizes. The charging speed (requested power) of each current fixed type D/D 3011 may be variously determined by considering a situation in a corresponding parking lot upon installation.

Furthermore, in FIG. 4B, an example in which the DC/DC converter group 40 of the first to fourth request power manipulation units 3010, 3020, 3030, and 3040 has the first DC/DC converter group 41 of FIG. 12A has been taken, but this is merely a construction according to an embodiment of the present disclosure. The DC/DC converter groups 40 of the request power manipulation units 3000 may be all the same or different from each other. This may be variously determined by considering a situation in a corresponding parking lot upon installation.

There are advantages in that a charging speed (requested power) can be provided in response to the selection of a charging wisher from slow charging to quick charging using DC power by variously constructing the current fixed type D/D 3011 of the first DC/DC converter group 41 and a charging system that has been previously constructed can be expanded by additionally installing the AC/DC converting system 2000 and the request power manipulation unit 3000 when the number of electric vehicles is increased.

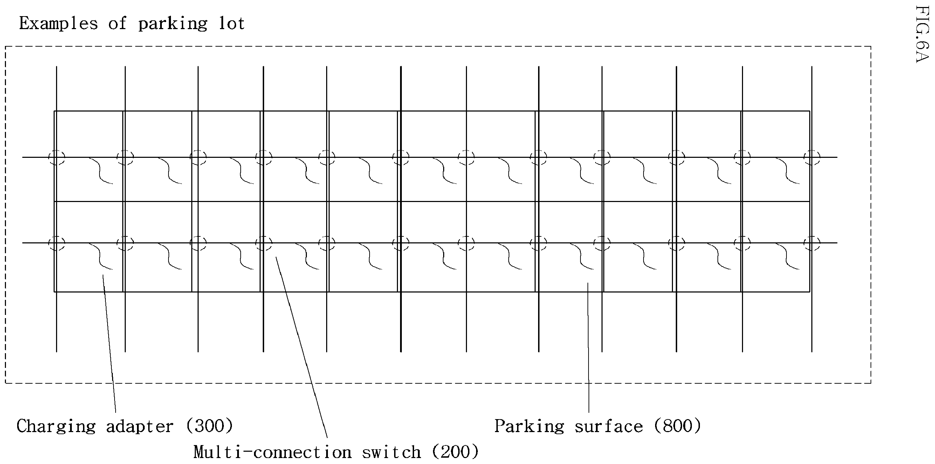

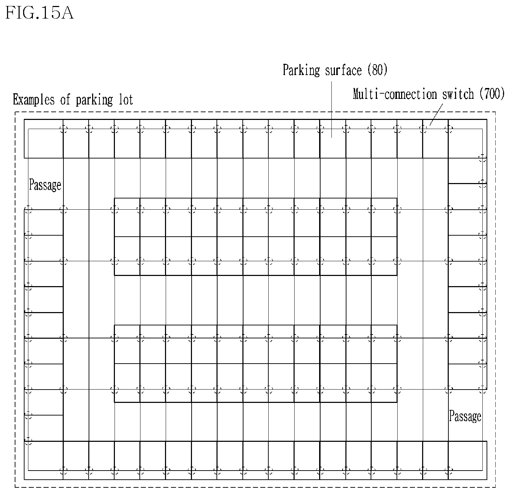

Furthermore, the embodiment is an embodiment according to the present disclosure illustrating a case in which the multi-connection switch 700 is constructed on the parking surface 80, as in the construction a of the multi-connection switch in the intra-parking lot power grid of FIG. 15A, and one charging adapter 5015 can charge one electric vehicle as in the charging adapter a in FIG. 6A.

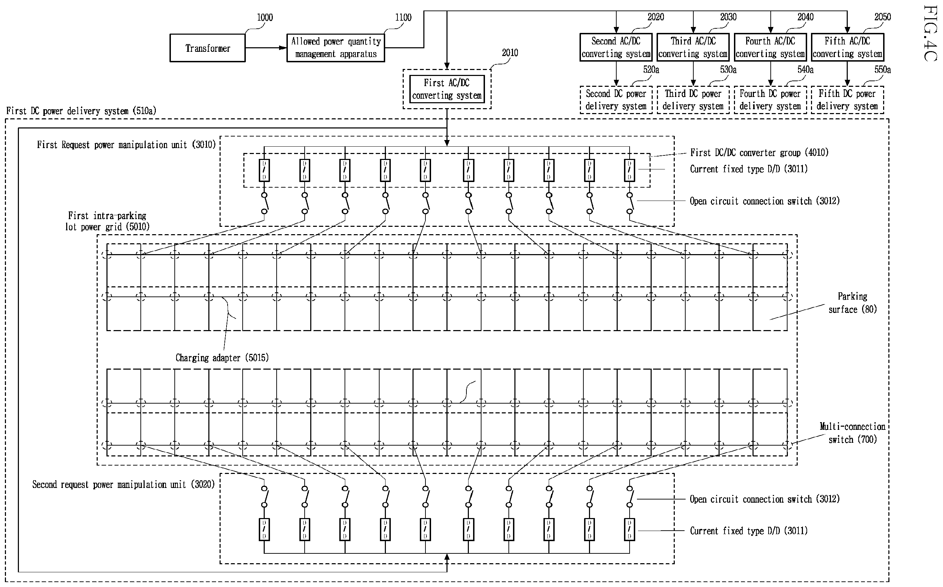

FIG. 4C represents, as an example, a general structure from the transformer 1000 to the charging adapter 5015 at the place where the charging target vehicle 9000 is disposed according to an embodiment of the present disclosure. A charging system for an electric vehicle may be constructed to include the transformer 1000, the allowed power quantity management apparatus 1100, the AC/DC converting system 2000, and the DC power delivery system 500a.

FIG. 4C exemplifies a case in which power grids have been separated from each other.

If a transformer that has been previously installed can handle power used for charging, power may be supplied by using the corresponding transformer without separate installation instead of the transformer 1000 in FIG. 4C. If a transformer that has been previously installed cannot handle power used for charging, power may be supplied through the installation of an additional transformer 1000.

In FIG. 4C, one AC/DC converting system 2000 may be constructed as in FIG. 10A or a plurality of AC/DC converting systems 2000 may be constructed as in FIG. 10B. For example, the AC/DC converting system 2000 may be constructed in a plural number like first to fifth AC/DC converting systems 2010, 2020, 2030, 2040, and 2050 and may be constructed as one AC/DC converting system.

In the embodiment, an example in which five AC/DC converting systems 2000 have been constructed as in FIG. 10A has been taken, but this is merely an example according to an embodiment of the present disclosure and the number of AC/DC converting systems may be greater or smaller than 5.

Furthermore, in the embodiment of FIG. 4C, the DC power delivery system 500a is connected to the AC/DC converting system 2000 in a one-to-one way, but this is merely an example according to an embodiment of the present disclosure. The DC power delivery system 500a may be connected to the AC/DC converting system 2000 in a one-to-many way.

In FIG. 4C, the first AC/DC converting system 2010 and the first DC power delivery system 510a, among the first to fifth AC/DC converting systems 2010, 2020, 2030, 2040, and 2050 and the first to fifth DC power delivery systems 510a, 520a, 530a, 540a, and 550a, have been described as an example.

Power that may be supplied by the first to fifth AC/DC converting systems 2010, 2020, 2030, 2040, and 2050 may be all the same. The amounts of power which may be supplied by the systems may be different from each other. Furthermore, the sizes of DC power of the request power manipulation units 3000 included in the first to fifth DC power delivery systems 510a, 520a, 530a, 540a, and 550a, respectively, may be all the same. The request power manipulation units 3000 may be constructed by using DC power having different sizes, if necessary.

In particular, in this case, the sizes of charging voltages in power, which are used electric vehicles that are sold on the market, may be various. Accordingly, the sizes of the charging voltages may be variously constructed when a system is constructed, if necessary. For example, if the sizes of charging voltages for electric vehicles are 800 V and 400 V, a system may be constructed by considering the ratio of the number of electric vehicles in which the two voltages are used.

The first and second request power manipulation units 3010 and 3020 include the first DC/DC converter group 41 and the open circuit connection switch 3012. The first DC/DC converter group 41 includes only the current fixed type D/Ds 3011. All of the current fixed type D/Ds 3011 may supply charging speeds (requested power) having the same size, but may supply charging speeds having different sizes. The charging speed (requested power) of each current fixed type D/D 3011 may be variously determined by considering a situation in a corresponding parking lot upon installation.

Furthermore, in FIG. 4C, an example in which all of the DC/DC converter groups 40 of the first and second request power manipulation units 3010 and 3020 have a first DC/DC converter group 4010 in FIG. 12A has been taken, but this is merely a construction according to an embodiment of the present disclosure. The DC/DC converter groups 40 of the request power manipulation units 3000 may be all the same or different from each other. This may be variously determined by considering a situation in a corresponding parking lot upon installation.

There is an advantage in that a charging speed (requested power) can be provided from slow charging to quick charging using DC power in response to the selection of a charging wisher by variously constructing the current fixed type D/D 3011 of the first DC/DC converter group 41. There is an advantage in that a charging system that has been previously constructed can be expanded by additionally installing the AC/DC converting system 2000 and the request power manipulation unit 3000 when the number of electric vehicles is increased.

Furthermore, detailed structures of the request power manipulation unit 3000 of each of the first to fifth DC power delivery systems 510a, 520a, 530a, 540a, and 550a and the intra-parking lot power grid 5000 may be the same as detailed structures of the first request power manipulation unit 3010 and the first intra-parking lot power grid 5010, but may be differently constructed, if necessary.

The power grid 5000 may include a plurality of separated power grids. Referring to FIG. 4C, the first intra-parking lot power grid 5010 may include two separated power grids.

FIG. 4C is a diagram illustrating a case in which several AC/DC converting systems 2000 are constructed as in the AC/DC converting system a in FIG. 10A, several request power manipulation units 3000 are constructed in the AC/DC converting system 2000 as in the request power manipulation unit b in FIG. 11B, and the first and second request power manipulation units 3010 and 3020 cannot deliver power unlike in FIG. 4B.

Furthermore, FIG. 4C is a diagram illustrating a case in which the request power manipulation unit 3000 is separately present in each of the first to fifth AC/DC converting systems 2010, 2020, 2030, 2040, and 2050 and the first to fifth AC/DC converting systems 2010, 2020, 2030, 2040, and 2050 and the request power manipulation unit 3000 are constructed outside the vicinity of a parking lot, as in the location a of the AC/DC converting system and the request power manipulation unit in FIG. 13A.

Furthermore, the embodiment is an embodiment according to the present disclosure illustrating a case in which the multi-connection switch 700 is constructed only on the parking surface 80, as in a construction a of the multi-connection switch in an intra-parking lot power grid of FIG. 15A, and one charging adapter 5015 can charge one electric vehicle as in the charging adapter a in FIG. 6A.

Meanwhile, multiple edges which may form a contact to which three or more electric wires are selectively connected may be formed in the power grid 5000. The multi-connection switch 700 may be disposed at a selected edge among the edges. The multi-connection switches 700 may be connected to three or more electric wires of the power grid 5000. A connection path may be selectively formed by connecting some of the three or more electric wires.

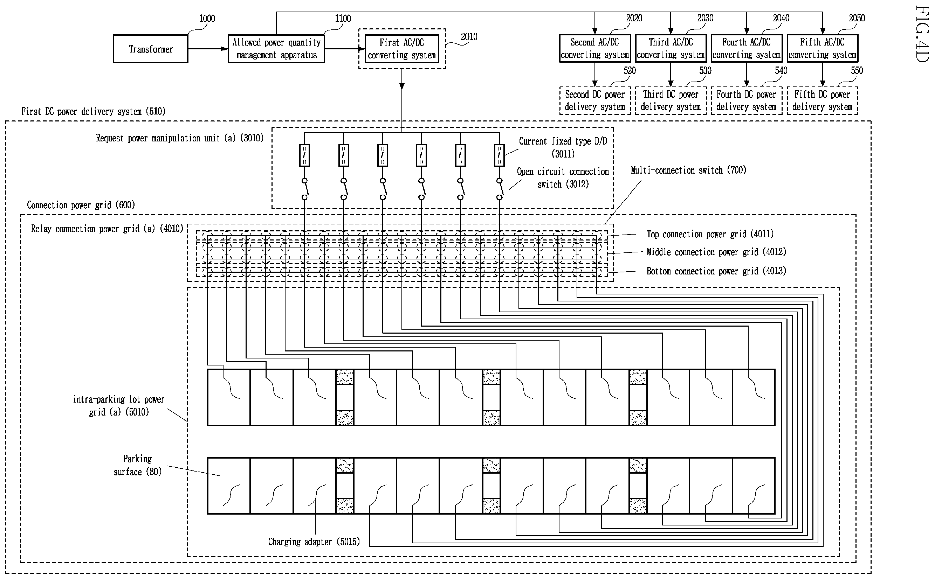

FIG. 4D is similar to FIG. 4A, but is a diagram illustrating an example of a case in which the multi-connection switch 700 is not present in a part or the entire space of the intra-parking lot power grid 5000 and a path is formed in the relay connection power grid 4000 disposed in a separate space as still another embodiment. Charging adapters 5015 installed in respective parking surfaces 80 that are present in a parking space in which the multi-connection switches 700 are not present are connected to electrical wires for supplying power through the formed path, respectively.

All of the electrical wires gather at a separate space for forming a path. Each of the electrical wires is connected to the relay connection power grid 4000 (or may be variously represented as a complex panel board or a multilateral panel board) including the multi-connection switches 700 and the electrical wires. The relay connection power grid 4000 forms a path from a charger to the parking surface 80 in response to a request from a charging wisher. Power that is supplied by the request power manipulation unit 3000 is supplied up to the parking surface 80 by the path formed in the relay connection power grid 4000.

A shape of the relay connection power grid 4000 may be constructed in various shapes, such as a quadrangle and a trapezoid, and may be different depending of a form of a space in which the relay connection power grid 4000 is installed and a construction of a multi-connection switch for forming a path.

FIG. 5A is a diagram illustrating an example of an implementation of the multi-connection switch 700.

Referring to FIG. 5A, the multi-connection switch 700 may include sockets 1410 to which different electrical wires are connected, internal wirings 1500 that connect the sockets 1410, a plurality of switches 1600 disposed in at least some of the internal wirings 1500, and a controller 1420 that selectively forms one or more connection paths to which two electrical wires, among a plurality of electric wires 750, 760, 770, and 780 connected to the multi-connection switch 700, are connected by operating the plurality of switches 1600.

The multi-connection switch 700 may include the switches 1600 for forming paths for the electrical wires, demultiplexers 1430 for controlling the switches 1600, LEDs 1440 for displaying paths being used, the controller 1420 that controls the demultiplexer 1430 and plays a role to communicate with the main control apparatus 6000, a communication line for communication with the main control apparatus 6000, and a power line and power unit for supplying power to the controller 1420. The LED 1440 for displaying a connection path may be provided as a number corresponding to the plurality of switches 1600.

Referring to FIG. 5A, the electrical wires 750, 760, 770, and 780 that are connected to the multi-connection switch 700 from the outside are connected to the internal wirings 1500 of the multi-connection switch 700. Three internal wirings (1510, 1520, 1530), (1550, 1520, 1560), (1560, 1540, 1510), and (1530, 1540, 1550) may be connected to the electrical wires 750, 760, 770, and 780, respectively.

Referring to FIG. 5A, two switches 1600 may be disposed between the two sockets 1410. That is, two switches 1600 may be disposed per path (1510, 1520, 1530, 1540, 1550, or 1560) .

Each of the electrical wires 750, 760, 770, and 780 is connected the switch 1600 capable of selecting one of the three paths (1510, 1520, 1530), (1550, 1520, 1560), (1560, 1540, 1510), and (1530, 1540, 1550). Accordingly, the multi-connection switch 700 may form a total of six types of top-bottom (1520), left-right (1540), left-top (1510), left-bottom (1560), right-top (1530), and right-bottom (1550) paths depending on states of the switches 1600 connected to the respective electrical wires 750, 760, 770, and 780.

Furthermore, two paths may be formed to be not overlapped. Other switches that are connected to electrical wires connected when the six types of basic paths are formed and the three types of two paths are formed maintain an OFF state.

That is, when the state of another switch that is connected to an electrical wire becomes an ON state, there may be a problem in that power that is supplied through the electrical wire may be distributed to several paths, not one path. Accordingly, another switch that is connected to an electrical wire other than a switch that is used to form a path maintains the OFF state.

The external electrical wire 750 that is connected to a first socket 1410a is connected to a second socket 1410b and the external electrical wire 770 along the left-top (1510) path, is connected to a fourth socket 1410d and the external electrical wire 760 along the top-bottom (1520) path, and is connected to a third socket 1410c and the external electrical wire 780 along the right-top (1530) path.

The external electrical wire 770 that is connected to the second socket 1410b is connected to a first socket 1410a and the external electrical wire 750 along the left-top (1510) path, is connected to the third socket 1410c and the external electrical wire 780 along the left-right (1540) path, and is connected to the fourth socket 1410d and the external electrical wire 760 along the left-bottom (1560) path.

The external electrical wire 780 that is connected to the third socket 1410c is connected to the first socket 1410a and the external electrical wire 750 along the right-top (1530) path, is connected to the second socket 1410b and the external electrical wire 770 along the left-right (1540) path, and is connected to the fourth socket 1410d and the external electrical wire 760 along the right-bottom (1550) path.

The external electrical wire 760 that is connected to the fourth socket 1410d is connected to the first socket 1410a and the external electrical wire 750 along the top-bottom (1520) path, is connected to the third socket 1410c and the external electrical wire 780 along the right-bottom (1550) path, and is connected to the second socket 1410b and the external electrical wire 770 along the left-bottom (1560) path.

Meanwhile, when a voltage that is supplied through a power line is equal to an operating voltage of the controller 1420 or within an operating voltage range of the controller 1420, the power unit may be omitted. The LED 1440 may be omitted although the LED has been used to display a path that is being used.

Furthermore, various types of wired and wireless communication, such as USART, RS232, a CAN, a LAN, a LIN, WiFi, Bluetooth, and Zigbee, in addition to RS485 communication may be used as communication between the multi-connection switch 700 and the main control apparatus 6000.

An EV relay (DC contactor), etc. that is used in the charger of an electric vehicle may be used as the switch 1600. A separate switch suitable for the multi-connection switch 700 may be fabricated and used as the switch 1600. The switch 1600 may be selected based on an output voltage of the DC/DC converter that has been constructed in the request power manipulation unit 3000 and a maximum output current.

If the switch is made OFF in the state in which a high voltage and current flow, several problems may be caused in the switch because arc occurs. However, the charging system according to the present disclosure forms a path by previously controlling the multi-connection switch 700 before supplying power for charging, supplies the power by making ON the open circuit connection switch 3012 when the forming of the path is completed, and makes OFF the open circuit connection switch 3012 and releases the forming of the path after charging is completed. Accordingly, a problem, such as arc, can be prevented.

In FIG. 5A, the two switches are used in one path 1510, 1520, 1530, 1540, 1550, or 1560. Accordingly, if one switch breaks down in any path, a problem which may occur due to the breakdown of the switch can be prevented by controlling another switch.

According to an embodiment of the present disclosure, the switch 1600 may be controlled by using a device, such as the demultiplexer 1430. The multi-connection switch 700 is connected to the plurality of switches 1600 through control lines, and may include the plurality of demultiplexers 1430 for operating the switches 1600 under the control of the controller 1420.

As in FIG. 5C, a device, such as the demultiplexer 1430, may be omitted. The multi-connection switch 700 may be differently constructed depending on devices that are used to implement the multi-connection switch 700.

FIG. 5A is a diagram illustrating an embodiment according to the present disclosure. The multi-connection switch 700 may be variously implemented in addition to the illustrated construction.

FIG. 5B is a diagram illustrating an example in which only switches necessary to form paths are used in the construction of FIG. 5A. Referring to FIG. 5B, one switch 1600 may be disposed between two sockets 1410. That is, one switch 1600 may be disposed in one path 1510, 1520, 1530, 1540, 1550, or 1560.

In FIG. 5A, in order to prevent a problem such as breakdown, the switches have been additionally constructed within the multi-connection switch 700. If a system capable of preventing a breakdown problem or blocking a problem when the problem occurs is constructed in another place not the multi-connection switch 700, the switches may be constructed by only the number necessary to form paths as in FIG. 5B.

FIG. 5C is a diagram illustrating an example in which the demultiplexer 1430 has been omitted in the construction of FIG. 5B. The plurality of switches 1600 and the controller 1420 may be directly connected through control lines. The demultiplexer 1430 may be used if an I/O for controlling the switch 1600 by the controller 1420 is insufficient. If the I/O of the controller 1420 for controlling the switch 1600 is sufficient, the demultiplexer 1430 may be omitted as in FIG. 5C. Furthermore, if a switch control voltage level for operating the switch 1600 is different from the output voltage level of the I/O of the controller 1420, a circuit for operating the switch 1600 may be additionally constructed.

Furthermore, in FIGS. 5A to 5C, the sockets 1410a, 1410b, 1410c, and 1410d, the switch 1600, and electrical wires that are connected between the switches 1600 may be designed as a PCB power distribution. Separate electrical wires may be directly connected and used through soldering, etc., not the PCB power distribution, depending on the size of a current that flows into the electrical wires.

Each of the charging adapters 5015 may be disposed between two multi-connection switches 700. Furthermore, a plurality of charging adapters 5015 may be disposed between the two multi-connection switches 700.

FIG. 5D is a diagram illustrating an example of a multi-connection switch structure which has been constructed so that the number of switches and the number of paths are identically constructed and two lines can be connected according to still another embodiment of the present disclosure. The plurality of switches 1600 and the controller 1420 may be directly connected through control lines. Furthermore, in FIG. 13D, since the size of a current that flows into the multi-connection switch 700 is large, the plurality of switches 1600 and the controller 1420 may be constructed by using a separate line, not a PCB power distribution. In order to reduce contact resistance which occurs when the plurality of switches 1600 is connected, the plurality of switches 1600 and the controller 1420 may be connected in a bus bar type. FIG. 13D illustrates the inside of the multi-connection switch 700 that has been constructed by using a copper bus bar. The arrangement of the multi-connection switch 700 is merely an example according to the present disclosure and may be differently disposed, but may be constructed by using different types of materials capable of reducing contact resistance, not the copper bus bar.

Furthermore, in order to reduce contact resistance which occurs when the electrical wire and the copper bus bar are connected, various methods of extending a contact area by filling a space between the electrical wire and the copper bus bar with a metal filler may be used. For example, a method of lowering contact resistance by instantly spraying lead or an alloy (amalgam, etc.) having a relatively low melting point onto an empty space between the electrical wire and the copper bar that are brought into contact with each other at high pressure may be used.

FIG. 6A is a diagram illustrating an example in which if one charging adapter 5015 is installed in one parking surface 80 according to an embodiment of the present disclosure. For example, if a total number of parking surfaces 80 of a parking lot in which a charging system according to the present disclosure is constructed is 500, 500 charging adapters 5015 may be installed.

The example is a case in which charging is possible in all the parking surfaces 80. If some area of a specific floor or parking lot is constructed as a space for charging an electric vehicle according to circumstances, the number of charging adapters 5015 may be smaller than the number of parking surfaces 80. For example, if the number of parking surfaces 80 in all parking lots is 500, but the number of parking surfaces 80 for charging an electric vehicle is 200, 200 charging adapters 5015 may be installed. That is, when a charging system according to the present disclosure is constructed, the charging adapter 5015 may be differently constructed according to circumstances of a corresponding parking lot.

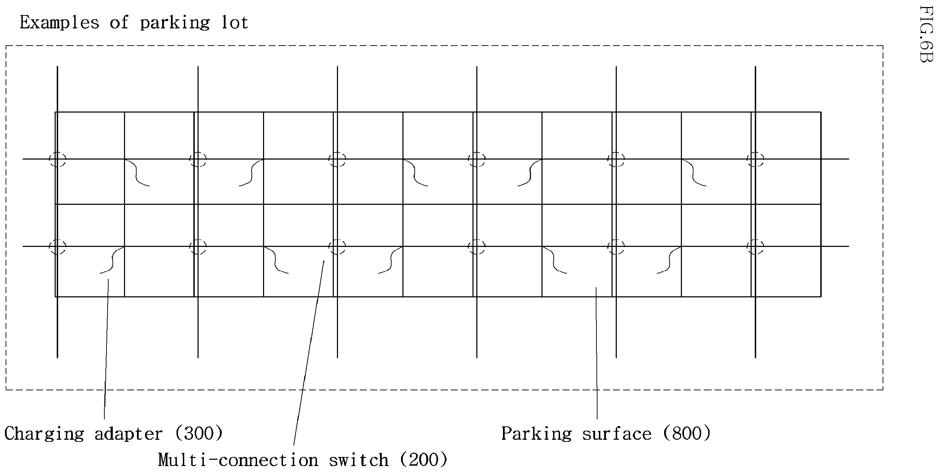

FIG. 6B is a diagram illustrating an example if one charging adapter 5015 is installed between two parking surfaces 80 according to an embodiment of the present disclosure. One charging adapter 5015 may be used to charge any one electric vehicle in the two parking surfaces 80.

FIG. 6B is a diagram illustrating an example of a case in which one charging adapter 5015 is installed between two parking surfaces 80, but this illustrates a construction according to an embodiment of the present disclosure. One charging adapter 5015 may handle a larger number of parking surfaces 80.

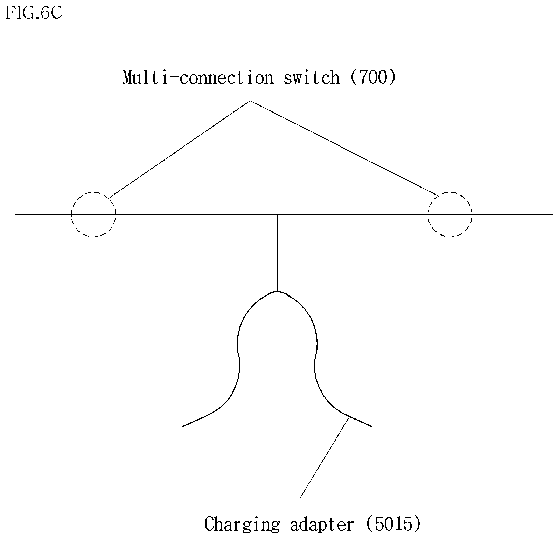

Referring to FIG. 6C, the charging adapter 5015 is connected between two multi-connection switches 700 through one line, but several charging adapters 5015 may be connected. In this case, the number of charging adapters 5015 is several. However, one charging adapter 5015, among the several charging adapters 5015, is actually used for charging, and other charging adapters 5015 may not be used for charging. In this case, the number of charging adapters 5015 is considered to be one although several charging adapters are indicated.

For example, if two charging adapters 5015 are physically connected between two multi-connection switches 700 and are connected to different charging target vehicles 9000, any one of the charging target vehicles 9000 may be first charged based on a charging end time set by each charging wisher, and the other charging target vehicle 9000 may be charged when the charging of the charging target vehicle 9000 is completed or the charging end time is reached. That is, although the charging adapter 5015 is connected to all of the charging target vehicles 9000, the charging target vehicles 9000 may be charged one by one according to their priorities.

Meanwhile, the charging adapters 5015 may be provided in a way to be detachable from the power grid 5000. For example, the charging adapters 5015 may be provided in a way to be detachable from a socket of the power grid 5000. A charging wisher may carry a charging adapter that is matched with a charging protocol of his or her electric vehicle in a trunk, etc., and may use the charging adapter by connecting the charging adapter to the power grid 5000.

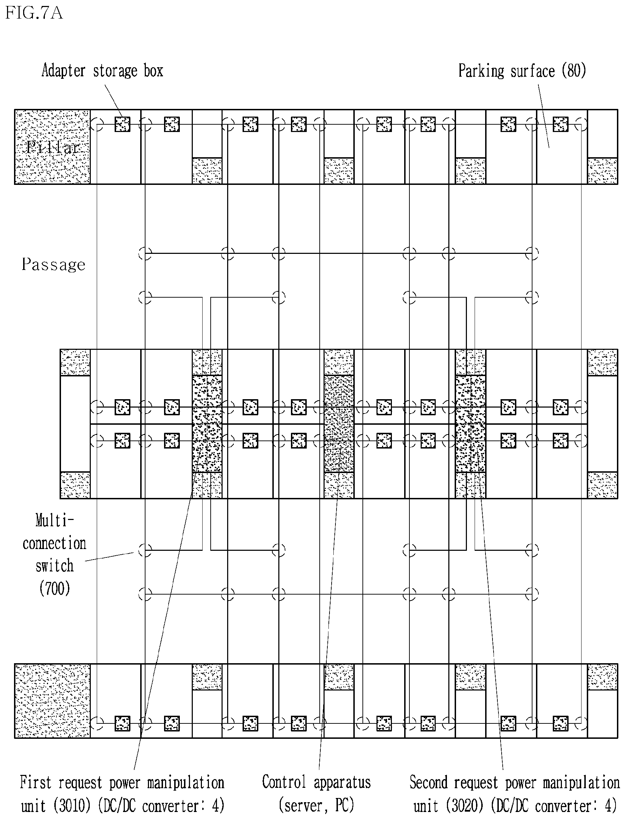

FIG. 7A is a diagram illustrating an example in which two request power manipulation units according to an embodiment of the present disclosure have been independently constructed. In a charging system for an electric vehicle illustrated in FIG. 7A and a parking lot including the charging system, only an electric vehicle can be parked in the parking lot. A total of parking surfaces 80 is 32 surfaces, the number of multi-connection switches 700 used is 60, the number of D/Ds of the first request power manipulation unit 3010 is 4, and the number of D/Ds of the second request power manipulation unit 3020 is 4. The length of an electrical wire that is used to form the intra-parking lot power grid 5000 is about 998 m. The number of multi-connection switches 700 that is necessary to form a path at an arbitrary point is 4 on average, and is a minimum of about 2 to a maximum of about 6.

Furthermore, the multi-connection switch 700 is basically installed on the parking surface. However, in order to increase the number of cases for forming an optimum path, multi-connection switch 700 may be additionally installed on a location, such as a passage. In FIG. 7A, a total of 12 multi-connection switches 700 have been additionally installed to form paths.

The parking lot has been constructed to be 2.3 m X 5.0 m, that is, minimum criteria for a common type parking unit section and to have a 6-meter road and a 0.5-meter pillar according to right-angled parking criterion. This is merely one construction according to an embodiment of the present disclosure. Corresponding lengths of a parking lot may be changed according to criteria at the time of design. The parking lot may be designed according to minimum criteria for an extension type parking unit section not the minimum criteria for the common type parking unit section or may be designed greater than the minimum criteria for the common type parking unit section.

In order to measure a voltage drop according to the length of electrical wires, a voltage drop that occurs in the relay switch within the multi-connection switch 700, and a voltage drop attributable to contact resistance that occurs when the electrical wire and the multi-connection switch 700 are coupled, a total of three types of experiments were performed. The experiments were performed five times by using a 25SQ electrical wire and a ring type compression terminal, a 100SQ electrical wire and a ring type compression terminal, and a 100SQ electrical wire and a copper bus bar, and the voltage drops that occurred on average in the five experiments were measured in detail.

**[Table 1]**

| | Ring | | Terminal | | Compressed part | |
|---|---|---|---|---|---|---|
| | Internal diameter | External diameter | Total length | Length | Internal diameter | External diameter |
| 25SQ electrical wire and ring type compression terminal used | 8.5 mm | 16 mm | 32 mm | 11.5 mm | 7.5 mm | 10 mm |
| 100SQ electrical wire and ring type compression terminal used | 12.9 mm | 24 mm | 49.5 mm | 19.5 mm | 15.6 mm | 20 mm |
| 100SQ electrical wire and copper bus bar used | 20x3 mm² | | | | | |

In the first experiment, a charging system using a three-wheel electric vehicle supplies a current of 15.5 A by using the 25SQ electrical wire and the ring type compression terminal. A measured voltage drop attributable to the electrical wire was measured as 0.01 V/m on average, and a voltage drop that occurred in one multi-connection switch 700 was measured as 0.05 V on average. Furthermore, when the 25SQ electrical wire was connected to one multi-connection switch 700, contact resistance of 0.0419 Q was generated, and a voltage drop measured accordingly was 0.65 V on average. A voltage drop per 25 m was measured as 0.94 V on average.

**[Table 2]**

| | | | | | | |
|---|---|---|---|---|---|---|
| 25SQ ring type compression terminal | Distance | | 25 m | 50 m | 75 m | 100 m |
| | Charger | DC output voltage | 79.0 V | 80.0 V | 80.9 V | 81.7 V |
| | | DC output current | 15.5 A | 15.5 A | 15.5 A | 15.5 A |
| | | Operating mode (CC/CV) | CC | CC | CC | CC |
| | Multi-connection switch | Front voltage | 78.19 V | 78.15 V | 78.06 V | 78.03 V |
| | | Back voltage | 78.14 V | 78.09 V | 78.01 V | 77.99 V |

In the second experiment, a charging system using an electric vehicle the charger supplied a current of 125 A by using the 100SQ electrical wire and the ring type compression terminal, a measured voltage drop according to the electrical wire was measured as 0.02 V/m on average, and a voltage drop that occurred in one multi-connection switch 700 was measured as 0.05 V on average. Furthermore, when the 100SQ electrical wire is connected to one multi-connection switch 700, contact resistance of 0.0204 Q was generated, and a voltage drop measured accordingly was measured as 2.55 V on average. A voltage drop per 25 m was measured as 3.1 V on average.

**[Table 3]**

| | | | | | | |
|---|---|---|---|---|---|---|
| 100SQ ring type compression terminal | Distance | | 25 m | 50 m | 75 m | 100 m |
| | Charger | DC output voltage | 388.4 V | 391.5 V | 394.7 V | 397.8 V |
| | | DC output current | 125 A | 125 A | 125 A | 125 A |
| | | Operating mode (CC/CV) | CC | CC | CC | CC |
| | Multi-connection switch | Front voltage | 385.29 V | 385.22 V | 385.04 V | 384.85 V |
| | | Back voltage | 385.24 V | 385.16 V | 384.99 V | 384.81 V |

In the third experiment, a charging system using a charger for an electric vehicle supplied a current of 125 A by using the 100SQ electrical wire and the copper bus bar. A measured voltage drop according to the electrical wire was measured as 0.02 V/m on average. A voltage drop that occurred in one multi-connection switch 700 was measured as 0.05 V on average. Furthermore, when the 100SQ electrical wire was connected to one multi-connection switch 700, contact resistance of 0.0105 Q was generated, and a voltage drop measured accordingly was measured as 1.31 V on average. A voltage drop per 25 m was measured as 1.86 V on average. The contact resistance may be different depending on the thickness of an electrical wire and a contact area of a compression terminal.

**[Table 4]**

| | | | | | | |
|---|---|---|---|---|---|---|
| 100SQ copper bus bar | Distance | | 25 m | 50 m | 75 m | 100 m |
| | Charger | DC output voltage | 390.1 V | 391.7 V | 393.6 V | 395.4 V |
| | | DC output current | 125 A | 125 A | 125 A | 125 A |
| | | Operating mode (CC/CV) | CC | CC | CC | CC |
| | Multi-connection switch | Front voltage | 388.25 V | 388.04 V | 387.52 V | 387.19 V |
| | | Back voltage | 388.19 V | 387.99 V | 387.47 V | 387.14 V |

Furthermore, an average length of an electrical wire that is used to form a path is a minimum of 8 m to a maximum of 25 m, and each relay has a voltage drop of 0.05 V in about 0.16 V to about 0.5 V. A voltage drop attributable to the multi-connection switch 700, a voltage drop attributable to the length of the electrical wire, and a voltage drop attributable to the relay were measured to a level in which the voltage drop can be sufficiently compensated for.

Furthermore, in the example, the parking lot may be a parking lot in a multiplex house, such as an apartment or a villa, a pay/free parking lot, a public parking lot, a parking lot in a service area, a commercial charging station, etc. If a charging system is installed in an outdoor parking lot, the charging system may be constructed by separately adding new renewable energy generation, such as solar energy generation, in addition to the charging system according to an embodiment of the present disclosure.

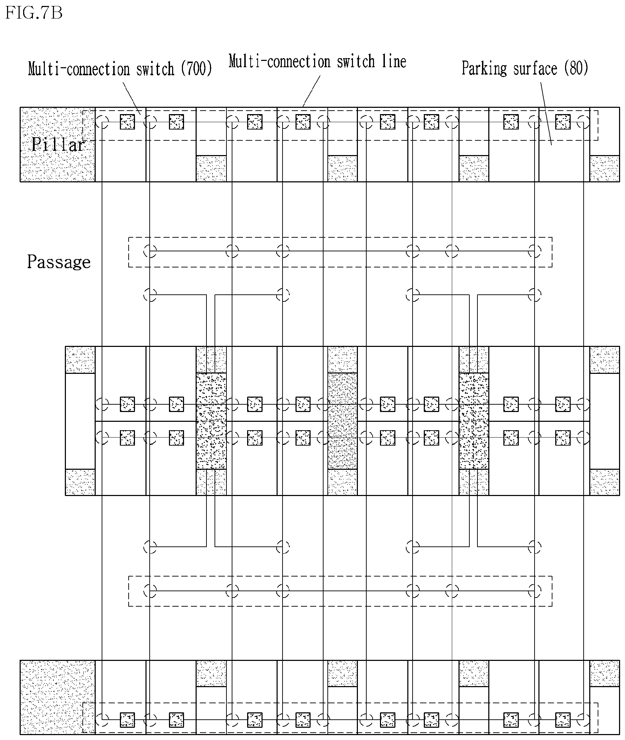

FIG. 7B is a diagram illustrating an example of a construction in which the multi-connection switches 700 disposed in adjacent parking surfaces according to an embodiment of the present disclosure are bound by one line and managed as a multi-connection switch line unit. In the case of FIG. 7B, since the adjacent multi-connection switches 700 are horizontally disposed, one horizontal line is bound and managed as one multi-connection switch line. In FIG. 7B, a maximum of 32 multi-connection switch lines may be bound and used as one line for smooth communication although the multi-connection switch lines are adjacent to each other. In the case of the multi-connection switch 700 that is disposed in a passage, adjacent multi-connection switches 700 are bound and managed as one line, and corresponding multi-connection switch lines form a path or the forming of a path by the multi-connection switch lines is released by controlling the multi-connection switches 700 through communication with a control apparatus (a server, a PC, etc.). It has been said that a maximum of the multi-connection switch lines is 32, but this is merely an example according to an embodiment and the number of multi-connection switch lines may be greater or smaller than 32.

For the multi-connection switch line, various methods for wired communication or wireless communication, such as RS485, P-NET, R-NET, PLC, a CAN, a LAN, a LIN, Bluetooth, Zigbee, and Beacon, may be used as a communication method that is used for communication between the multi-connection switches 700 or communication with the multi-connection switch line and the control apparatus (a server or a PC) .

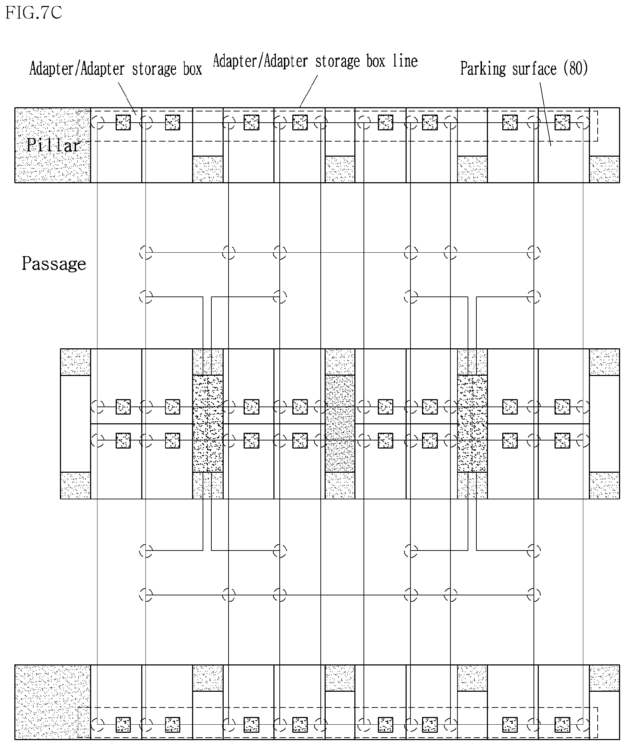

FIG. 7C is a diagram illustrating an example of a construction in which the adapters or the adapter storage boxes disposed on adjacent parking surfaces according to an embodiment of the present disclosure are bound by one line and managed in an adapter or adapter storage box line unit.

If a charging system for an electric vehicle is constructed as in FIG. 7A, the adapters or the adapter storage boxes are installed on the parking surfaces, respectively, one by one. The adapter may be directly installed without the adapter storage box, but the adapter storage box constructed to include a separate adapter may be installed. The adapter or the adapter storage box may play a role to supply, to an electric vehicle, power supplied via a path that is formed by using the multi-connection switch 700 from a charger or to block the power.

The adapter or the adapter storage box consistently monitors electric vehicle battery information, etc. through a communication line of the adapter connected to the electric vehicle, and continuously exchanges communication, such as transmitting the electric vehicle battery information to the control apparatus (a server or a PC) . If an urgent situation occurs or a separate charging stop request, etc. is received, the adapter or the adapter storage box needs to rapidly exchange information with the control apparatus (a server or a PC) . In this case, in FIG. 7C, four adapters or adapter storage boxes are bound into one and manage in an adapter or adapter storage box line. Four adapters or adapter storage box lines have been described, but this is merely an example according to an embodiment and the number of adapters or adapter storage box lines may be greater or smaller than 4.

For the adapter or the adapter storage box line, various methods for wired communication or wireless communication, such as RS485, P-NET, R-NET, PLC, a CAN, a LAN, a LIN, Bluetooth, Zigbee, and Beacon, may be used as a communication method that is used for communication between the adapters or the adapter storage boxes or communication with the adapter or the adapter storage box line and the control apparatus (a server or a PC).

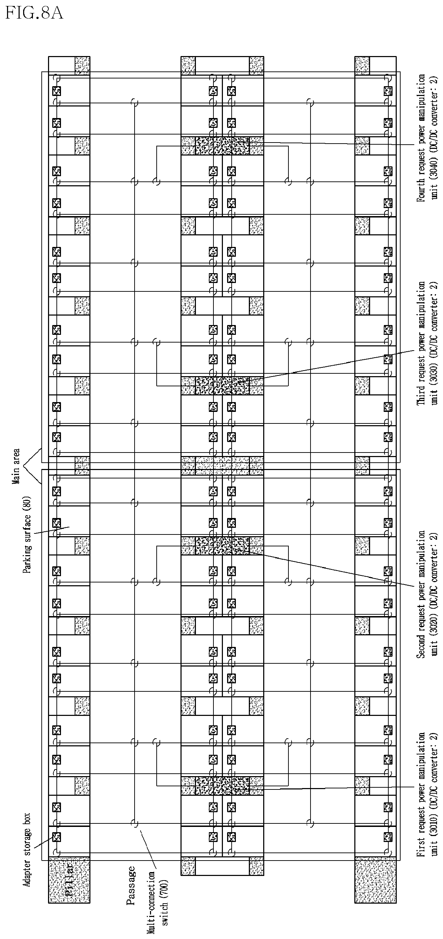

FIG. 8A is a diagram illustrating an example in which two request power manipulation units according to an embodiment of the present disclosure are independently constructed. In a charging system for an electric vehicle illustrated in FIG. 8A and a parking lot including the charging system, an electric vehicle and an internal combustion engine vehicle, etc. can be freely parked. A total number of parking surfaces 80 is 80 surfaces, the number of multi-connection switches 700 used is 116, the number of D/Ds of the first request power manipulation unit 3010 is two, the number of D/Ds of the second request power manipulation unit 3020 is two, the number of D/Ds of the third request power manipulation unit 3030 is two, and the number of D/Ds of the fourth request manipulation unit 3040 is two. The length of an electrical wire that is used to form the intra-parking lot power grid 5000 is about 2,315 m. The number of multi-connection switches 700 that are necessary to form a path at an arbitrary point is 6 on average 6, and is 2 to a minimum to 10 to a maximum.

Furthermore, the multi-connection switch 700 is basically installed on the parking surface, but may be additionally installed in a passage, etc. in order to increase the number of cases for forming an optimum path. In FIG. 8A, a total of 20 multi-connection switches 700 have been additionally installed to form a path.

The parking lot has been constructed to be 2.3 m X 5.0 m, that is, minimum criteria for a common type parking unit section and to have a 6-meter road and a 0.5-meter pillar according to right-angled parking criterion. This is merely one construction according to an embodiment of the present disclosure. Corresponding lengths of a parking lot may be changed according to criteria at the time of design. The parking lot may be designed according to minimum criteria for an extension type parking unit section not the minimum criteria for the common type parking unit section or may be designed greater than the minimum criteria for the common type parking unit section.

Furthermore, in the example, the parking lot may be a parking lot in a multiplex house, such as an apartment or a villa, a pay/free parking lot, a public parking lot, a parking lot in a service area, a commercial charging station, etc. If a charging system is installed in an outdoor parking lot, the charging system may be constructed by separately adding new renewable energy generation, such as solar energy generation, in addition to the charging system according to an embodiment of the present disclosure.

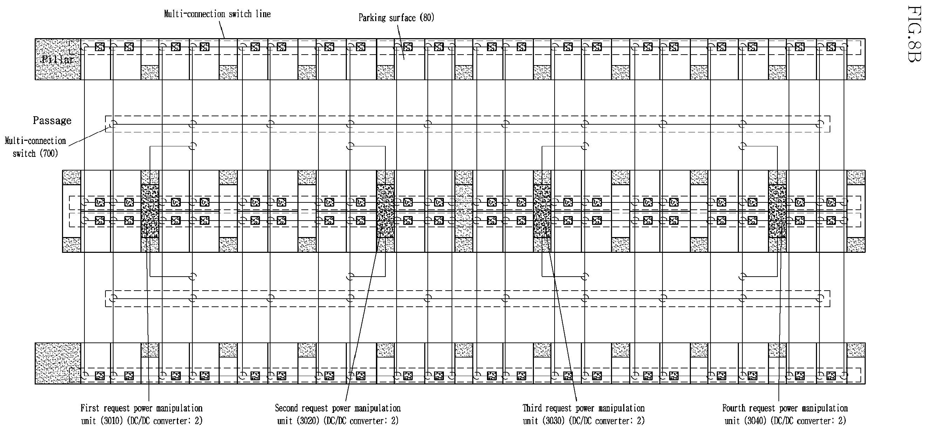

FIG. 8B is a diagram illustrating an example of a construction in which the multi-connection switches 700 disposed in adjacent parking surfaces according to an embodiment of the present disclosure are bound by one line and managed as a multi-connection switch line unit. In the case of FIG. 8B, since the adjacent multi-connection switches 700 are horizontally disposed, one horizontal line is bound and managed as one multi-connection switch line. In FIG. 8B, a maximum of 32 multi-connection switch lines may be bound and used as one line for smooth communication although the multi-connection switch lines are adjacent to each other. In the case of the multi-connection switch 700 that is disposed in a passage, adjacent multi-connection switches 700 are bound and managed as one line, and corresponding multi-connection switch lines form a path or the forming of a path by the multi-connection switch lines is released by controlling the multi-connection switches 700 through communication with a control apparatus (a server, a PC, etc.). It has been said that a maximum of the multi-connection switch lines is 32, but this is merely an example according to an embodiment and the number of multi-connection switch lines may be greater or smaller than 32.

For the multi-connection switch line, various methods for wired communication or wireless communication, such as RS485, P-NET, R-NET, PLC, a CAN, a LAN, a LIN, Bluetooth, Zigbee, and Beacon, may be used as a communication method that is used for communication between the multi-connection switches 700 or communication with the multi-connection switch line and the control apparatus (a server or a PC).

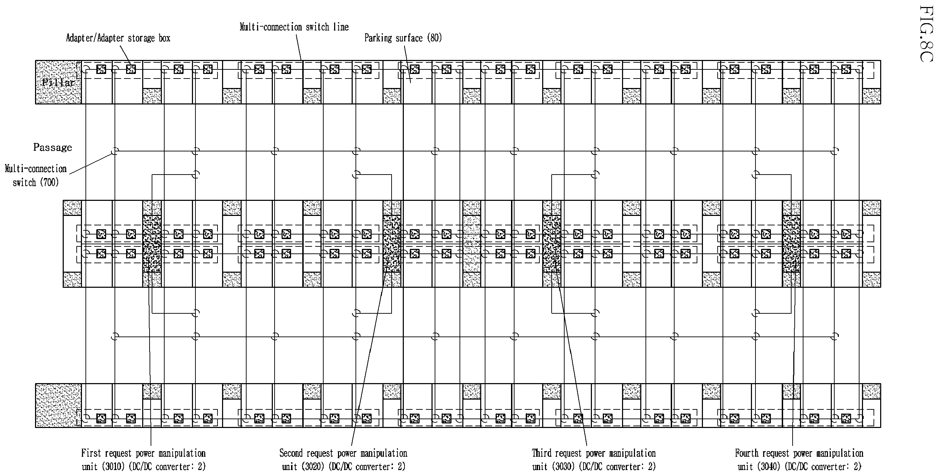

FIG. 8C is a diagram illustrating an example of a construction in which the adapters or the adapter storage boxes disposed in adjacent parking surfaces according to an embodiment of the present disclosure are bound by one line and managed in an adapter or adapter storage box line unit.

If a charging system for an electric vehicle is constructed as in FIG. 8A, the adapters or the adapter storage boxes are installed on the parking surfaces, respectively, one by one. The adapter may be directly installed without the adapter storage box, but the adapter storage box constructed to include a separate adapter may be installed. The adapter or the adapter storage box may play a role to supply power supplied via a path that is formed by using the multi-connection switch 700 from a charger to an electric vehicle or block the power.

The adapter or the adapter storage box consistently monitors electric vehicle battery information, etc. through a communication line of the adapter connected to the electric vehicle, and continuously exchanges communication, such as transmitting the electric vehicle battery information to the control apparatus (a server or a PC). If an urgent situation occurs or a separate charging stop request, etc. is received, the adapter or the adapter storage box needs to rapidly exchange information with the control apparatus (a server or a PC) . In this case, in FIG. 7C, four adapters or adapter storage boxes are bound into one and manage in an adapter or adapter storage box line. Four adapters or adapter storage box lines have been described, but this is merely an example according to an embodiment and the number of adapters or adapter storage box lines may be greater or smaller than 4.

For the adapter or the adapter storage box line, various methods for wired communication or wireless communication, such as RS485, P-NET, R-NET, PLC, a CAN, a LAN, a LIN, Bluetooth, Zigbee, and Beacon, may be used as a communication method that is used for communication between the adapters or the adapter storage boxes or communication with the adapter or the adapter storage box line and the control apparatus (a server or a PC).

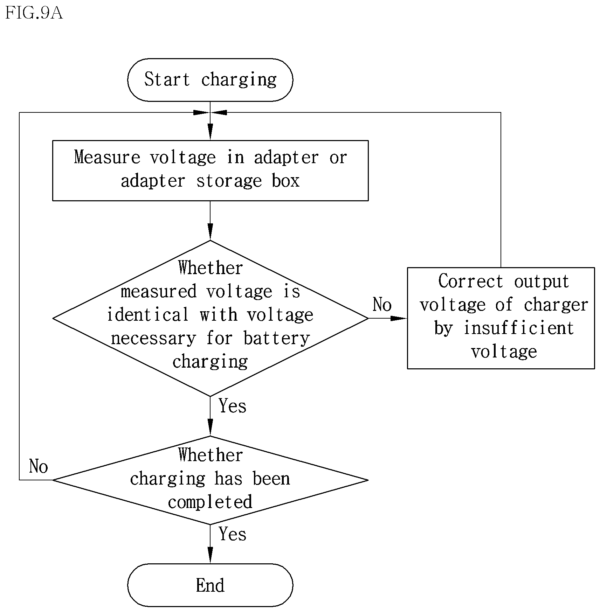

FIG. 9A is a diagram illustrating a flowchart of a method of compensating for a voltage drop that is different depending on the forming of a path in a charging system for an electric vehicle according to the present disclosure. When a charging path is formed and charging is started in the system, the system measures a voltage in the adapter or the adapter storage box. The system compares the measured voltage with a battery voltage that is necessary to charge an electric vehicle connected to the system. When the measured voltage is higher or lower than the battery voltage necessary for the charging, the charger adjusts an insufficient voltage by using the control apparatus (a server or a PC). The charger is constructed to adjust its output like 370 V to 410 V, for example, not a fixed voltage. When a voltage measured in the adapter or the adapter storage box is low, the charger supplies a voltage by adding an insufficient voltage to the voltage. When a voltage measured in the adapter or the adapter storage box is high, the charger supplies a voltage by subtracting an exceeded voltage from the voltage.

**A** voltage is continuously measured in the adapter or the adapter storage box until the charging is completed. When a change in the voltage occurs, the output voltage of the charger is continuously adjusted. When the charging is completed, the method of compensating for a voltage drop is terminated because the output voltage of the charger is no longer corrected.

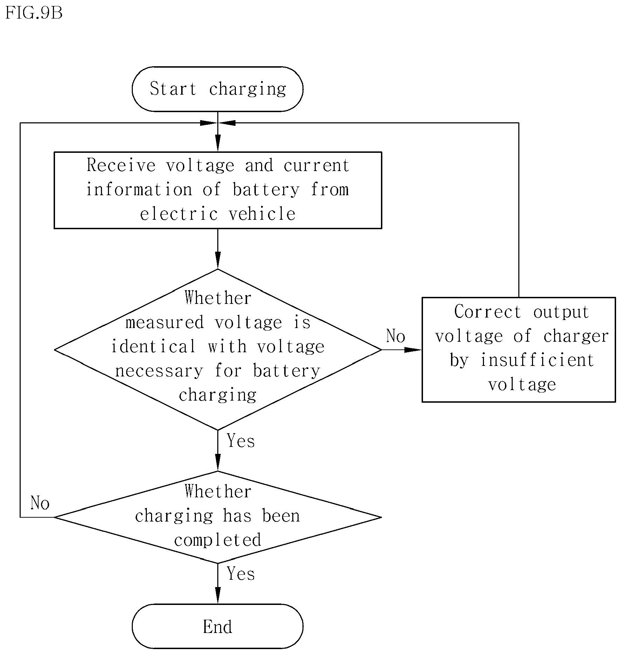

FIG. 9B is a diagram illustrating a flowchart of a method of compensating for a voltage drop that is different depending on the forming of a path in a charging system for an electric vehicle according to still another embodiment. When a charging path is formed and charging is started in the system, the system receives information of a battery, such as a voltage and a current, from an electric vehicle connected to the charging adapter, and compares the received voltage with a battery voltage necessary to charge the electric vehicle. When the received voltage is higher or lower than the battery voltage necessary for the charging, the charger adjusts an insufficient voltage by the control apparatus (a server or a PC).

The charger is constructed to adjust its output like 370 V to 410 V, for example, not a fixed voltage. When a voltage received from the battery is lower than a voltage necessary to charge the battery, the charger supplies a voltage by adding an insufficient voltage to the voltage. When the voltage received from the battery is higher than the voltage necessary to charge the battery, the charger supplies a voltage by subtracting an exceeded voltage from the voltage.

**A** voltage is continuously measured in the adapter or the adapter storage box until the charging is completed. When a change in the voltage occurs, the output voltage of the charger is continuously adjusted. When the charging is completed, the method of compensating for a voltage drop is terminated because the output voltage of the charger is no longer corrected.

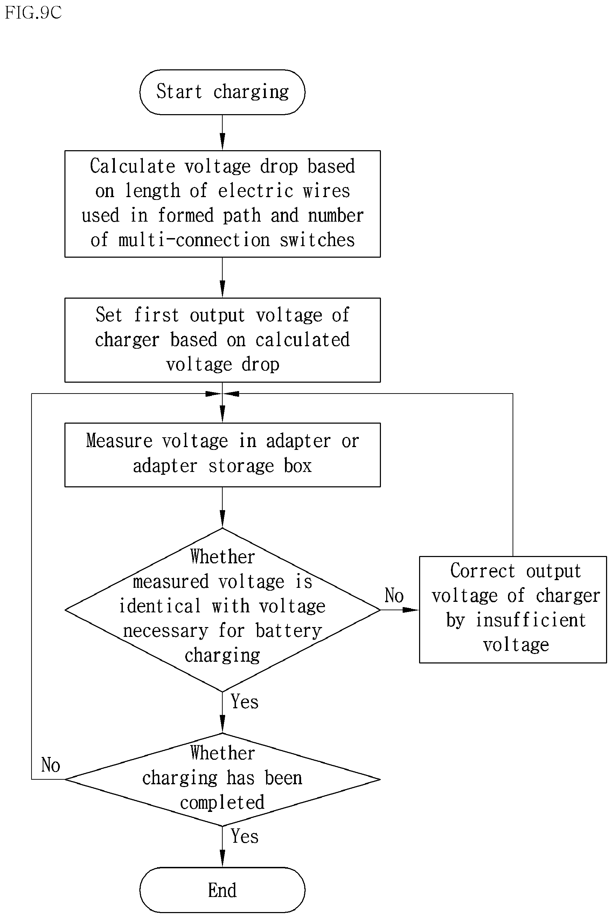

FIG. 9C is a diagram illustrating a flowchart of a method of compensating for a voltage drop that is different depending on the forming of a path in a charging system for an electric vehicle according to still another embodiment. When a charging path is formed and charging is started in the system, the system sets an output voltage that is supplied by the first charger by calculating a voltage drop based on the length of an electrical wire that is used in a formed path and the number of multi-connection switches.

The output voltage of the first charger is previously calculated, set, and supplied. Accordingly, there is an advantage in that a process of adjusting the output voltage of the charger based on a voltage drop can be performed more rapidly compared to FIG. 9A.

Thereafter, the system measures a voltage in the adapter or the adapter storage box, and compares the measured voltage with a battery voltage that is necessary to charge an electric vehicle connected to the system. When the measured voltage is higher or lower than the battery voltage necessary for the charging, the charger adjusts an insufficient voltage by using the control apparatus (a server or a PC) .

The charger is constructed to adjust its output like 370 V to 410 V, for example, not a fixed voltage. When a voltage measured in the adapter or the adapter storage box is low, the charger supplies a voltage by adding an insufficient voltage to the voltage. When a voltage measured in the adapter or the adapter storage box is high, the charger supplies a voltage by subtracting an exceeded voltage from the voltage.

A voltage is continuously measured in the adapter or the adapter storage box until the charging is completed. When a change in the voltage occurs, the output voltage of the charger is continuously adjusted. When the charging is completed, the method of compensating for a voltage drop is terminated because the output voltage of the charger is no longer corrected.

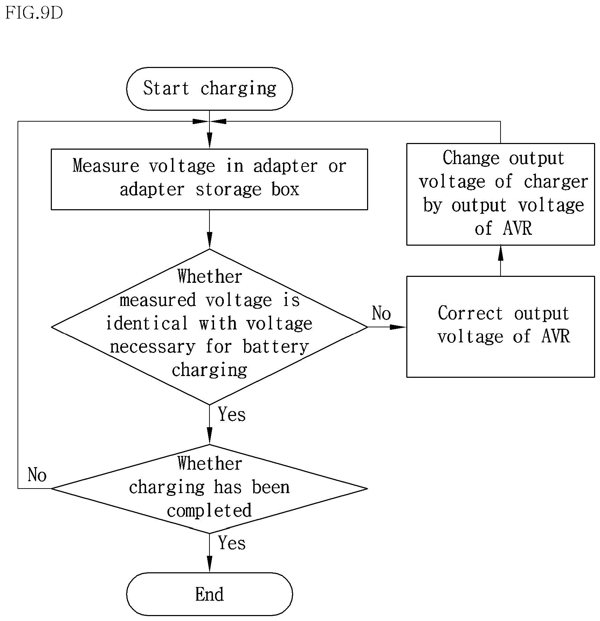

FIG. 9D is a diagram illustrating a flowchart of a method of compensating for a voltage drop that is different depending on the forming of a path in a charging system for an electric vehicle according to still another embodiment. When the charging system according to the present disclosure is constructed, basically, an automatic voltage regulator (AVR) is additionally constructed between the transformer and the AC/DC converting system 2000. Accordingly, a voltage drop can be compensated for by using the automatic voltage regulator (AVR), without compensating for a voltage drop in the charger as in FIG. 9A.

When a charging path is formed and charging is started in the system, the system measures a voltage in the adapter or the adapter storage box. The system compares the measured voltage with a battery voltage that is necessary to charge an electric vehicle connected to the system. When the measured voltage is higher or lower than the battery voltage necessary for the charging, the control apparatus (a server or a PC) transmits a control signal for an insufficient voltage to the automatic voltage regulator (AVR). The automatic voltage regulator (AVR) may adjust the size of an AC voltage that is output, in response to the control signal received from the control apparatus (a server or a PC). Accordingly, the size of a DC voltage that is converted in the AC/DC converting system 2000 and the size of the output voltage of the charger may be adjusted.

The output of the charger is not a fixed voltage. For example, if a voltage that is output by the automatic voltage regulator (AVR) is 380 V to 420 V, the output voltage of the AC/DC converting system 2000 is 370 V to 410 V, and the corresponding output of the charger is 370 V to 410 V. Accordingly, the charger may be constructed to adjust its output voltage based on the size of a varied voltage of the automatic voltage regulator (AVR) that is input to the charger via the AC/DC converting system 2000. When a voltage measured in the adapter or the adapter storage box is low, the automatic voltage regulator (AVR) supplies a voltage by adding an insufficient voltage to the voltage. When a voltage measured in the adapter or the adapter storage box is high, the automatic voltage regulator (AVR) supplies a voltage by subtracting an exceeded from the voltage.

Furthermore, in the embodiment, it has been described that the output voltage of the automatic voltage regulator (AVR) is 380 V to 420 V, the output voltage of the AC/DC converting system 2000 is 370 V to 410 V, and the output voltage of the charger is 370 V to 410 V, for example. These are merely numerical values for a description of the present disclosure, and the output voltages may be different, if necessary.

Furthermore, in the embodiment, it has been described that the automatic voltage regulator (AVR) has been constructed independently of the AC/DC converting system 2000 as an example. However, this is merely a construction according to the present disclosure, and the automatic voltage regulator (AVR) may be constructed to be included in the AC/DC converting system 2000.

A voltage is continuously measured in the adapter or the adapter storage box until the charging is completed. When a change in the voltage occurs, the output voltage of the automatic voltage regulator (AVR) is continuously adjusted. When the charging is completed, the method of compensating for a voltage drop is terminated because the output voltage of the automatic voltage regulator (AVR) is no longer corrected.

FIG. 10A illustrates an example of a case in which the AC/DC converting system 2000 includes five first to fifth AC/DC converting systems 2010, 2020, 2030, 2040, and 2050. FIG. 10B illustrates an example of a case in which one AC/DC converting system 2000 has been constructed according to an embodiment of the present disclosure. In the embodiment of FIG. 10A, although the five AC/DC converting systems 2000 have been constructed, AC/DC converting systems 2000 smaller or greater than 5 may be constructed according to circumstances.

The AC/DC converting system 2000 plays a role to primarily convert AC power input from the transformer 1000 into DC power to be supplied to the DC power delivery system 500a. If power input through the transformer 1000 from the outside is used without any change because the power is unstable, a problem, such as a malfunction or deterioration, may occur due to the unstable power. However, with the development of the technology, the use of multiple AC/DC converting systems 2000 by omitting a DC/DC converting system is not excluded.

AC power is primarily converted into DC power through the AC/DC converting system 2000. The converted DC power is stabilized by the DC/DC converter group 40 of the request power manipulation unit 3000 through DC/DC conversion, and may be used upon charging of the charging target vehicle 9000. Furthermore, the number of AC/DC converting systems 2000 needs to be equal to or smaller than the number of DC/DC converters of the DC/DC converter group 40.

All of the first to fifth AC/DC converting systems 2010, 2020, 2030, 2040, and 2050 in FIG. 10A may use DC power having the same size and may produce and use DC power having different sizes, if necessary.

For example, the first AC/DC converting system 2010 may convert AC power into DC 400 V and supply DC 400 V to the first DC power delivery system 510a. The second and third AC/DC converting systems 2020 and 2030 may convert AC power into DC 800 V and supply DC 800 V to the second and third DC power delivery systems 520a and 530a. The fourth and fifth AC/DC converting systems 2040 and 2050 may convert AC power into DC 1000 V and supply DC 1000 V to the fourth and fifth DC power delivery systems 540a and 540.

DC power of the first to fifth AC/DC converting systems 2010, 2020, 2030, 2040, and 2050 may be selected by considering a battery charging voltage of the charging target vehicle 9000 that is sold, in addition to 400 V, 800 V, and 1000 V described in the examples.

In FIG. 10B, the AC/DC converting system 2000 and the DC power delivery system 500a are illustrated as being separated from each other, but the AC/DC converting system 2000 may be included in the request power manipulation unit 3000 of the DC power delivery system 500a. In this case, in FIGS. 10A and 10B, a part indicated as the DC power delivery system 500a may be indicated by being replaced with the DC/DC converter group 40 of the request power manipulation unit 3000.

FIG. 11A illustrates an example of a case in which one request power manipulation unit 3000 of the DC power delivery system 500a has been constructed according to an embodiment of the present disclosure. FIG. 11B illustrates an example of a case in which the request power manipulation unit 3000 including five first to fifth request power manipulation units 3010, 3020, 3030, 3030, 3040, and 3050 has been constructed in one AC/DC converting system 2000. In the embodiment, the five request power manipulation units have been constructed, but the request power manipulation units greater or smaller than 5 may be constructed according to circumstances.

FIG. 11C illustrates a case in which the first to fifth request power manipulation units 3010, 3020, 3030, 3040, and 3050 included in the request power manipulation unit 3000 are connected to the first to fifth AC/DC converting systems 2010, 2020, 2030, 2040, and 2050, respectively, one by one according to an embodiment of the present disclosure. In the embodiment, the five request power manipulation units are connected to the five AC/DC converting systems, respectively, but the request power manipulation units and the AC/DC converting systems each being greater or smaller than 5 may be constructed according to circumstances.

Furthermore, in the embodiment, a case in which the first to fifth request power manipulation units 3010, 3020, 3030, 3040, and 3050 have been connected to the first to fifth AC/DC converting systems 2010, 2020, 2030, 2040, and 2050, respectively, one by one has been illustrated. However, as in the request power manipulation unit a of FIG. 11B, several request power manipulation units 3000 may be connected to one AC/DC converting system 2000.

FIG. 11D illustrates an example of a case in which the first to fifth request power manipulation units 3010, 3020, 3030, 3040, and 3050 can exchange power with each other. In the embodiment, the five request power manipulation units have been constructed, but the request power manipulation units greater or smaller than 5 may be constructed according to circumstances.

In FIGS. 11A, 11B, 11C, and 11D, a difference in the number of request power manipulation units 3000 that are connected to the AC/DC converting system 2000 may have the same meaning in which one request power manipulation unit 3000 may be present in one DC power delivery system 500a and several request power manipulation units 3000 are present in one DC power delivery system 500a.

Furthermore, FIG. 11D may have a meaning in which the request power manipulation units 3000 belonging to one DC power delivery system 500a may exchange power with each other, but may also have a meaning in which the request power manipulation units 3000 belonging to several DC power delivery systems 500a may exchange power with each other.

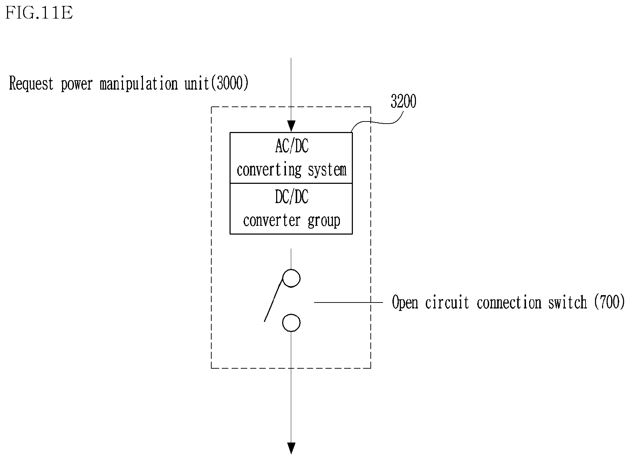

FIG. 11E is a diagram illustrating one AC/DC converting system and a DC/DC converter group 3200, that is, an example in which the AC/DC converting system 2000 is included and constructed in the request power manipulation unit 3000.

The AC/DC converting system 2000 and the request power manipulation unit 3000 in the detailed construction diagrams of the systems in FIGS. 4A, 4B, and 4C according to the present disclosure may be constructed as one like the AC/DC converting system and the DC/DC converter group 3200 which have been constructed as one as in FIG. 11E. The number of D/Ds of DC/DC converter groups 40 and the number of open circuit connection switches 3012 may each be 1 or several.

FIG. 12A illustrates a construction a of DC/DC converters. The request power manipulation unit 3000 may be constructed to include the current fixed type D/D 3011 and the open circuit connection switch 3012.

In the first DC/DC converter group 41, a charging wisher may select a charging speed (requested power) which may be provided by the current fixed type D/D 3011. The number of current fixed type D/Ds 3011 may be different depending on the number of vehicles which may be simultaneously charged in the charging system according to the present disclosure. All of the sizes of charging speeds (requested power) of the current fixed type D/Ds 3011 may be the same, but may be different.

In the first DC/DC converter group 41, when the current fixed type D/D 3011 corresponding to a charging speed (requested power) of a charging wisher is selected, the intra-parking lot power grid 5000 forms a proper path up to a location of the charging target vehicle 9000. When the forming of the path is completed, the charging speed (requested power) may be supplied by making ON the open circuit connection switch 3012 of the request power manipulation unit 3000.

Furthermore, there is an advantage in that a charging speed (requested power) can be provided from slow charging to quick charging using DC power by variously constructs D/Ds in response to the selection of a charging wisher. In this case, "slow" means that a power supply speed is relatively late, and may refer to 20 kW or 25 kW, etc., for example. Those skilled in the art may variously select slow charging according to circumstances.

If a path is formed when electricity flows, various electrical problems, such as a counter electromotive force, may occur. However, as in the embodiment, if a charging speed (requested power) is supplied by making ON the open circuit connection switch 3012 after a path is formed, there is an advantage in that such a problem can be prevented.

Furthermore, although not separately illustrated in the embodiment, as in the present disclosure, a device, such as a DC circuit breaker for blocking a fault current when a breakdown occurs while DC power is used, may be added. Devices capable of preventing an accident which may occur while DC power is used, such as a reverse current relay, an earthly world relay, and a remaining current device, may be additionally used.

Furthermore, in the embodiment, a D/D may include various design methods or constructions for DC/DC conversion in addition to DC/DC conversion (voltage boosting, a voltage drop, stabilization, etc.) according to an advantage in design or circumstances and AC/DC conversion after DC/AC conversion (voltage boosting or a voltage drop).

Most of the embodiments of the present disclosure have been described on the assumption that the current fixed type D/D 3011 and the current variable type D/D 3031 are separately constructed in the DC/DC converter group 40 of the request power manipulation unit 3000. However, the present disclosure is not limited to only a corresponding structure, and the current fixed type D/D and the current variable type D/D may be constructed as one including the AC/DC converting system 2000 as in FIG. 11E depending on the design when an actual system is constructed.

For example, if a total amount of electricity permitted of the AC/DC converting system 2000 is 2,500 kW, assuming that the number of simultaneously chargeable electric vehicles is 60, a total of 65 D/Ds including ten 100 kW class D/Ds, twenty 50 kW class D/Ds, and twenty 40 kW class D/Ds for quick charging, and fifteen 10 kW class D/Ds for slow charging including extra D/Ds are constructed, power when five 100 kW class D/Ds, twenty 50 kW class D/Ds, twenty 40 kW D/Ds, and fifteen 10 kW class D/Ds are used is 2,450 kW. Sixty electric vehicles can be charged by using sixty D/Ds.

As another embodiment, power when ten 100 kW class D/Ds, twenty 50 kW class D/Ds, ten 40 kW D/Ds, and ten 10 kW class D/Ds are used is 2,500 kW. The number of simultaneously chargeable electric vehicles is sixty, but only fifty electric vehicles can be charged because the amount of electricity permitted cannot exceed 2,500 kW.

Although the number of D/Ds greater than the number of simultaneously chargeable electric vehicles is constructed as in the embodiment, the number of D/Ds may be equal to or smaller than the number of simultaneously chargeable electric vehicles depending on the amount of power that is used in a system. The embodiment is an example of the number of simultaneously chargeable electric vehicles and the number of DC/DCs, and the present disclosure is not limited to a charging speed or the number of D/Ds mentioned in the embodiment. Furthermore, a distinction between quick charging and slow charging may be different depending on criteria in each country or an electric vehicle to be charged.

FIG. 12B illustrates a construction b of DC/DC converters. The request power manipulation unit 3000 may be constructed to include the current fixed type D/D 3011, the current fixed type D/D 3022 for a parallel connection, the open circuit connection switch 3012, and the multi-connection switch 700.

The second DC/DC converter group 42 in FIG. 12B may supply more various charging speeds (requested power) through a combination of the current fixed type D/D 3022 for a parallel connection to the current fixed type D/D 3011 by connecting the two D/Ds in parallel, in order to supplement the disadvantage in which only a charging speed (requested power) which may be supplied by the current fixed type D/D 3011 of FIG. 12A can be supplied.

Through control of the multi-connection switch 700, a charging speed (requested power) that is supplied by the current fixed type D/D 3022 for a parallel connection may be supplied by adding the charging speed to a charging speed (requested power) of the current fixed type D/D 3011.

The current fixed type D/D 3011 and the current fixed type D/D 3022 for a parallel connection may be constructed to supply charging speeds (requested power) having various sizes. There is an advantage in that a charging speed (requested power) that is desired by a charging wisher can be supplied as much as possible through a combination of charging speeds (requested power) that are variously constructed as described above.

The number of current fixed type D/Ds 3011 and the number of current fixed type D/Ds 3022 for a parallel connection may be different depending on the number of vehicles which can be simultaneously charged in a charging system according to the present disclosure.

In a charging process of FIG. 12B, the current fixed type D/D 3011 of the second DC/DC converter group 42 may be selected in response to a charging speed (requested power) of a charging wisher, or a charging speed (requested power) that is requested by a charging wisher may be selected through a combination of the current fixed type D/D 3011 and the current fixed type D/D 3022 for a parallel connection.

Next, the intra-parking lot power grid 5000 forms an optimal path up to a location of the charging target vehicle 9000. When the forming of the path is completed, the charging speed (requested power) may be supplied by making ON the open circuit connection switch 3012 of the request power manipulation unit 3000.

FIG. 12C illustrates a construction c of the DC/DC converter. The request power manipulation unit 3000 may be constructed to include a current variable type D/D 3031 and an open circuit connection switch 3012.

In the second DC/DC converter group 4030, a charging wisher may select a charging speed (requested power) within a maximum output current of the current variable type D/D 3031. The charging speed (requested power) of the charging wisher may be supplied by adjusting an output current of the current variable type D/D 3031.

The number of current variable type D/Ds 3031 may be different depending on the number of vehicles which may be simultaneously charged by a charging system according to the present disclosure. There is an advantage in that all charging speeds (requested power) that are requested by a charging wisher can be satisfied.

In the third DC/DC converter group 43, an output current of the current variable type D/D 3031 is varied depending on a charging speed (requested power) of a charging wisher. When an optimal path is formed from the intra-parking lot power grid 5000 to a location of the charging target vehicle 9000 and the forming of the path is completed, the charging speed (requested power) may be supplied by adjusting the open circuit connection switch 3012 of the request power manipulation unit 3000.

FIG. 12D illustrates a construction d of the DC/DC converter. The request power manipulation unit 3000 may be constructed to include a current variable type D/D 3031, a current fixed type D/D 3011, and an open circuit connection switch 3012.

In the fourth DC/DC converter group 44, the current fixed type D/D 3011 may be selected depending on a charging speed (requested power) of a charging wisher, and the charging speed (requested power) may be supplied, or the charging speed (requested power) of the charging wisher may be supplied by adjusting an output current of the current variable type D/D 3031.

The fourth DC/DC converter group 44 may be constructed to satisfy a charging speed (requested power) that is requested by a charging wisher at a relatively low cost, by using the current fixed type D/D 3011 of FIG. 12A that has a low cost and the current variable type D/D 3031 of FIG. 12C that has an advantage in that all of types of power requested by a charging wisher can be satisfied together.

The number of current variable type D/Ds 3031 and the number of current fixed type D/Ds 3011 may be different depending on the number of vehicles which may be simultaneously charged in a charging system according to the present disclosure. All of the sizes of charging speeds (requested power) of the current fixed type D/Ds 3011 may be the same, but may be different.

In a charging process of FIG. 12D, the current fixed type D/D 3011 corresponding to a charging speed (requested power) of a charging wisher in the fourth DC/DC converter group 44 may be selected, or an output current of the current variable type D/D 3031 may be varied.

Next, an optimal path may be formed from the intra-parking lot power grid 5000 to a location of the charging target vehicle 9000 may be formed. When the forming of the path is completed, the charging speed (requested power) may be supplied by making ON the open circuit connection switch 3012 of the request power manipulation unit 305.

FIG. 13A is a diagram illustrating a case in which the AC/DC converting system 2000 and the request power manipulation unit 3000 are present outside the vicinity of a parking lot according to an embodiment of the present disclosure. In this case, the outside means another separate space not an area of a corresponding parking lot. The outside may be an installation space where the AC/DC converting system 2000 and the request power manipulation unit 3000 may be separately constructed in the vicinity of the parking lot.

Furthermore, in this case, the separate space may include an area other than the area of a parking lot in which the AC/DC converting system 2000 and the request power manipulation unit 3000 are responsible for charging in the entire area of the parking lot, and may be a space separated from the parking lot.

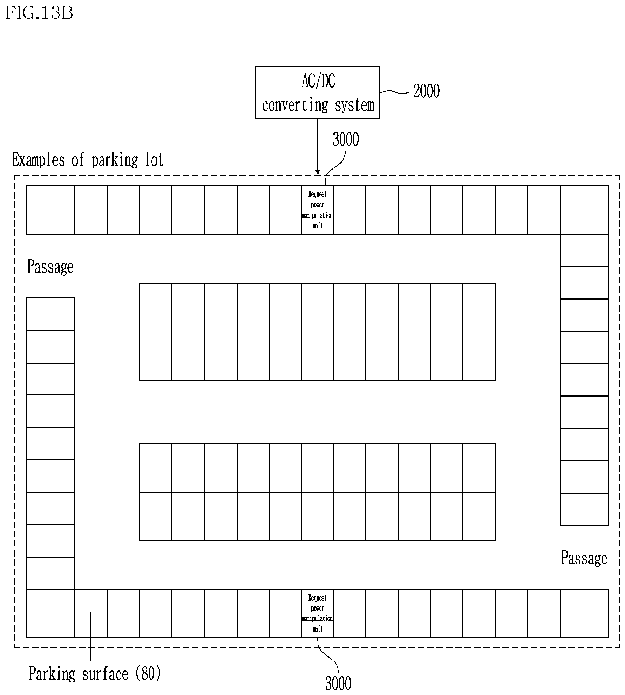

FIG. 13B is a diagram illustrating an example of a case in which the AC/DC converting system 2000 is constructed outside the vicinity of a parking lot and the request power manipulation unit 3000 is constructed within the area of a parking lot in which the request power manipulation unit 3000 is responsible for charging according to an embodiment of the present disclosure. The request power manipulation unit 3000 may be installed in a part of a parking area when the parking lot is constructed or by using a separate installation space within a parking lot, and may be installed in a space between pillars of a parking lot as in FIG. 7A.

Furthermore, in FIG. 13B, an example in which the number of request power manipulation units 3000 is two has been taken, but this is merely a construction according to an embodiment of the present disclosure, and the number of request power manipulation units may be greater or smaller than two by considering a maximum number of simultaneously chargeable vehicles.

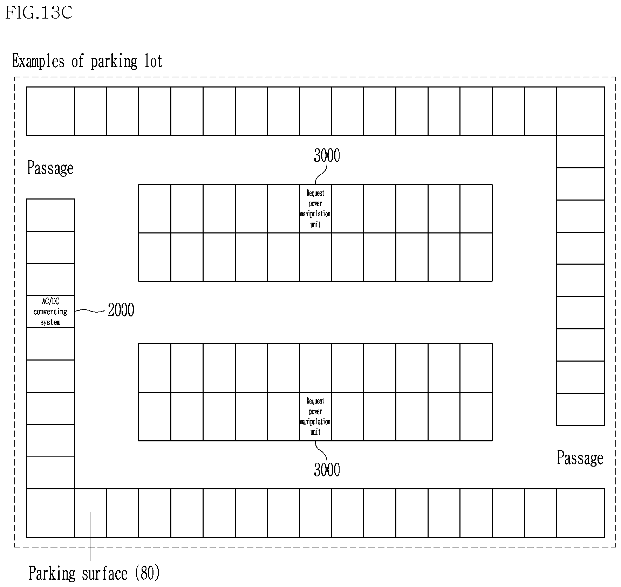

FIG. 13C is a diagram illustrating an example of a case in which the AC/DC converting system 2000 and the request power manipulation unit 3000 are constructed within the area of a parking lot in which the AC/DC converting system 2000 and the request power manipulation unit 3000 are responsible for charging according to an embodiment of the present disclosure. The AC/DC converting system 2000 and the request power manipulation unit 3000 may be installed in a part of a parking area when the parking lot is constructed or by using a separate installation space within a parking lot, and may be installed in a space between pillars of a parking lot as in FIG. 7A.

Furthermore, in FIG. 13C, each of the AC/DC converting system 2000 and the request power manipulation unit 3000 has been installed. However, if the AC/DC converting system 2000 is included in the request power manipulation unit 3000 as in FIG. 11E, the AC/DC converting system and the DC/DC converter group 3200 that have been constructed into one may be installed.

Furthermore, in FIGS. 13A, 13B, and 13C, a shape of the parking lot is merely a shape according to an embodiment of the present disclosure, and may be different depending on a shape of each parking lot. A parking lot that is newly built or a parking lot within a building may be constructed by previously designing an optimal location in order to efficiently use a charging system according to an embodiment of the present disclosure.

A charging system for an electric vehicle according to an embodiment of the present disclosure may include the request power manipulation unit 3000 in a plural number. Charging areas corresponding to the request power manipulation units 3000, respectively, may be constructed by being separated from each other.

Alternatively, a charging system for an electric vehicle according to an embodiment of the present disclosure may include the request power manipulation unit 3000 in a plural number. Some of charging areas corresponding to the plurality of request power manipulation units 3000 may be overlapped.

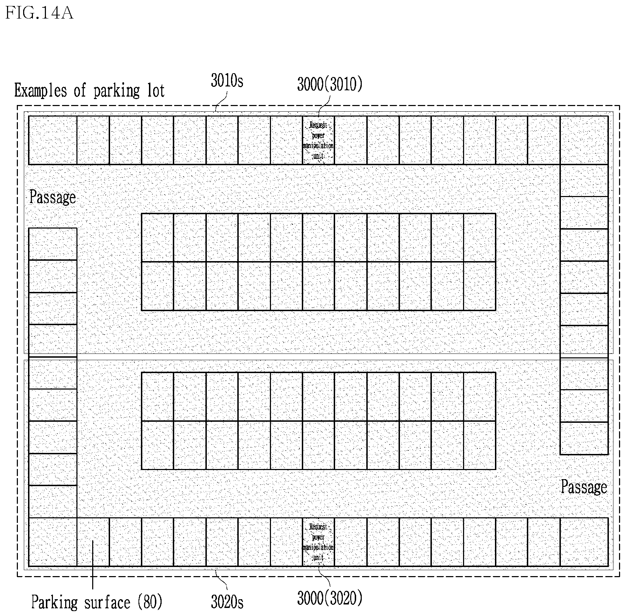

FIG. 14A is a diagram illustrating a case in which the number of request power manipulation units 3000 is two and charging areas 3010S and 3020S for which the request power manipulation units 3010 and 3020 are responsible, respectively, have been separated from each other without being overlapped according to an embodiment of the present disclosure. In FIG. 14A, a location of the request power manipulation unit 3000 is the top and bottom of the charging areas, but this is merely a construction according to an embodiment of the present disclosure. The location of the request power manipulation unit may be a space in which the request power manipulation unit may be installed, such as the left, the right, an edge, or the middle, or may be different depending on an optimal location.

Furthermore, the number of D/Ds within the request power manipulation unit 3000 may be differently constructed based on an expected number of electric vehicles compared to a total number of vehicles which may be parked in a parking lot. All of charging speeds of the D/Ds may be the same, but may be different depending on a construction of the D/Ds. For example, charging speeds of the D/Ds may be various, such as that a D/D corresponding to quick charging is 30% and a D/D capable of slow charging is 10% compared to a total number of vehicles which may be parked, in addition to the number of D/Ds.

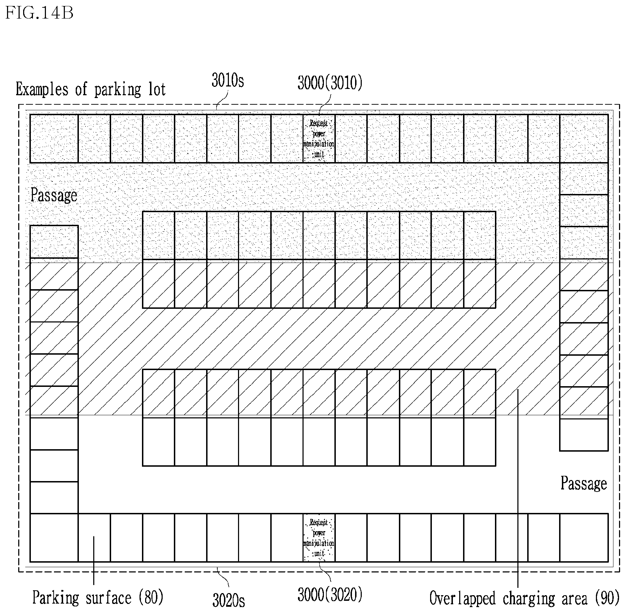

FIG. 14B is a diagram illustrating a case in which the number of request power manipulation units 3000 is two and the charging areas 3010S and 3020S for which the request power manipulation units 3010 and 3020 are responsible, respectively, are partially overlapped according to an embodiment of the present disclosure. Referring to FIG. 14B, a charging system for an electric vehicle according to an embodiment of the present disclosure and a parking lot including the charging system may include the charging area 3010S for which the first request power manipulation unit 3010 is responsible, the charging area 3020S for which the second request power manipulation unit 3020 is responsible, and an overlapped charging area 90. In FIG. 14B, a location of the request power manipulation unit 3000 is the top and bottom of the charging areas, but this is merely a construction according to an embodiment of the present disclosure. The location of the request power manipulation unit may be a space in which the request power manipulation unit may be installed, such as the left, the right, an edge, or the middle, or may be different depending on an optimal location.

Furthermore, FIG. 14B illustrates a case in which only some of the charging areas for which the request power manipulation units 3000 are responsible have been overlapped, but this is merely a construction according to an embodiment of the present disclosure. Accordingly, the request power manipulation units 3000 are separately installed according to circumstances of a parking lot, but may be responsible for the charging areas for which the request power manipulation units are responsible while sharing all of the charging areas not some of the charging areas.

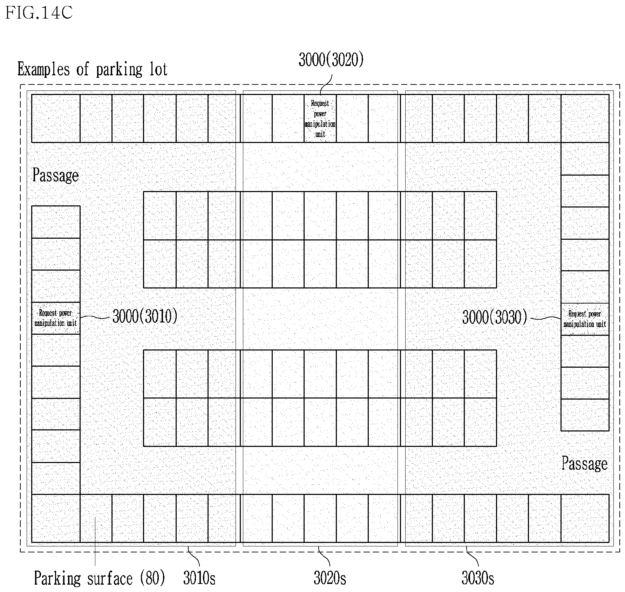

FIG. 14C is a diagram illustrating a case in which the number of request power manipulation units 3000 is three and charging areas 3010S, 3020S, and 3030S for which the request power manipulation units 3010, 3020, and 3030 are responsible, respectively, have been separated from each other without being overlapped according to an embodiment of the present disclosure. In FIG. 14C, the request power manipulation units 3000 are disposed at the top and on the left and right, but this is merely a construction according to an embodiment of the present disclosure. The location of the request power manipulation unit may be different depending on a space in which the request power manipulation unit may be installed at more various locations thereof or an optimal location.

Furthermore, voltages that are used for charging in the request power manipulation units 3000, respectively, may be the same or may be different. For example, the first request power manipulation unit 3010 may have a charging voltage of 400 V, the second request power manipulation unit 3020 may have a charging voltage of 800 V, and the third request power manipulation unit 3030 may have a charging voltage of 1000 V. This means that the request power manipulation units may have various charging voltages depending on a charging voltage of an electric vehicle, and may have charging voltages by considering a charging system according to the present disclosure when the charging system is installed.

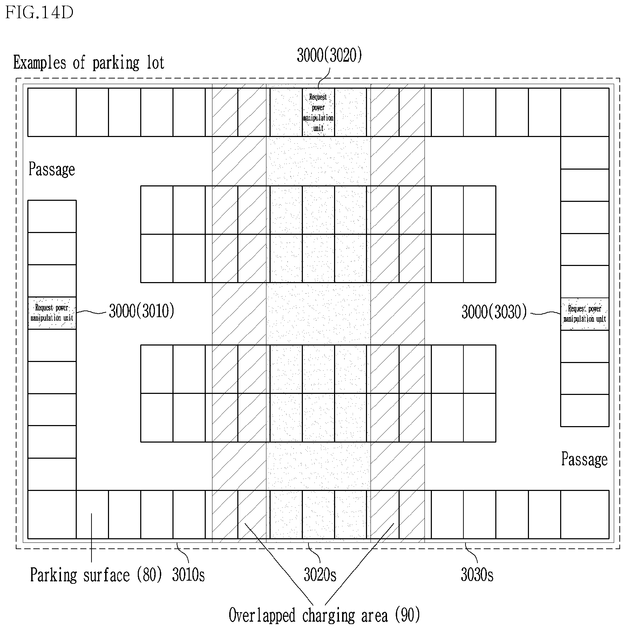

FIG. 14D is a diagram illustrating a case in which the number of request power manipulation units 3000 is three and charging areas 3010S, 3020S, and 3030S for which the request power manipulation units 3010, 3020, and 3030 are responsible, respectively, are partially overlapped according to an embodiment of the present disclosure. Referring to FIG. 14D, a charging system for an electric vehicle according to an embodiment of the present disclosure and a parking lot including the charging system may include the charging area 3010S for which the first request power manipulation unit 3010 is responsible, the charging area 3020S for which the second request power manipulation unit 3020 is responsible, the charging area 3030S for which the third request power manipulation unit 3030 is responsible, a charging area 90 for which the first request power manipulation unit 3010 and the second request power manipulation unit 3020 are responsible, and a charging area 90 for which the second request power manipulation unit 3020 and the third request power manipulation unit 3030 are responsible. In FIG. 14D, locations of the request power manipulation units 3000 are the top, the left, and the right, but this is merely a construction according to an embodiment of the present disclosure. The location of the request power manipulation unit may be different depending on a space in which the request power manipulation unit may be installed at more various locations thereof or an optimal location.

Furthermore, FIG. 14D illustrates a case in which only some of the charging areas for which the request power manipulation units 3000 are responsible are overlapped, but this is merely a construction according to an embodiment of the present disclosure. The request power manipulation units 3000 are separately installed according to circumstances of a parking lot, but may be responsible for the charging areas for which the request power manipulation units are responsible while sharing all of the charging areas not some of the charging areas.

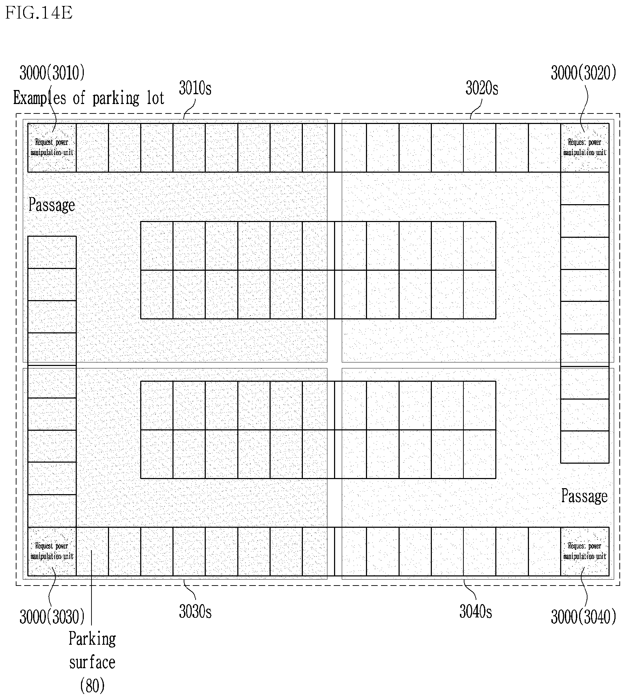

FIG. 14E is a diagram illustrating a case in which the number of request power manipulation units 3000 is four and charging areas 3010S, 3020S, 3030S, and 3040S for which the request power manipulation units 3010, 3020, 3030, and 3040 are responsible have been separated from each other without being overlapped according to an embodiment of the present disclosure. In FIG. 14E, the request power manipulation units 3000 have been installed at respective corners, but this is merely a construction according to an embodiment of the present disclosure. The location of the request power manipulation unit may be different depending on a space in which the request power manipulation unit may be installed at more various locations thereof or an optimal location.

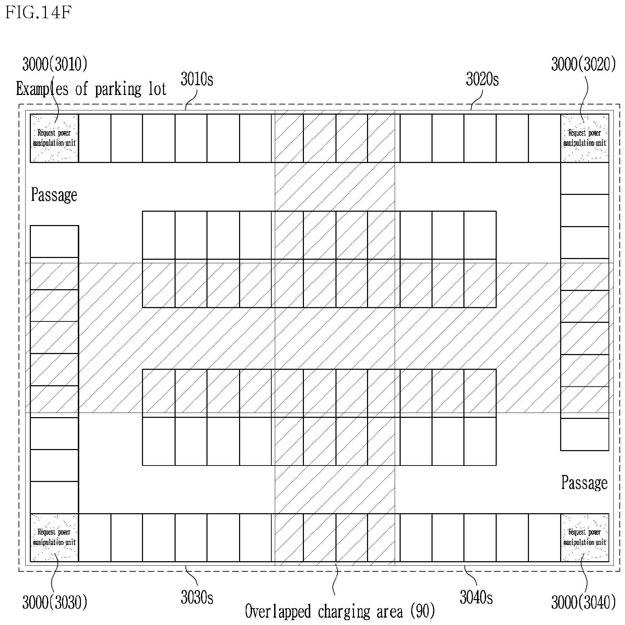

FIG. 14F is a diagram illustrating a case in which the number of request power manipulation units 3000 is four and charging areas 3010S, 3020S, 3030S, and 3040S for which the request power manipulation units 3010, 3020, 3030, and 3040 are responsible, respectively, include some overlapped area 90 according to an embodiment of the present disclosure. In FIG. 14F, locations of the request power manipulation units 3000 are the top, the left, and the right, but this is merely a construction according to an embodiment of the present disclosure. The location of the request power manipulation unit may be different depending on a space in which the request power manipulation unit may be installed at more various locations thereof or an optimal location.

In FIGS. 14A to 14F, a case in which the number of request power manipulation units 3000 is 2 to 4 has been taken as an example, but this is merely a construction according to an embodiment of the present disclosure. The number of request power manipulation units 3000 may be 1 or may be greater than 1.

Furthermore, in the case of the AC/DC converting system 2000 that is connected to the request power manipulation unit 3000, several AC/DC converting systems 2000 may be constructed as in FIG. 10A, and one AC/DC converting system 2000 may be constructed as in FIG. 10B. This may be different depending on the number of parking surfaces 80 or the amount of power that is necessary for the request power manipulation unit 3000. An optimum number of AC/DC converting systems may be calculated and installed when a charging system according to the present disclosure is installed in a parking lot.

Furthermore, in FIGS. 14B, 14D, and 14F, the overlapped charging area 90 is indicated, but is an example according to an embodiment of the present disclosure. A shape or size of the overlapped charging area 90 may be different due to various factors, such as a location of the request power manipulation unit 3000, a location at which an output line of a D/D and the intra-parking lot power grid 5000 are connected, and that not a part of the charging area, but the entire charging area is overlapped.

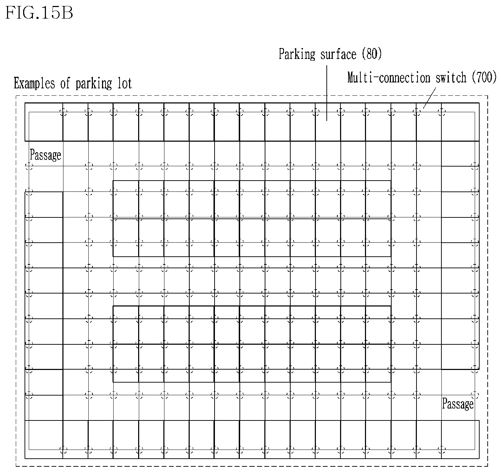

FIG. 15A is a diagram illustrating a case in which the multi-connection switch 700 is constructed only in the parking surface 80 according to an embodiment of the present disclosure. There is an advantage in that the number of multi-connection switches 700 can be reduced if there is no problem in the forming of a path from the request power manipulation unit 3000 to the parking surface 80 on which the charging target vehicle 9000 is disposed when the multi-connection switch 700 is constructed as in an embodiment exemplified in FIG. 15.

Furthermore, FIG. 15A illustrates an example of a case in which the multi-connection switches 700 are installed in all of the parking surfaces 80 and electrical wires are connected to all of the multi-connection switches 700. However, as in FIGS. 14A, 14C, and 14E, if the number of request power manipulation units 3000 is several and the request power manipulation units 3000 are independently responsible for charging areas, all of the multi-connection switches 700 may be constructed to be connected or not connected to electrical wires depending on the charging areas without being connected to the electrical wires. The number of multi-connection switches 700 needs to be equal to or greater than the number of charging adapters 5015.

FIG. 15B illustrates an example in which the multi-connection switch 700 according to an embodiment of the present disclosure has been additionally installed even in a space, such as a passage, other than the parking surface 80. If the multi-connection switch 700 is additionally constructed even in a space, such as a passage, in addition to the parking surface 80 as exemplified in FIG. 15B, there is an advantage in that various paths can be formed from the request power manipulation unit 3000 to the parking surface 80 where the charging target vehicle 9000 is disposed.

Meanwhile, a drop of a voltage that is used for charging may further occur because a cost is increased as the number of multi-connection switches 700 is increased and there is a good possibility that more multi-connection switches 700 will be used compared to FIG. 15A when a path for charging is formed.

**As** in FIG. 15A or 15B, the length of electrical wires according to the forming of a path and a drop of a voltage according to the number of multi-connection switches 700 may be corrected based on a DC voltage suitable for a charging voltage of the charging target vehicle 9000 by using methods, such as FIGS. 9A, 9B, and 9C.

FIGS. 16A to 16D are diagrams illustrating the number of selectable paths according to forms of the power grid according to an embodiment of the present disclosure. FIGS. 16A to 16D illustrate examples of triangle, quadrangle, hexagon, and hexahedron structures. The forms are merely examples according to an embodiment of the present disclosure, and the power grid may be constructed as various three-dimensional structures, such as a polygon such as a pentagon or a heptagon, and a regular tetrahedron.

As in FIGS. 16A to 16D, the number of output paths along which an electrical wire corresponding to an input path, among electrical wires connected to the multi-connection switch 700, may be selected is the same as the number of remaining electrical wires except the electrical wire corresponding to the input path. If the number of electrical wires connected to the multi-connection switches 700 is n and the number of selectable paths is x, x has a range of 1 to n-1.

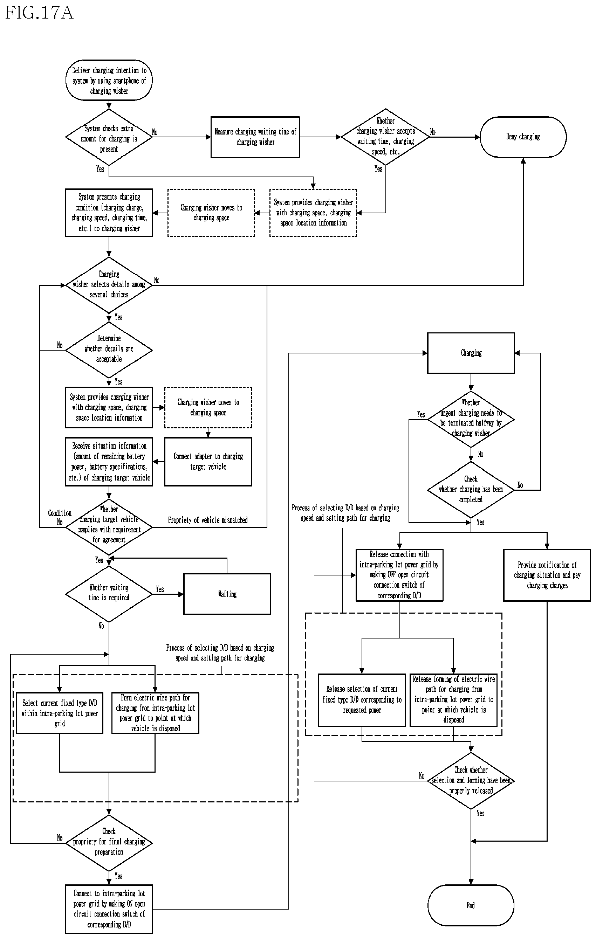

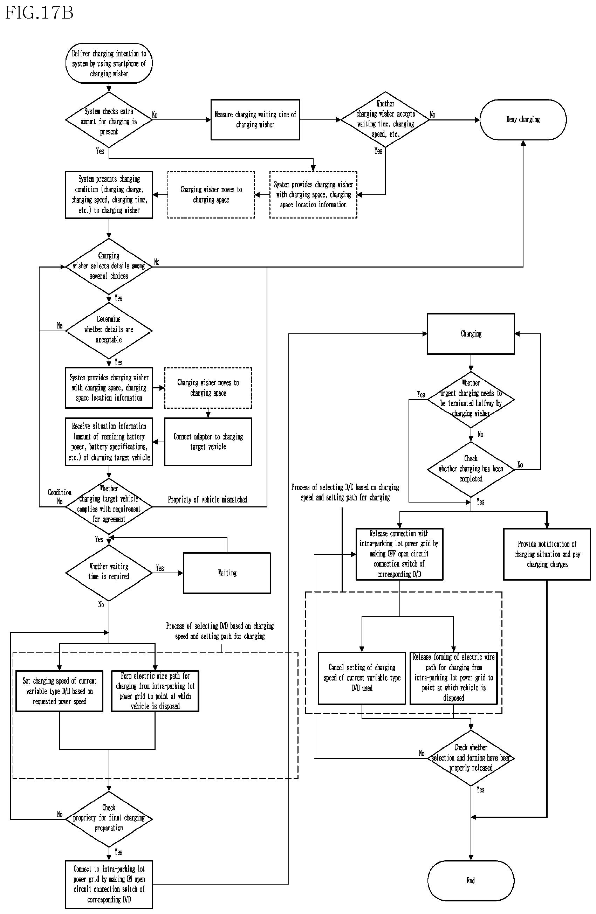

FIGS. 17A and 17B illustrate flowcharts of a method of charging an electric vehicle according to an embodiment of the present disclosure. In a charging system for an electric vehicle, which is exemplified in FIGS. 17A, 17B, etc., charging is identically performed in most of processes, but a process of selecting a D/D based on a charging speed and a process of setting a path for charging and a process of releasing the selection of a D/D based on a charging speed and a process of releasing the setting of a path for charging may be different.

FIG. 17A is a diagram illustrating a flowchart a of the present disclosure when a DC/DC converter group has the construction a of the DC/DC converter in FIG. 12A, including the first DC/DC converter group 41 consisting of only the current fixed type D/D 3011.

Furthermore, in the construction b of the DC/DC converter in FIG. 12B including the second DC/DC converter group 42 in which the current fixed type D/D 3022 for a parallel connection is additionally constructed in the first DC/DC converter group 41 of FIG. 12A, all of other processes may be the same as the processes of FIG. 17A except that a process of combining the current fixed type D/D 3011 and the current fixed type D/D 3022 for a parallel connection is added.

FIG. 17B is a diagram illustrating a flowchart b of the present disclosure when a DC/DC converter group has the construction c of the DC/DC converter in FIG. 12C, including the third DC/DC converter group 43 consisting of only the current variable type D/D 3031. A charging speed (requested power) may be supplied based on a charging speed (requested power) set by a charging wisher by varying the charging speed (requested power) within a maximum output current.

Furthermore, in the construction d of the DC/DC converter in FIG. 12D, including the fourth DC/DC converter group 44 in which the current fixed type D/D 3011 of the first DC/DC converter group 41 in FIG. 12A and the current variable type D/D 3031 of the third DC/DC converter group 4040 in FIG. 12C have been constructed by being mixed at a proper ratio, all of other processes may be the same as the processes of FIG. 17B except that a process of selecting the current fixed type D/D 3011 corresponding to a charging speed (requested power) of a charging wisher is merely added.

In a step of delivering charging intention to the system by using a smartphone of a charging wisher, the first charging wisher delivers the charging intention, including the type of vehicle, a charging speed, a charging time, etc., to the system by using the smartphone. The smartphone has been taken as an example, but may be a portable terminal, kiosk or a computer installed in a parking lot, etc.

Furthermore, the charging intention of the charging wisher may be possible over a phone. The charging intention of the charging wisher may be simply delivered through a password, etc. by using a portal site, a telephone, etc. based on already registered information.

Furthermore, the charging intention of the charging wisher may be delivered by using a method of specifying only a charging finishing time and entrusting a charging system to properly perform the remaining charging method. For example, in the case of an apartment parking lot, if an already registered resident has indicated out-vehicle at 8 a.m. the next morning while parking his or her vehicle at 7 p.m. last night and wanted the charging of the vehicle, a method completing, by the system of the present disclosure, proper charging until 7:30 a.m. next day at a relatively low speed that is beneficial to an electric vehicle battery by using low power charges at night may be considered.

In this case, furthermore, although the vehicle is charged at a low speed, if many urgent charging wishers appear, the system may temporarily stop the charging of a corresponding charging target vehicle 9000, may accommodate the requirement of the charging wishers, and may charge the corresponding charging target vehicle 9000 by connecting the corresponding charging target vehicle 9000 to the system.

In a step of checking, by the system, whether an extra amount for charging is possible, the system checks whether charging power has remained by checking a total amount of power being used. If an extra amount for charging is present, the system performs a step of providing a charging wisher with a charging space and parking space location information. If an extra amount for charging is not present, the system may measure a charging waiting time of the charging wisher.

In the step of measuring the charging waiting time of the charging wisher, the system checks charging completion times of vehicles that are now being charged, measures the time during which the charging wisher has to wait for charging, and provides the charging wisher with information, such as a waiting time and a charging speed.

In a step of determining whether the charging wisher accepts the waiting time, the charging speed, etc., when the charging wisher accepts the waiting time, the charging speed, etc., the system provides the charging wisher with a charging space and parking space location information. When the charging wisher does not accept the waiting time, the charging speed, etc., the system terminates the process by recognizing the denial of the waiting time, the charging speed, etc., as charging denial.

In the step of providing, by the system, the charging wisher with the charging space and the parking space location information, the system provides the charging wisher with the information, and may wait until a movement of the charging wisher to a charging space is completed. The step of providing, by the system, the charging wisher with the charging space and the parking space location information and the step of the charging wisher moving to the charging space may be omitted.

In the step of presenting, by the system, the charging wisher with charging conditions (charging charges, the charging speed, the charging time, etc.), the system may present charging conditions, such as charging charges, a charging speed (requested power) which may be provided, etc every time zone in which charging is possible. The conditions are merely an example according to an embodiment of the present disclosure, and may be different depending on information necessary for charging.

A step of selecting, by the charging wisher, details among several choices is a step of the charging wisher selecting the details in detail when the conditions are presented to the charging wisher. When the charging wisher completes the selection of details, the system performs a step of finally determining whether to accept the details. If the charging wisher denies the selection, the system may terminate the process by recognizing the denial of the selection as charging denial.

The step of determining whether to accept the details is a step of determining whether to finally accept the conditions which have been selected by the charging wisher in the step of selecting, by the charging wisher, the details among the several choices. If the charging wisher accepts the details, the system performs a next step. If the charging wisher denies the details, however, the step of selecting, by the charging wisher, the details among the several choices may be performed, which is a previous step.

In the step of providing, by the system, the charging wisher with the charging space and the parking space location information, the system may provide the charging wisher with the information, and may wait until a movement of the charging wisher to a charging space is completed. This step may be omitted if the system has provided the charging wisher with the charging space and the parking space location information and has performed the step of the charging wisher moving to the charging space, prior to the step of presenting, by the system, the charging conditions (the charging charges, the charging speed, the charging time, etc.) to the charging wisher.

A step of connecting an adapter to the charging target vehicle is a step of connecting the charging adapter 5015 to the charging target vehicle 9000. When the connection of the charging adapter 5015 to the charging target vehicle is completed, a step of receiving situation information (the amount of remaining battery power, battery specifications, etc.) of the charging target vehicle may be performed.

In receiving the situation information (the amount of remaining battery power, battery specifications, etc.) of the charging target vehicle, information on the amount of battery power that currently remains, information of battery specifications necessary for battery charging, vehicle information of the charging target vehicle 9000, etc. may be received from the charging target vehicle 9000 connected to the charging adapter 5015.

A step of determining whether the charging target vehicle 9000 complies with requirements for an agreement is a step of determining whether information selected in the step of selecting, by the charging wisher, the details among the several choices and the charging target vehicle 9000 comply with the requirements for the agreement. The time that is taken for charging to be completed based on the amount of remaining battery power of the charging target vehicle 9000 may be additionally indicated. When the charging target vehicle 9000 complies with the requirements for the agreement, a step of determining whether a waiting time is required may be performed.

However, these processes, etc. may be simply performed through the recognition of an RFID or a QR code on which information has been recorded, etc. based on already registered information.

In the step of determining whether the charging target vehicle 9000 complies with the requirements for the agreement, when the charging target vehicle 9000 does not comply with the requirements for the agreement, the step of selecting, by the charging wisher, the details among the several choices is performed. If the charging target vehicle 9000 is a vehicle which cannot be charged in the charging system according to the present disclosure, that is, the mismatch of vehicle suitability, the system may deny charging and terminate the process.

In the step of determining whether the waiting time is required, waiting if waiting up to a charging start time is required and the step of determining whether the waiting time is required are repeatedly performed. When the charging start time is reached, the step of selecting the D/D based on the charging speed and the step of setting the path for charging may be performed.

The process of selecting the D/D based on the charging speed and the step of setting the path for charging may be slightly different in FIGS. 17A and 17B.

In FIG. 17A, in the process of selecting the D/D based on the charging speed and the step of setting the path for charging, a step of selecting a current fixed type D/D corresponding to requested power and a step of forming an electrical wire path for charging from an intra-parking lot power grid to a point at which the vehicle is disposed may be simultaneously performed.

In the step of selecting the current fixed type D/D, the current fixed type D/D 3011 may be selected based on a charging speed (requested power) selected by the charging wisher. In the step of forming the electrical wire path for charging from the intra-parking lot power grid to the point at which the vehicle is disposed, the path for charging may be formed by controlling the multi-connection switch 700 of the intra-parking lot power grid 5000.

Furthermore, in the construction including the second DC/DC converter group 42 as in FIG. 12B, in the process of selecting the D/D based on the charging speed and setting the path for charging, a step of forming a proper charging speed line by combining the current fixed type D/D 3011 and the current fixed type D/D 3022 for a parallel connection and the step of forming the electrical wire path for charging from the intra-parking lot power grid to the point at which the vehicle is disposed may be simultaneously performed.

In the step of forming the proper charging speed line, the current fixed type D/D 3011 may be selected based on the charging speed (requested power) selected by the charging wisher, or the step of forming the proper charging speed line is a step of the current fixed type D/D 3011 and the current fixed type D/D 3022 for a parallel connection forming a proper charging speed line through control of the multi-connection switch 700 in FIG. 12B.

In the step of forming the electrical wire path for charging from the intra-parking lot power grid to the point at which the vehicle is disposed, the path for charging may be formed by controlling the multi-connection switch 700 of the intra-parking lot power grid 5000 as in FIG. 17A.

In the process of selecting the D/D based on the charging speed and setting the path for charging in FIG. 17B, a step of selecting a current variable type D/D corresponding to the requested power and the step of forming the electrical wire path for charging from the intra-parking lot power grid to the point at which the vehicle is disposed may be simultaneously performed.

In the step of selecting the current variable type D/D, the charging speed (requested power) may be varied within a maximum output current of the current variable type D/D based on the charging speed (requested power) selected by the charging wisher. In the step of forming the electrical wire path for charging from the intra-parking lot power grid to the point at which the vehicle is disposed, the path for charging may be formed by controlling the multi-connection switch 700 of the intra-parking lot power grid 5000.

Furthermore, in the construction including the fourth DC/DC converter group 44 as in FIG. 12D, in the process of selecting the D/D based on the charging speed and setting the path for charging, a step of determining whether the requested power of the charging wisher can be supplied to the current fixed type D/D and the step of forming the electrical wire path for charging from the intra-parking lot power grid to the point at which the vehicle is disposed may be simultaneously performed.

If the requested power of the charging wisher can be supplied in the step of determining whether the requested power of the charging wisher can be supplied to the current fixed type D/D, a step of selecting the current fixed type D/D corresponding to the requested power may be performed. If the requested power of the charging wisher cannot be supplied, a step of setting a charging speed in the current variable type D/D may be performed.

In the step of selecting the current fixed type D/D, the current fixed type D/D 3011 may be selected based on the charging speed (requested power) selected by the charging wisher. In the step of setting the charging speed in the current variable type D/D, the charging speed (requested power) may be varied within a maximum output current of the current variable type D/D 3031 based on the charging speed (requested power) selected by the charging wisher.

In the step of forming the electrical wire path for charging from the intra-parking lot power grid to the point at which the vehicle is disposed, the path for charging may be formed by controlling the multi-connection switch 700 of the intra-parking lot power grid 5000.

When the process of selecting the D/D based on the charging speed and setting the path for charging in FIGS. 17A and 17B is terminated, a step of confirming the propriety of the final charging preparation may be performed.

In the step of confirming the propriety of the final charging preparation, whether a D/D that has been selected, varied, or combined in the previous step is a D/D corresponding to the charging speed (requested power) requested by the charging wisher may be checked, and whether the forming of the path for charging in the intra-parking lot power grid 5000 has been completed may be checked.

If any one of whether the D/D that has been selected, varied, or combined in the previous step is a D/D corresponding to the charging speed (requested power) requested by the charging wisher and whether the forming of the path for charging in the intra-parking lot power grid 5000 has been completed has not been completed in the step of confirming the propriety of the final charging preparation, the process of selecting the D/D based on the charging speed and setting the path for charging may be performed. If whether the D/D that has been selected, varied, or combined in the previous step is a D/D corresponding to the charging speed (requested power) requested by the charging wisher and whether the forming of the path for charging in the intra-parking lot power grid 5000 has been completed have been completed, a step of connecting to an intra-parking lot power grid through the open circuit connection switch ON of a corresponding D/D may be performed.

In the step of connecting to the intra-parking lot power grid through the open circuit connection switch ON of the corresponding D/D, the charging speed (requested power) may be supplied by connecting to the intra-parking lot power grid 5000 by making ON the open circuit connection switch 3012 of the request power manipulation unit 3000.

In the charging step, the charging is performed. In a step of determining whether the urgent termination of charging is required halfway by the charging wisher, etc., whether the charging needs to be terminated is checked. If the charging needs to be terminated, steps subsequent to the step of checking whether the charging has been completed may be performed. If the charging does not need to be terminated, a step of checking whether the charging has been completed may be performed.

In the step of checking whether the charging has been completed, if the charging has not been completed, the process may proceed to the charging step. If the charging has been completed, a step of releasing the connection with the intra-parking lot power grid through the open circuit connection switch OFF of a corresponding D/D, steps, such as providing notification of a charging situation and paying charging charges payment, etc. may be performed.

In the step of releasing the connection with the intra-parking lot power grid through the open circuit connection switch OFF of the corresponding D/D, the supply of the charging speed (requested power) may be blocked by releasing the connection with the intra-parking lot power grid 5000 by making OFF the open circuit connection switch 3012 of the request power manipulation unit 3000.

When the step of releasing the connection with the intra-parking lot power grid through the open circuit connection switch OFF of the corresponding D/D is completed, a step of releasing the selection of the D/D based on the charging speed and releasing the setting of the path for charging may be performed.

In FIG. 17A, in the process of releasing the selection of the D/D based on the charging speed and releasing the setting of the path for charging, a step of releasing the selection of the current fixed type D/D corresponding to the requested power and the step of releasing the forming of the electrical wire path for charging from the intra-parking lot power grid to the point at which the vehicle is disposed may be simultaneously performed.

The step of releasing the selection of the current fixed type D/D corresponding to the requested power is a step of releasing the selection of the current fixed type D/D 3011 that is used for corresponding charging. The step of releasing the forming of the electrical wire path for charging from the intra-parking lot power grid to the point at which the vehicle includes a step of releasing the path formed for charging by controlling the multi-connection switch 700 of the intra-parking lot power grid 5000.

Furthermore, in the construction including the second DC/DC converter group 42 as in FIG. 12B, the process of releasing the selection of the D/D based on the charging speed and releasing the setting of the path for charging, a step of releasing the forming of the proper charging speed line by releasing the combination of the current fixed type D/D 3011 and the current fixed type D/D 3022 for a parallel connection and a step of releasing the forming of the electrical wire path for charging from the intra-parking lot power grid to the point at which the vehicle is disposed may be simultaneously performed.

The step of releasing the forming of the proper charging speed line by releasing the combination of the current fixed type D/D 3011 and the current fixed type D/D 3022 for a parallel connection may include a step of releasing the selection of the current fixed type D/D 3011 or the current fixed type D/D 3022 for a parallel connection, which is used for corresponding charging, and releasing the forming of the proper charging speed line through control of the multi-connection switch 700.

The step of releasing the forming of the electrical wire path for charging from the intra-parking lot power grid to the point at which the vehicle is disposed may include a step of releasing the path that has been formed for charging by controlling the multi-connection switch 700 of the intra-parking lot power grid 5000.

In FIG. 17B, in the process of releasing the selection of the D/D based on the charging speed and releasing the setting of the path for charging, a step of cancelling the setting of the charging speed of a current variable type D/D used and the step of releasing the forming of the electrical wire path for charging from the intra-parking lot power grid to the point at which the vehicle is disposed may be simultaneously performed.

The step of cancelling the setting of the charging speed of the current variable type D/D used may include a step of releasing the charging speed of the current variable type D/D 3031 that has been used for corresponding charging. The step of releasing the forming of the electrical wire path for charging from the intra-parking lot power grid to the point at which the vehicle is disposed may include a step of releasing the path that has been formed for charging by controlling the multi-connection switch 700 of the intra-parking lot power grid 5000.

In the construction including the fourth DC/DC converter group 44 as in FIG. 12, in the process of releasing the selection of the D/D based on the charging speed and releasing the setting of the path for charging, the step of releasing the setting of the charging speed of the current variable type D/D or the selection of the current fixed type D/D and the step of forming the charging electrical wire for the path from the intra-parking lot power grid to the point at which the vehicle is disposed may be simultaneously performed.

The step of releasing the charging speed of the current variable type D/D or the selection of the current fixed type D/D may include a step of releasing the setting of the charging speed of the current variable type D/D 3031 that has been used for corresponding charging or releasing the selection of the current fixed type D/D 3011 that has been used for the corresponding charging.

The step of releasing the forming of the electrical wire path for charging from the intra-parking lot power grid to the point at which the vehicle is disposed may include a step of releasing the path that has been formed for charging by controlling the multi-connection switch 700 of the intra-parking lot power grid 5000.

When the process of releasing the selection of the D/D based on the charging speed and releasing the setting of the path for charging is terminated, a step of checking whether the selection of the D/D based on the charging speed and the setting of the path for charging have been properly released may be performed. If the selection of the D/D based on the charging speed and the setting of the path for charging have been properly released, the process may be terminated. If the selection of the D/D based on the charging speed and the setting of the path for charging have been properly released, however, the step of releasing the connection with the intra-parking lot power grid through the open circuit connection switch OFF of the corresponding D/D may be performed again.

In steps, such as the notification of the charging situation and the payment of charging charges, information indicating that charging has been completed or terminated and information, such as the amount of power used for charging, may be delivered to the control unit 400. The payment of charging charges received from the control unit, etc. is performed. The execution process is merely an example according to an embodiment of the present disclosure, and detailed contents may be different depending on a process that is performed after charging is completed.

## Claims

1. A charging location-selective charging system for an electric vehicle, comprising:
an AC/DC converting system configured to convert AC power into DC power;
a request power manipulation unit comprising an open circuit connection switch configured to supply or block a DC current to be stored;
charging adapters installed in at least some of parking spaces of a parking lot;
a power grid configured to connect a DC/DC converter and the charging adapters between the DC/DC converter and the charging adapters; and
a multi-connection switch connected to three or more electric wires of the power grid and configured to selectively form a connection path by connecting some electric wires of the three or more electric wires,
wherein the AC/DC converting system, the power grid, and a charging adapter connected to an electric vehicle, among the charging adapters, are connected to the selectively formed connection path according to an operation of the multi-connection switch.

2. The multi-connection switch of claim 1, further comprising the DC/DC converter connected to an output stage of the AC/DC converting system,
wherein a request power manipulation unit comprising the open circuit connection switch is connected to an output stage of each DC/DC converter, and
the DC/DC converter, the power grid, and a charging adapter connected to the electric vehicle, among the charging adapters, are connected to the selectively formed connection path according to an operation of the multi-connection switch.

3. The charging location-selective charging system of any one of claims 1 and 2, wherein the number of charging adapters is greater than the number of AC/DC converters or DC/DC converters.

4. The charging location-selective charging system of any one of claims 1 and 2, wherein the request power manipulation unit is separately provided in each AC/DC converting system.

5. The charging location-selective charging system of any one of claims 1 and 2, wherein:
the request power manipulation unit is included in a plural number, and
the plurality of request power manipulation units is capable of mutually delivering power.

6. The charging location-selective charging system of any one of claims 1 and 2, wherein:
the request power manipulation unit is included in a plural number, and
charging areas corresponding to the request power manipulation units, respectively, are separated from each other.

7. The charging location-selective charging system of any one of claims 1 and 2, wherein:
the request power manipulation unit is included in a plural number, and
some of charging areas corresponding to the plurality of request power manipulation units are overlapped.

8. The charging location-selective charging system of any one of claims 1 and 2, wherein:
multiple edges capable of forming contacts to which three or more electric wires are selectively connected are formed in the power grid, and
the multi-connection switch is disposed in a selected edge among the edges.

9. The charging location-selective charging system of any one of claims 1 and 2, wherein a form of the power grid is a polygon, a polyhedron, or a form in which a complex thereof is connected.

10. The charging location-selective charging system of any one of claims 1 and 2, further comprising a main control apparatus,
wherein the main control apparatus may include one or more functions, among a permitted electricity quantity management apparatus, AC/DC converting system management, current fixed type or variable type DC/DC converter management, and charging electrical wire connection management functions comprising intra-parking lot power grid management.

11. The charging location-selective charging system of any one of claims 1 and 2, wherein the permitted electricity quantity management apparatus monitors an AC voltage and AC current in a power input line of the AC/DC converting system, and monitors a DC voltage of a charging adapter that is connected to the electric vehicle.

12. The charging location-selective charging system of any one of claims 1 and 2, wherein the charging adapters are detachable from a socket of the power grid.

13. The charging location-selective charging system of any one of claims 1 and 2, further comprising a main control apparatus comprising a billing system, a member information management system, and charging target vehicle charging and information management functions.

14. The charging location-selective charging system of any one of claims 1 and 2, wherein the number of DC/DC converters corresponds to a maximum number of simultaneously chargeable electric vehicles.

15. The charging location-selective charging system of any one of claims 1 and 2, wherein each of the charging adapters is disposed between two multi-connection switches.

16. The charging location-selective charging system of claim 15, wherein a plurality of charging adapters is disposed between two multi-connection switches.

17. A charging location-selective electric vehicle charging method, comprising:
connecting an electric vehicle to any one charging adapter among charging adapters installed in all of parking spaces;
determining, by a charging location-selective charging system for an electric vehicle, a DC/DC converter of corresponding charging power;
forming a charging electrical wire of a power grid up to an electrical wire that provides corresponding requested power of a corresponding DC/DC converter and a corresponding charging adapter;
connecting a corresponding open circuit connection switch of the corresponding DC/DC converter;
charging the corresponding electric vehicle;
terminating the charging of the corresponding electric vehicle; and
disconnecting the corresponding open circuit connection switch of the corresponding DC/DC converter,
wherein a multi-connection switch connected to three or more electric wires of the power grid and capable of selectively forming a connection path by connecting some electric wires of the three or more electric wires is installed in the power grid, and
the DC/DC converter, the power grid, and a charging adapter connected to the electric vehicle, among the charging adapters, are connected to the selectively formed connection path according to an operation of the multi-connection switch.

18. The charging location-selective electric vehicle charging method of claim 17, wherein the number of charging adapters is greater than the number of DC/DC converters.

19. The charging location-selective electric vehicle charging method of claim 17, further comprising releasing a charging electrical wire of the power grid up to an electrical wire that provides corresponding requested power of a corresponding DC/DC converter and a corresponding charging adapter.
